# EUROPEAN PATENT APPLICATION

(11) **EP 1 235 416 A1**
(43) Date of publication of application: **28.08.2002**
(21) Application number: 01930121.7
(22) Date of filing: 15.05.2001
(51) Int. Cl.: H04M 11/00

(54) **INTERNET TELEPHONE NETWORK SYSTEM, NETWORK ACCESS METHOD AND TALKING DEVICE ADAPTER**

(30) Priority: 26.10.2000 JP 2000326771
(71) Applicant: MITSUBISHI DENKI KABUSHIKI KAISHA, Tokyo 100-8310 (JP)
(72) Inventor: MIYAUCHI, Nobuhito c/o Mitsubishi Denki K. K., Chiyoda-ku, Tokyo 100-8310 (JP); NAITO, Akihiko c/o Mitsubishi Denki K. K., Chiyoda-ku, Tokyo 100-8310 (JP)
(74) Representative: Pfenning, Meinig & Partner GbR
(86) International application number: JP0104003
(87) International publication number: WO02035816

(57) **Abstract**

The internet telephone adapter connected to the conventional telephone set has a problem of not being able to make a normal telephone call by switching to the PSTN line when the internet telephone cannot be used. As for the telephone equipment adapter connected to both the PSTN line and the IP network, the PSTN_line_signal_transmitting/receiving_unit 1100 inputs a telephone number and a message information from the telephone set 10, then the designation identifying unit 200 obtains an IP address by mapping the telephone number, and generates a route selecting information, and hands over the route selecting information to the line_connection_switching_unit 100. Based on the route selecting information, the line_connection_switching_unit 100 selects one of a route PSTN line 13 and a route from the IP_network_communication_processing_unit 5000 via the IP network 14, and transmits the message information to the telephone set 20.

## Description

### Technical Field

The present invention relates to an internet telephone network system. The internet telephone network system carries out communication between the communication devices such as telephone sets. Each telephone set is connected to a telephone equipment adapter. The telephone equipment adapter is connected to the IP network and the PSTN (public switched telephone network) line. The internet telephone network system of the present invention allows the telephone sets to communicate to one another via the IP network or the PSTN line. In addition to that, the present invention relates to an internet telephone network system that carries out communication between the telephone sets protected by the firewall. The internet telephone network system of the present invention allows the telephone sets to communicate to one another beyond the firewall by setting a relay server in an environment not protected by the firewall. The relay server mediates communication between the telephone sets.

### Background Art

The internet telephone is being used nowadays instead of the conventional telephone that utilizes the PSTN line. The internet telephone works by transmitting and receiving voice data as internet protocol (hereinafter abbreviated to as IP) packet on the internet or an intranet. This technique is known as Voice over Internet Protocol (hereinafter abbreviated to as VoIP).

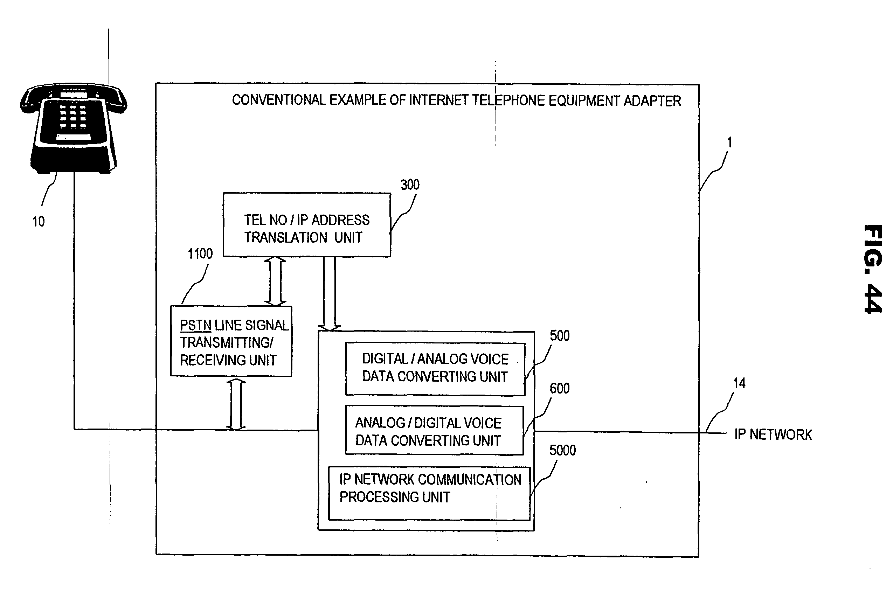

A gateway device placed in between the telephone set and the route on the network is generally adapted as a device to implement this internet telephone. Refer to "Nikkei Communication", the 1999/02/01 issue, and pages 126-133 for the information related to gateway devices. There are a wide variety of gateway devices including a large-scale gateway device that supports a lot of telephone lines, and a small-scale gateway device such as a simple telephone adapter for connecting the conventional telephone set to the network. The drawing of Fig. 44 shows an example of the conventional internet telephone adapter. For "VolaLink-TA" of NTT Corp., refer to http://vocalink.ssi.isp.ntt.co.jp/. For "Solphone" of Soliton Systems Corp., refer to http://www.soliton.co.jp/ and the brochure on the Solphone product. The internet telephone adapter comprises the following units: a digital_voice_data/analog_voice_data_converting_unit 500; a digital_voice_data/analog_voice_data_converting_unit 600; an IP_network_communication_processing_unit 5000; a telephone_number/IP_address_translation_unit 300; and a PSTN_line_signal_transmitting/receiving_unit 1100. One end of the internet telephone adapter is connected to a telephone set 10 and the other end is connected to the IP network.

Now, the operation is described.

Voice data spoken by the user are transmitted from the telephone set 10 to the telephone equipment adapter as analog signals. The digital_voice_data/analog_voice_data_converting_unit 600 converts these analog signals to the digital signals. The digital signals are converted to the coded voice data by the IP_network_communication_processing_unit 5000. The IP_network_communication_processing_unit 5000 processes the coded voice data as voice data packet. The voice data packet is transmitted to the IP network. The voice of talking user is transmitted to the other telephone set accordingly.

On the other hand, the voice data spoken by the talking user is being transmitted from the IP network as a voice data packet. The IP network communication processing unit 5000 receives the voice packet data, analyses it, extracts the voice code portions from it, and decodes them to the voice data. Further, the digital_voice_data/analog_voice_data_converting_unit 500 converts the digital signal to an analog signal. The analog signal is transmitted to the user's telephone set 10. The voice of talking user is heard at the telephone set 10 accordingly.

Also, the telephone set 10 inputs the telephone number of the call destination telephone set. The inputted telephone number is converted to IP address. This is how the call destination telephone set is identified on the IP network. For instance, an information obtained by mapping of the telephone number and the IP address is previously stored in the telephone_number/IP_address_translation_unit 300. The PSTN_line_signal_transmitting/receiving_unit 1100 receives the telephone number inputted from the telephone set. The telephone_number/IP_address_translation_unit 300 obtains an IP address based on the inputted telephone number by mapping. Accordingly, the communication destination telephone adapter is directly specified and accessed on the IP network.

The telephone set is directly connected to the PSTN line. The telephone set can be used in the usual manner. However, the telephone equipment adapter is connected to the IP network, and it is not connected to the PSTN line. This is the reason why the internet telephone cannot be used while the telephone set is connected to the telephone equipment adapter. To name the problem No. 1 of the conventional internet telephone adapter, while the telephone set is connected to the telephone equipment adapter, the user cannot make a telephone call via the PSTN line even by switching the connection from the IP network to the PSTN line.

The preferred embodiment of the present invention aims to make a telephone call by user either via the IP network side or via the PSTN line side while the signal line of the telephone set remains connected to the telephone equipment adapter.

To name the problem No. 2 of the conventional internet telephone adapter, the IP address of communication destination telephone adapter must be registered beforehand in order to make a call using the internet telephone via the IP network. This manual inputting process done by the user is time-consuming.

The preferred embodiment of the present invention aims to discard such manual process of looking up the IP address of destination telephone equipment adapter and setting it to the telephone_number/IP_address_translation_unit of the telephone equipment adapter.

To name the problem No. 3 of the conventional internet telephone adapter, a tele-conference that can verify and manage the participants is not possible via the IP network. Incidentally, the participants of the tele-conference must involve more than three individuals each carrying a telephone set and a telephone equipment adapter that is connected to it.

The preferred embodiment of the present invention aims to perform the tele-conference via the IP network, among more than three individuals each carrying a telephone set and a telephone equipment adapter connected to it, where the participants of tele-conference is verified and managed.

To name the problem No. 4 of the conventional internet telephone adapter, the requirement for an additional I/O device has inevitably increased the implementation cost of the internet telephone adapter. The additional I/O device specializes in the setup of configuration data for use in the maintenance operation, which needs to be incorporated to the adapter.

The present invention aims to reduce the cost incurred in attaching the I/O device specialized in setting up the configuration data. The I/O device is used for the maintenance operation. The configuration data is set from the general-purpose personal computer and existing telephone set connected to the telephone equipment adapter.

To name the problem No. 5 of the conventional internet telephone adapter, it is difficult to secure the real-time property of the voice data communication processing.

The preferred embodiment of the present invention aims to improve on the real-time property of the voice data communication processing.

To name the problem No. 6 of the conventional internet telephone adapter, the arbitrary UDP port cannot be used in the voice data communication processing via the firewall.

The preferred embodiment of the present invention aims to carry out the voice data communication processing beyond the firewall by specifying several specialized UDP ports beforehand. The selected UDP port is used for the communication processing.

The preferred embodiment of the present invention aims to carry out the voice data communication processing beyond the firewall by scanning the UDP port of the communication destination telephone equipment adapter and finding the usable UDP port.

The preferred embodiment of the present invention aims to carry out the voice data communication processing beyond the firewall by scanning the HTTP port of the communication destination telephone equipment adapter and finding the usable HTTP port.

To name the problem No. 7 of the conventional internet telephone adapter, inclusion of various types of protocol headers in the voice data packets tends to cause an increase in the amount of network traffic.

The preferred embodiment of the present invention aims to decrease in the amount of network traffic by using possibly the smaller various types of protocol headers in the voice data packets.

To name the problem No. 8 of the conventional internet telephone adapter, the stable communication quality cannot be maintained when the IP network traffic condition is unstable.

The preferred embodiment of the present invention aims to carry out the voice data packet transmission processing by responding to a monitored network traffic condition and by referring to a past record of the averaged network traffic condition.

To name the problem No. 9 of the conventional internet telephone adapter, the voice data cannot pass through the firewall when it is situated in between the adapter residing network and the outside network. The setup of firewall needs be modified to allow the voice data to pass through it. However, most firewall does not allow the request from the user to modify its setup because the firewall possesses its own management measures.

The internet telephone network system of the present invention attempts to solve these problems. The internet telephone can be used without having to modify the setup of the firewall by using HTTP port. The HTTP port is most commonly being used for the data transmission and reception, even if the firewall is situated in between the adapter residing network and the outside network.

To name the problem No. 10 of the conventional internet telephone adapter, the telephone call cannot be made by the telephone set while connected to the telephone adapter via the PSTN line. This is because the telephone call cannot be made via the communication_device_managing_unit such as PBX and button telephone set. The same can be said when the user is using internet telephone via the IP network or not using the internet telephone via the IP network. The conventional telephone call from the telephone set can be made by directly connecting to the PSTN line via the communication_device_managing_unit such as PBX and button-telephone set

The preferred embodiment of the present invention aims to make telephone call via the IP network or via the PSTN line while the signal line from the telephone set remains connected via the PBX or button telephone set.

To name the problem No. 11 of the conventional internet telephone adapter, the number display function cannot be used at the telephone set in none of the following cases. The case in which the internet telephones is being used via the IP network or cannot be used via the IP network. And the case in which the PSTN line are used, having contracted for the number display function.

The preferred embodiment of the present invention aims to use the number display function when making a telephone call via the IP network or the PSTN line, by using the telephone set contracted for the number display function connected to the telephone equipment adapter of the present invention.

### Disclosure of the Invention

According to one aspect of the present invention, an internet telephone network system using a digital communication line for communicating digital data and an analog communication line for communicating analog data, the internet telephone network system comprises a telephone equipment adapter for inputting an information, selecting a route from the digital communication line and the analog communication line, and outputting the information to the route selected.

According to another aspect of the present invention, the internet telephone network system comprises the digital communication line which is IP (internet protocol) network, the analog communication line which is PSTN (Public Switched Telephone Network) line, and the information which is at least a message information, the telephone equipment adapter which is connected to a telephone equipment which outputs at least the message information. The internet telephone network system of the present invention comprises a PSTN_line_signal_processing_unit for inputting the message information outputted from the telephone equipment, an IP_network_communication_processing_unit for executing at least one of transmission and reception of the message information via the IP network, a designation identifying unit for generating a route selecting information to select the route from the IP network and the PSTN line, and a line_connection_switching_unit for inputting the route selecting information, and outputting the message information inputted from the PSTN_line_signal_processing_unit, to the one of the IP network and the PSTN line based on the route selecting information.

According to another aspect of the present invention, the internet telephone network system comprises the telephone equipment which outputs the message information including an identification information for identifying a destination telephone equipment of the message information receiving side, the PSTN_line_signal_processing_unit which inputs the identification information, the IP_network_communication_processing_unit which transmits the message information to the IP network by specifying an address information for identifying the destination telephone equipment of the message information receiving side, the telephone equipment adapter which includes an address translation table for storing the address information and the identification information by mapping them, and an IP address translation unit for translating the identification information to the address information based on the address translation table, and includes the designation identifying unit which generates the route selecting information using the address information if the identification information is successfully translated to the address information at the IP address translation unit, and generates the route selecting information using the identification information if unable to translate the identification information to the address information at the address translation unit, and outputs the route selecting information generated to the line_connection_switching_unit.

According to another aspect of the present invention, the internet telephone network system comprises the designation identifying unit which includes an IP_address_learning_unit for deciding that the destination telephone equipment of the message information receiving side can receive the message information via the IP network if the address translation unit cannot translate the identification information to the address information, and updating the address translation table based on the decided result.

According to another aspect of the present invention, the internet telephone network system comprises the PSTN_line_signal_processing_unit which transmits the address information obtained by mapping of the identification information of the telephone equipment of the message information transmitting side to the destination telephone equipment of the message information receiving side.

According to another aspect of the present invention, the internet telephone network system comprises the message information which is a digital voice data for performing at least one of transmission process and reception process via the IP network by the IP_network_communication_processing_unit, the message information which is output from the telephone equipment and is input by the PSTN_line_signal_processing_unit is an analog voice data, and the telephone equipment which can recognize the analog voice data, and the telephone equipment adapter which is including a digital/analog_converting_unit for converting the digital voice data received via the IP network to the analog voice data recognizable by the telephone equipment; and an analog/digital_converting_unit for converting the message information which is the analog voice data output from the telephone equipment and input by the PSTN_line_signal_processing_unit to a digital voice data for transmitting via the IP network.

According to another aspect of the present invention, the internet telephone network system has a plurality of telephone equipment connected by the telephone equipment adapter for transmitting and receiving the message information via the IP network, and comprises the telephone equipment adapter which is connected to at least more than two telephone equipment among a plurality of telephone equipment including a message_information_mixing_unit for mixing the message information received from the plurality of telephone equipment via the IP network.

According to another aspect of the present invention, the internet telephone network system comprises at least one of the telephone equipment adapters which is connected to a plurality of telephone equipment including: a permission_data_storing_unit for previously storing a permission data used to confirm that the message information is permitted for transmission and reception between the plurality of telephone equipment; and a simultaneous_call_managing_unit for receiving a communication request before receiving the message information from the plurality of telephone equipment via the IP network, for referring to the permission data stored in the permission_data_storing_unit based on the communication request, and for confirming that the message information is permitted for transmission and reception between the plurality of telephone equipment.

According to another aspect of the present invention, the internet telephone network system comprises the permission data stored in the permission_data_storing_unit which is at least one of a telephone equipment identification number for identifying the telephone equipment, a simultaneous call identification number for identifying a simultaneous communication among the plurality of telephone equipment transmitting and receiving message information, and a password information for participating to the simultaneous communication.

According to another aspect of the present invention, the internet telephone network system comprises the IP_network_communication_processing_unit which inputs a control information for controlling the telephone equipment adapter as the message information via the IP network. The telephone equipment adapter includes; a control_information_storing_unit for storing the control information for controlling the telephone equipment-adapter; and an IP_network_data_reading/writing unit for updating the control information stored in the control_information_storing_unit in accordance to the control information input from the IP_network_communication_processing_unit.

According to another aspect of the present invention, the internet telephone network system comprises the PSTN_line_signal_processing_unit which inputs a control information for controlling the telephone equipment adapter as the message information from either one of the telephone equipment and the PSTN line. The telephone equipment adapter includes: a control_information_storing_unit for storing the control information for controlling the telephone equipment adapter; and a telephone_input_data_writing_unit for updating the control information stored in the control_information_storing_unit in accordance to the control information input from either one of the telephone equipment and the PSTN line.

According to another aspect of the present invention, rhe internet telephone network system comprises the message information for performing at least either one of transmission process and reception process by the IP_network_communication_processing_unit which is a packet information, and the IP_network_communication_processing_unit which includes a UDP_communication_processing_unit for performing a User Datagram Protocol (UDP) communication process to the packet information.

According to another aspect of the present invention, the internet telephone network system has a firewall for preventing an illegal access to the telephone equipment adapter on the IP network, comprises the IP_network_communication_processing_unit which includes a UDP_port_usage_managing_unit for previously storing a fixed UDP port number that can transmit the message information to the destination telephone equipment adapter beyond the firewall, and the UDP_communication_processing_unit which transmits the message information to the destination telephone equipment adapter beyond the firewall by using the UDP port number previously stored in the UDP_port_usage_managing_unit.

According to another aspect of the present invention, the internet telephone network system comprises the IP_network_communication_processing_unit which includes a UDP_port_communication_confirming_unit for confirming a UDP port number that can transmit the message information to the destination telephone equipment adapter beyond the firewall, and the UDP_communication_processing_unit which transmits the message information to the destination telephone equipment adapter beyond the firewall, by using the UDP port number confirmed by the UDP_port_communication_confirming_unit.

According to another aspect of the present invention, the internet telephone network system comprises the IP_network_communication_processing_unit which includes a RTP_communication_processing_unit for performing a Real-time Transport Protocol (RTP) communication process to the packet information.

According to another aspect of the present invention, the internet telephone network system comprises the message information for performing at least either one of transmission process and reception process by the IP_network_communication_processing_unit is a packet information, and comprises the IP_network_communication_processing_unit which includes a TCP_communication_processing_unit for performing a Transmission Control Protocol (TCP) communication process to the packet information.

According to another aspect of the present invention, the internet telephone network system comprises the IP_network_communication_processing_unit which includes an HTTP_communication_processing_unit for performing an Hyper Text Transfer Protocol (HTTP) communication process to the packet information.

According to another aspect of the present invention, the internet telephone network system has a firewall for preventing an illegal access to the telephone equipment adapter on the IP network, comprises the IP_network_communication_processing_unit which includes a HTTP_port_communication_confirming_unit for confirming an HTTP port number that can transmit the message information to a destination telephone equipment adapter of message information receiving side beyond a firewall which is prepared for the destination telephone equipment adapter, the HTTP_port_communication_confirming_unit which transmits the message information to the destination telephone equipment adapter beyond the firewall by using the HTTP port number confirmed by the HTTP_port_communication_confirming_unit.

According to another aspect of the present invention, the internet telephone network system comprises the IP_network_communication_processing_unit which includes a transmission buffer unit having a transmission buffer for inputting a digital voice data which is a digitalized message information, and for temporarily storing the digital voice data input, for generating the packet information by extracting a certain digital voice data from the transmission buffer.

According to another aspect of the present invention, the internet telephone network system comprises the transmission buffer which has a pre-determined buffer size, and the buffer size is changeable.

According to another aspect of the present invention, the internet telephone network system comprises the packet information generated by the transmission buffer unit which includes a header unit for storing an address information of the digital voice data receiving destination, and which includes a data unit for storing the digital voice data, comprises the IP_network_communication_processing_unit which includes a voice_data_packet_encoding_unit for inputting the packet information from the transmission buffer unit, and compressing at least one of an information stored in the data unit of the packet information and an information stored in the header unit of the packet information.

According to another aspect of the present invention, the internet telephone network system comprises the IP_network_communication_processing_unit which includes a voice_data_packet_decoding_unit for receiving the packet information including the compressed information transmitted from the destination telephone equipment adapter, decoding the compressed packet information, and extracting and analyzing the header unit of the decoded packet information.

According to another aspect of the present invention, the internet telephone network system comprises the IP_network_communication_processing_unit which includes a receiving buffer unit which has a receiving buffer for inputting the packet information decoded by the voice_data_packet_decoding_unit, and for temporarily storing the decoded packet information input, and which outputs the decoded packet information at a continuous timing from the receiving buffer.

According to another aspect of the present invention, the internet telephone network system comprises the receiving buffer which has a pre-determined buffer size and the pre-determined buffer size is changeable.

According to another aspect of the present invention, the internet telephone network system comprises the IP_network_communication_processing_unit which includes a redundant_packet_issuing_unit for replicating the packet information generated by the transmission buffer unit.

According to another aspect of the present invention, the internet telephone network system comprises the IP_network_communication_processing_unit which includes a packet_generation_filtering_unit for deleting the packet information output from the transmission buffer unit to the voice_data_packet_encoding_unit in order to delete the number of packet information to be transmitted to the destination telephone equipment adapter.

According to another aspect of the present invention, the internet telephone network system comprises the IP_network_communication_processing_unit which includes a network_traffic_monitoring_unit for monitoring a traffic condition of the packet information received by the IP_network_communication_processing_unit, and instructing the change in the receiving buffer size to the receiving buffer unit based on the monitored result.

According to another aspect of the present invention, the internet telephone network system comprises the network_traffic_monitoring_unit which instructs to the redundant_packet_issuing_unit for the number of replicating packet information based on the monitored result.

According to another aspect of the present invention, the internet telephone network system comprises the network_traffic_monitoring_unit which instructs to the packet_generation_filtering_unit regarding the condition for deleting the packet information based on the monitored result.

According to another aspect of the present invention, the internet telephone network system comprises the IP_network_communication_processing_unit which includes a network_traffic_statistical_data_managing_unit for calculating a statistics of the traffic condition by obtaining the monitored result monitored at the network_traffic_monitoring_unit, and for notifying a statistical result to the network_traffic_monitoring_unit.

According to another aspect of the present invention, the internet telephone network system further comprises a relay server prepared on the IP network, for managing telephone equipment adapters on the IP network, for receiving the message information transmitted from a telephone equipment adapter to an another telephone equipment adapter transmitted in accordance to a pre-determined communication protocol access in place of the another telephone equipment adapter, for storing the message information received, and for reading the message information stored by using the same access as the pre-determined communication protocol access at the telephone equipment adapter.

According to another aspect of the present invention, the internet telephone network system comprises an access following the procedure of pre-determined communication protocol which is an HTTP access in accordance to the hyper text transfer protocol (HTTP) communication protocol.

According to another aspect of the present invention, the internet telephone network system comprises a message information received at the relay server which is is a packet information having a header unit for storing an address information of the message information receiving side, and a data unit for storing the message information, the relay server which includes a TCP_communication_processing_unit for performing a Transmission Control Protocol (TCP) communication process to the packet information received, an HTTP_communication_processing_unit for performing an Hyper Text Transfer Protocol (HTTP) communication process to the packet information received, a voice_data_packet_encoding_unit for compressing at least one of an information stored in the data unit and an information stored in the header unit of the packet information, a voice_data_packet_decoding_unit for receiving a packet information having the compressed information as the packet information, for decoding the compressed information of the packet information, and extracting and analyzing the header unit from the decoded packet information, a voice_data_buffering_unit for temporarily storing the packet information decoded by the voice_data_packet_decoding_unit, and extracting the stored and decoded packet information if received HTTP access for reading the stored and decoded packet information, and outputting it to the voice_data_packet_encoding_unit, and a telephone_set_calling_information_managing_unit for managing the condition of telephone equipment adapters managed by the relay server, for receiving an inquiry information inquiring the condition of another telephone equipment adapter from telephone equipment adapter, for confirming the condition of the another telephone equipment adapter based on the inquiry information, and for notifying the confirmed result to the telephone equipment adapter.

According to another aspect of the present invention, the internet telephone network system of comprises the IP_network_communication_processing_unit of the telephone equipment adapter managed by the relay server which includes an HTTP_telephone_call_unit for transmitting the packet information to the relay server by using HTTP access when the destination telephone equipment adapter of the packet information receiving side is protected by the firewall.

According to another aspect of the present invention, the internet telephone network system comprises the IP_network_communication_processing_unit of the telephone equipment adapter managed by the relay server which includes an HTTP polling unit for transmitting to the relay server an inquiry information managed by the telephone_set_calling_information_managing_unit of the relay server to inquire condition of the destination telephone equipment adapter where the packet information is transmitted to by using the HTTP access polling method.

According to another aspect of the present invention, the internet telephone network system comprises the IP_network_communication_processing_unit of the telephone equipment adapter managed by the relay server which includes a telephone_call_communication_unit for notifying a fact of transmitting the packet information to the destination telephone-equipment adapter where the packet information is transmitted to, before transmitting the packet information via the IP network by using at least one of an electronic mail and an instant message.

According to another aspect of the present invention,the internet telephone network system comprises the PSTN_line_signal_communication_processing_unit of the telephone equipment adapter managed by the relay server which notifies a fact of transmitting the packet information to the destination telephone equipment adapter where the packet information is transmitted to, before transmitting the packet information via the PSTN line.

According to another aspect of the present invention, the internet telephone network system comprises the relay server which includes an HTTP_connection_changing_unit for receiving the packet information transmitted from a telephone equipment adapter to an another telephone equipment adapter, for performing connection negotiation of connecting the telephone equipment adapter and the another telephone equipment adapter, and controlling for the transmission and reception of the packet information by using HTTP between the telephone equipment adapter and the another telephone equipment adapter after the connection is established.

According to another aspect of the present invention, the internet telephone network system comprises the header unit of the packet information which includes a port number and an address information of the transmission destination of the packet information, the relay server includes a TCP/IP_packet_header_alteration_unit for receiving the packet information transmitted from a telephone equipment adapter to an another telephone equipment adapter, for performing connection negotiation process of connecting the telephone equipment adapter and the another telephone equipment adapter, and for converting a port number and an address information of the header unit of the packet information of the transmission destination to a port number and an address information of the telephone equipment adapter receiving the packet information last.

According to another aspect of the present invention, the internet telephone network system comprises the internet telephone network system which further connects at least two relay servers, and the internet telephone network system further comprising an HTTP_relay_server_managing_server including: an HTTP_relay_server_load_monitoring_unit for monitoring a process load condition of the relay server connected; and an HTTP_relay_server_assigning_unit for selecting a relay server responding to the monitored load condition by the HTTP_relay_server_load_monitoring_unit.

According to another aspect of the present invention, the internet telephone network system comprises the IP_network_communication_processing_unit which transmits the message information to the IP network by assigning an identifier name that identifies a destination of transmitting the message information, the address translation table stores the identifier name and the identification information by mapping them, the address translation unit translates the identification information to the identifier name by using the address translation table, and the telephone equipment adapter which includes an IP_address_information_message_processing_unit for outputting the message information to the IP network by using a communication protocol having a pre-determined control message format used to transmit the message information by using the identifier name.

According to another aspect of the present invention, the internet telephone network system further comprises an another PSTN line other than the PSTN line, the telephone equipment adapter which includes a PSTN_line_communication_processing_unit that performs at least one of transmission and reception of the message information via the IP network by using a point-to-point protocol (PPP) communication protocol via the another PSTN line.

According to another aspect of the present invention, the internet telephone network system comprises the telephone equipment adapter which further includes a serial_port_communication_processing_unit that has a serial port, and performs at least one of transmission and reception of the message information via the IP network by using a point-to-point protocol (PPP) communication protocol via the serial port cable.

According to another aspect of the present invention, the internet telephone network system comprises the PSTN_line_signal_processing_unit which keeps the connection to the PSTN line after finishing communication between the message information transmitting side and the message information receiving destination, and transmits to the message information receiving destination via the PSTN line an address information corresponding to an identification information of the telephone equipment of message information transmitting side.

According to another aspect of the present invention, the internet telephone network system comprises the PSTN_line_signal _processing_unit which keeps the connection to the PSTN line after either one of the message information transmitting side and the message information receiving side finishes the communication, and while maintaining the PSTN line connection, sends an address information of the telephone equipment of the message information transmitting side via the PSTN line after waiting for an amount of time when the communication is likely to be finished.

According to another aspect of the present invention, the internet telephone network system comprises the PSTN_line_signal _processing_unit which sends at least a busy tone signal from a communication finishing side to a communication continuing side, in order to make the communication continuing side to finish the communication, when either one of the message information transmitting side and the message information receiving destination finishes the communication.

According to another aspect of the present invention, the internet telephone network system, when at least one of the message information transmitting side and the message information receiving destination attempts to transmit a message information to a telephone equipment while an address information corresponding to an identification information of the telephone equipment is still being transmitted via the PSTN line, comprises the PSTN_line_signal_processing_unit which sends at least a busy tone signal to the telephone equipment attempted to transmit the message information.

According to another aspect of the present invention, the internet telephone network system comprises the PSTN_line_signal _processing_unit which prioritizes a transmission process of an address information corresponding to an identification information of the telephone equipment than a message information transmission process of the telephone equipment, when at least one of the address information transmitting side and the address information receiving destination attempts to transmit the message information to the telephone equipment while the address information corresponding to the identification information of the telephone equipment is still being transmitted via the PSTN line.

According to another aspect of the present invention, the internet telephone network system comprises the PSTN_line_signal _processing_unit which detects a condition of no identification information input after waiting for a specific time interval, and decides that the identification information input is finished.

According to another aspect of the present invention, the internet telephone network system comprises the identification information which comprises of a word information and an end information indicating end of the identification information, the PSTN_line_signal _processing_unit which confirms an input of the end information, and decides that the identification information input is finished.

According to another aspect of the present invention, the internet telephone network system comprises the identification information which comprises at least a communication enterprise information specifying the communication enterprises, and the communication enterprise information specifies a size of the identification information, the PSTN_line_signal _processing_unit which determines the size of identification information based on the communication enterprise information of the identification information, and decides that the identification information input is finished by comparing a size of the determined identification information and a size of the inputted identification information.

According to another aspect of the present invention, the internet telephone network system comprises the PSTN_line_signal_processing_unit which hands over the identification information that finished the input to the address translation unit after decided that the identification information input is finished, and the address translation unit translates the identification information handed over by the PSTN_line_signal_processing_unit to the address information.

According to another aspect of the present invention, the internet telephone network system comprises the identification information which is comprised of more than one word information, the PSTN_line_signal_processing_unit which hands over at least one word information inputted to the address translation unit when at least one word information is input as the identification information, and the address translation unit which compares at least one word information handed over and an identification information stored in the address translation table, and regards matching address information as an address information candidate when at least one word information handed over matches in part to the identification information stored in the address translation table.

According to another aspect of the present invention, the internet telephone network system comprises the address translation unit which adapts the address information candidate as an address information if the address information candidate is the last one.

According to another aspect of the present invention, the internet telephone network system comprises the address translation unit which adapts the last one of the address information candidate as an address information when the word information handed over by the PSTN_line_signal_processing_unit exceeds a pre-determined number as the address information candidates approach the last one.

According to another aspect of the present invention, the internet telephone network system comprises the telephone equipment adapter which receives the message information via the IP network of the message information transmitting side has a same type of telephone equipment adapter as the telephone equipment adapter of the message information transmitting side, and the telephone equipment adapter of the message information receiving side which includes an IP_address_learning_unit for transmitting an identification information that identifies the telephone equipment connected to the telephone equipment adapter of the message information receiving side to the telephone equipment adapter of the message information transmitting side, for receiving the address information transmitted from the telephone equipment adapter of the message information transmitting side.

According to another aspect of the present invention, the internet telephone network system comprises the IP_address_learning_unit of the telephone equipment adapter of the message information receiving side which selects either one of receiving and not receiving the address information transmitted from the telephone equipment adapter of the message information transmitting side.

According to another aspect of the present invention, the internet telephone network system comprises the IP_address_learning_unit which selects either one of transmitting and not transmitting the address information to the telephone equipment adapter of the message information receiving side.

According to another aspect of the present invention, the internet telephone network system comprises the PSTN_line_signal_processing_unit which inputs from the telephone equipment an erasing information to erase the address information and the identification information stored in the address translation table, and the IP_address_learning_unit erases the address information and the identification information stored in the address translation table according to the erasing information.

According to another aspect of the present invention, the internet telephone network system comprises either one of the PSTN_line_signal_processing_unit and the IP_network_communication_processing_unit which alarms any one of the IP network, the telephone equipment, and the PSTN line when an error occurs as a result of carrying out control of the telephone equipment adapter according to the control information stored in the control_information_storing_unit.

According to another aspect of the present invention, the internet telephone network system comprises either one of the PSTN_line_signal_processing_unit and the IP_network_communication_processing_unit which detects that communication is unable due to a failure occurring at either one of the IP network and the PSTN line, and alarms any one of the IP network, the telephone equipment, and the PSTN line.

According to another aspect of the present invention, the internet telephone network system comprises the either one of the PSTN_line_signal_processing_unit and the IP_network_communication_processing_unit which notifies of restoration to any one of the IP network, the telephone equipment, and the PSTN line after the failure is restored.

According to another aspect of the present invention, the internet telephone network system comprises either one of the PSTN_line_signal_processing_unit and the IP_network_communication_processing_unit which notifies of the process in progress mode to an another telephone equipment requesting for connection to a telephone equipment connected to a telephone equipment adapter performing any one of the processes of a PSTN line communication process, a RTP communication process, and an HTTP communication process.

According to another aspect of the present invention, the internet telephone network system comprises the relay server which manages communication between a certain telephone equipment adapter and an another telephone equipment adapter by using a communication connection identification information, and stores the communication connection identification information in a packet information, and outputs the packet information to the IP network.

According to another aspect of the present invention, the internet telephone network system comprises the relay server which manages and stores at least either one of a communication time and an amount of communication packet as a log information by mapping to the communication connection identification information.

According to another aspect of the present invention, the internet telephone network system comprises the IP_network_communication_processing_unit of the telephone equipment adapter managed by the relay server which transmits at least one of the GET, POST and PUT method messages to the relay server by the HTTP access.

According to another aspect of the present invention, the internet telephone network system comprises the HTTP_communication_processing_unit of the relay server which stores the message information in a reply message to the HTTP access by the IP_network_communication_processing_unit of the telephone equipment adapter, and transmits the reply message to the telephone equipment adapter, the IP_network_communication_processing_unit of the telephone equipment adapter managed by the relay server which receives the replay message transmitted from the relay server, and extracts the message information stored in the reply message received.

According to another aspect of the present invention, the internet telephone network system, comprises the message information which has a size one message information, the IP_network_communication_processing_unit of the telephone equipment adapter which is managed by the relay server stores a GET method message in the packet information used to obtain a size two message information that is larger than the size one message information, for obtaining the size one message information from the relay server, and transmits the GET message to the relay server by using the HTTP access, and receives the reply message transmitted from the relay server by using the HTTP access.

According to another aspect of the present invention, the internet telephone network system comprises the IP_network_communication_processing_unit of the telephone equipment adapter managed by the relay server which maintains connection to the relay server and receives more than one reply messages until a total size of the size one message information which is stored in the reply message transmitted from the relay server exceeds the size two.

According to another aspect of the present invention, the internet telephone network system comprises the IP_network_communication_processing_unit of the telephone equipment adapter managed by the relay server which re-attempts connection if cut off connection at either one of the timing of during and immediately after the communication to the HTTP_communication_processing_unit of the relay server, continues the connection, and performs the communication.

According to another aspect of the present invention, the internet telephone network system comprises the IP_network_communication_processing_unit of the telephone equipment adapter managed by the relay server which discontinues the connection to the relay server if there is no reply coming from the relay server after a pre-determined amount of time at either one of the timings of during the communication and immediately after the communication to the HTTP_communication_processing_unit of the relay server, re-attempt the connection and continues the communication.

According to another aspect of the present invention, the internet telephone network system has a telephone equipment managing device as either one of PBX and button telephone for managing a plurality of telephone equipment placed in between the plurality of telephone equipment and the telephone equipment adapter, comprises the PSTN_line_signal_processing_unit of the telephone equipment adapter which receives an identification information of the destination telephone equipment of the message information receiving side from the telephone equipment of the message information transmitting side, and transmits the identification information received to the telephone equipment managing device.

According to another aspect of the present invention, the internet telephone network system comprises the destination telephone equipment of the message information receiving side which has a number display function for displaying an identification number of the message information transmitting side, and connects to the telephone equipment adapter, and the PSTN_line_signal_processing_unit of the telephone equipment adapter connected to a telephone equipment having the number display function receives an identification information of the message information transmitting side, and transmits the identification information received to the telephone equipment having the number display function.

According to another aspect of the present invention, the internet telephone network system comprises the destination telephone equipment of the message information receiving side which has a number display function for displaying an identification number of the message information transmitting side, and connects to the telephone equipment adapter, and the PSTN_line_signal_processing_unit of the telephone equipment adapter connected to a telephone equipment of the message information transmitting side which transmits an identification information for identifying the telephone equipment of the message information transmitting side to the destination telephone equipment adapter of the message information receiving side when transmitting the message information via the IP network.

According to another aspect of the present invention, the internet telephone network system comprises the telephone equipment of the message information transmitting side which outputs the identification information including an non-notification information which instructs not to notify the identification number of the telephone equipment of the message information transmitting side to the destination telephone equipment of the message information receiving side, and the PSTN_line_signal_processing_unit of the telephone equipment adapter connected to the telephone equipment of the message information transmitting side which does not transmit the identification information to the destination telephone equipment adapter of the message information receiving side when the non-notification information is included in the identification information.

According to another aspect of the present invention, a network access method for accessing a network including a digital communication line for communicating digital data and an analog communication line for communicating analog data, the network access method comprising: inputting message information from a telephone equipment; selecting a route from an IP (internet protocol) network and a PSTN (Public Switched Telephone Network) line; and outputting the information to the route selected. The network access method comprises: generating route selecting information to select the route from the IP network and the PSTN line, inputting the route selecting information, and outputting the message information to the one of the IP network and the PSTN line based on the route selecting information.

According to another aspect of the present invention, a telephone equipment adapter comprises inputting message information from a telephone equipment, selecting a route from an IP (internet protocol) network and a PSTN (Public Switched Telephone Network) line; and outputting the information to the route selected. The telephone equipment adapter comprises: a PSTN_line_signal_processing_unit for inputting the message information outputted from the telephone equipment; an IP_network_communication_processing_unit for executing at least one of transmission and reception of the message information via the IP network; a designation identifying unit for generating route selecting information to select the route from the IP network and the PSTN line; and a line_connection_switching_unit for inputting the route selecting information, and outputting the message information inputted from the PSTN_line_signal_processing_unit, to the one of the IP network and the PSTN line based on the route selecting information.

### Brief Description of the Drawings

Fig. 1 shows a network configuration of the internet telephone network system of Embodiment 1.
Fig. 2 shows a general view of an image of the telephone equipment adapter of Embodiment 1.
Fig. 3 shows a configuration of various units of the telephone equipment adapter of Embodiment 1.
Fig. 4 shows a functional flow chart of the telephone equipment adapter of Embodiment 1.
Fig. 5 shows a functional flow chart of the telephone equipment adapter of Embodiment 1.
Fig. 6 shows a functional flow chart of the telephone equipment adapter of Embodiment 1.
Fig. 7 shows a functional flow chart of the telephone equipment adapter of Embodiment 1.
Fig. 8 describes a learning function of the telephone equipment adapter of Embodiment 2.
Fig. 9 shows a configuration of various units of the telephone equipment adapter in Embodiment 2.
Fig. 10 shows a functional flow chart of the telephone equipment adapter of Embodiment 2.
Fig. 11 shows a functional flow chart of the telephone equipment adapter of Embodiment 2.
Fig. 12 shows a flow chart of various units of the telephone equipment adapter of Embodiment 3.
Fig. 13 shows a network configuration of the internet telephone network system using the telephone equipment adapter of Embodiment 3.
Fig. 14 shows a flow chart of various units of the telephone equipment adapter of Embodiment 3.
Fig. 15 shows one example of permission data stored in the permission data storing unit of Embodiment 3.
Fig. 16 shows a configuration of various units in the telephone equipment adapter of Embodiment 4.
Fig. 17 shows a network configuration of the internet telephone network system of Embodiment 5 protected by firewall.
Fig. 18 shows a configuration of the IP network communication processing unit of Embodiment 5.
Fig. 19 shows a functional flow chart of the telephone equipment adapter of Embodiment 5.
Fig. 20 shows a functional flow chart of the telephone equipment adapter of Embodiment 5.
Fig. 21 shows a functional flow chart of the telephone equipment adapter of Embodiment 5.
Fig. 22 shows a configuration of the voice data packet of Embodiment 5.
Fig. 23 shows a configuration of the IP network communication processing unit of Embodiment 6.
Fig. 24 shows a configuration of the IP network communication processing unit of Embodiment 7.
Fig. 25 shows a configuration of the IP network communication processing unit of Embodiment 7.
Fig. 26 shows a network configuration of the internet telephone network system of Embodiment 8, which is provided with the telephone equipment adapter, the HTTP relay server, and the firewall.
Fig. 27 shows a configuration of various units of the HTTP relay server of Embodiment 8.
Fig. 28 shows a configuration of IP network communication processing unit of Embodiment 8.
Fig. 29 shows a configuration of various units of the HTTP relay server managing server and the HTTP relay server of Embodiment 8.
Fig. 30 shows a configuration of various units of the HTTP relay server managing server and the HTTP relay server of Embodiment 8.
Fig. 31 describe HTTP relay server execution method of Embodiment 8 at (A), (B), and (C), for communicating beyond the firewall.
Fig. 32 shows a functional flow chart of the telephone equipment adapter using HTTP relay server of Embodiment 8.
Fig. 33 shows a functional flow chart of the telephone equipment adapter using HTTP relay server of Embodiment 8.
Fig. 34 shows a functional flow chart of the HTTP relay server of Embodiment 8.
Fig. 35 shows a configuration of various units of the telephone equipment adapter of Embodiment 9.
Fig. 36 shows a configuration of various units of the telephone equipment adapter of Embodiment 10.
Fig. 37 shows a configuration of various units of the telephone equipment adapter of Embodiment 11.
Fig. 38 shows a configuration of an outline for communicating between two users using both telephone equipment and telephone equipment adapter in Embodiment 14.
Fig. 39 shows one example of sequential procedure of transmitting and receiving the IP address in Embodiment 14.
Fig. 40 shows an example of identification number for different communication enterprises for Embodiment 15.
Fig. 41 shows a plurality of telephone line connections in use by using a typical telephone managing device for the Embodiment 16
Fig. 42 shows a plurality of telephone line connection in use by using a telephone managing device connected to the telephone equipment adapter for the Embodiment 16.
Fig. 43 shows a pattern of making telephone call from a third individual where the three communication methods including PSTN line method, UDP method and HTTP method coexist, for the Embodiment 20.
Fig. 44 shows a configuration of the conventional internet telephone equipment adapter.

### Preferred Embodiments

### Embodiment 1.

Herein below, one example of the internet telephone network system of the present invention is described with reference to the drawings.

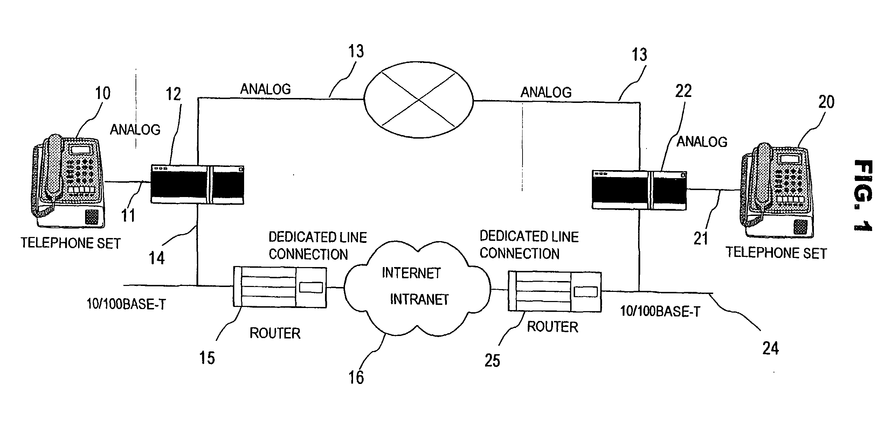

The drawing of Fig. 1 shows a configuration of the internet telephone network system of the Embodiment 1.

In Fig. 1, the reference numerals 10 and 20 denote typical telephone sets. The reference numerals 12 and 22 denote telephone equipment adapters. The reference numeral 11 denotes an indoor telephone line for connecting the telephone set 10 and the telephone equipment adapter 12. The reference numeral 21 denotes an indoor telephone line for connecting the telephone set 20 and the telephone equipment adapter 22. The reference numeral 13 denotes a PSTN line. Example of the PSTN line 13 is a telephone line. The PSTN line 13 connects the telephone equipment adapter 12 and the telephone equipment adapter 22. The reference numerals 14 and 24 denote IP networks that are the examples of data communication networks. The IP networks 14 and 24 connect the telephone equipment adapters 12 and 22. The reference numeral 16 denotes an intranet or the internet. The reference numerals 15 and 25 denote routers. The router 15 controls between the internet/intranet 16 and the IP network 14. The router 25 controls between the internet/intranet 16 and the IP network 24.

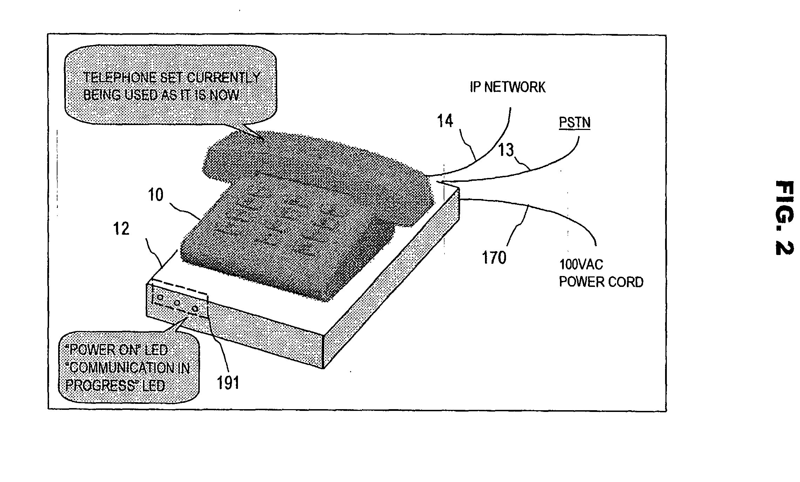

The drawing of Fig. 2 shows a general view of an image of connecting the telephone equipment adapter 12 to the telephone set 10.

As illustrated in Fig. 1, the telephone set 10 and the telephone equipment adapter 12 is connected by the indoor telephone line 11. As in Fig. 2, the telephone equipment adapter 12 connects the IP network 14 and the PSTN line 13 and a power cord 170. In addition to that, the telephone equipment adapter 12 has a LED display 191 indicating situations such as "power on" mode and "communication in progress" mode.

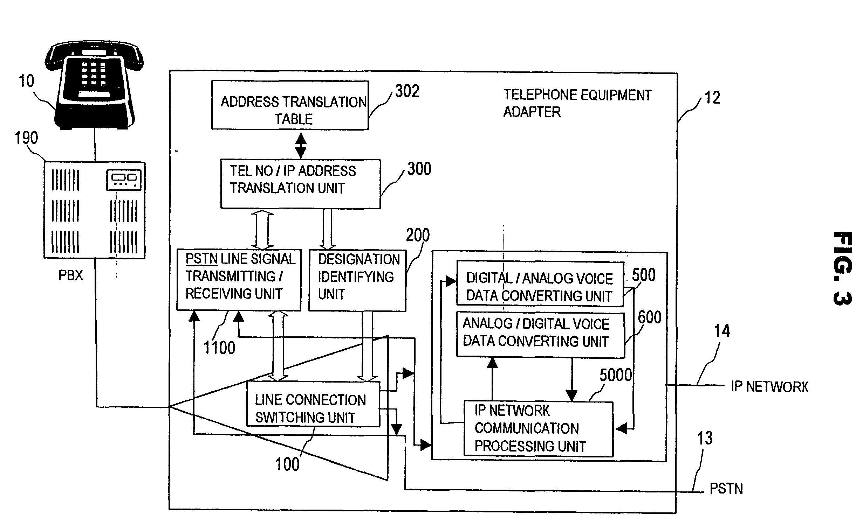

The drawing of Fig. 3 shows a configuration of the telephone equipment adapter of the Embodiment 1.

The description of reference numerals in Fig. 3 follows below. The reference numeral 100 denotes a line_connection_switching_unit for switching the connection line (the PSTN line 13, the IP network 14) if the destination telephone set is connectable via the IP network. The reference numeral 1100 denotes a PSTN line_signal_transmitting/receiving_unit for transmitting and receiving to the telephone set 10 an analog voice data which is one of the communication information via the PSTN line 13. The reference numeral 5000 denotes an IP_network_communication_processing_unit for transmitting and receiving a digital voice data which is one of the communication information via the IP network 14. The reference numeral 200 denotes a designation identifying unit for identifying if the communication information can be transmitted and received to/at the destination telephone set connected to the same type of telephone equipment adapter via the IP network. The reference numeral 302 denotes an address translation table. The telephone number is one of the identification information. The internet protocol address is an address information required to transmit the communication information to the destination telephone equipment via the IP network. The telephone number and the internet protocol address are mapped and stored in the address translation table 302. The reference numeral 300 denotes a telephone_number/IP_address_translation_unit for referring to the address translation table 302 using the telephone number inputted from the telephone set 10, and translating it to the internet protocol address (hereinafter referred to as IP address). In simple terms, the telephone_number/IP_address_translation_unit 300 is an address translation unit. The reference numeral 500 denotes a digital_voice_data/analog_voice data_converting_unit for converting the digital voice data from the IP network to the analog voice data recognizable by the telephone set 10. The reference numeral 600 denotes an analog_voice_data/digital_voice_data_converting_unit for converting the analog voice data which is a communication information inputted from the telephone set 10 to the digital voice data to be transmitted via the IP network 14. In simple terms, the analog_voice_data/digital_voice_data_converting_unit 600 is an analog/digital converting unit.

With reference to Fig. 3, a private branch exchange (hereinafter abbreviated to as PBX) 190 is placed in between the telephone set 10 and the telephone equipment adapter 12. The PBX 190 allows the switching of the connection lines. The PBX 190 is not always necessary. An advantage of placing the PBX 190 is that only a single telephone equipment adapter 12 is needed among a plurality of telephone sets. The PBX 190 shall be described later in the specification.

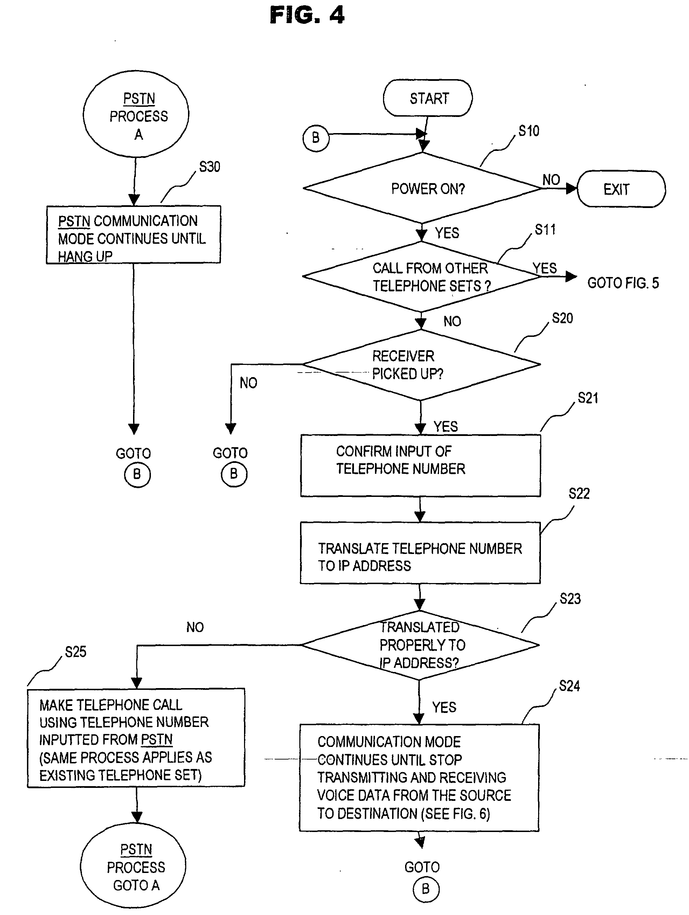

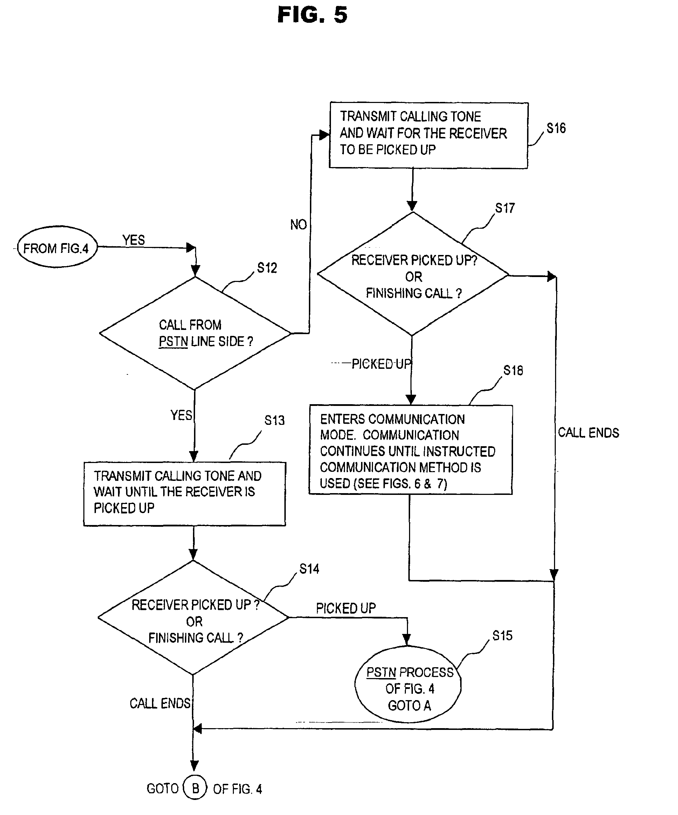

The operation is now described with reference to the flow charts of Figs. 4 and 5. For the purpose of simplifying the explanation, the telephone set 10 and the telephone equipment adapter 12 altogether shall be regarded as "calling side" and the telephone set 20 and the telephone equipment adapter 22 altogether shall be regarded as "call receiving side".

To being with, the telephone equipment adapter 12 is power on in step S10. In step S11, a PSTN_line_signal_transmitting/receiving_unit 1100 and an IP_network_communication_processing_unit 5000 check whether or not there is any call from other telephone sets. If the call is ringing from the PSTN line side (step S12), then the PSTN_line_signal_transmitting/receiving_unit 1100 transmits a ringing tone inputted from the PSTN line 13 from the telephone set 20 to the telephone set 10 as it is. Then, the telephone set 20 waits until the receiver of the telephone set 10 is picked up (step S13). If the receiver of the telephone set 10 is not picked up or if the call from the telephone set 20 finishes, then return to the step S10. If the receiver is picked up in step S14, the communication enters the communication mode via the PSTN_line, and the communication goes on until disconnected (steps S15 and S30). If the call is ringing from the IP network side, then the PSTN_line_signal_transmitting/receiving_unit 1100 transmits a ringing tone to the telephone set 10, and waits until the receiver is picked up (step S16). If the call from the telephone set 20 finishes in step S17, then return to the step S10. If the receiver is picked up, then in step S18, the communication enters the communication mode via the IP network, and the communication goes on until disconnected.

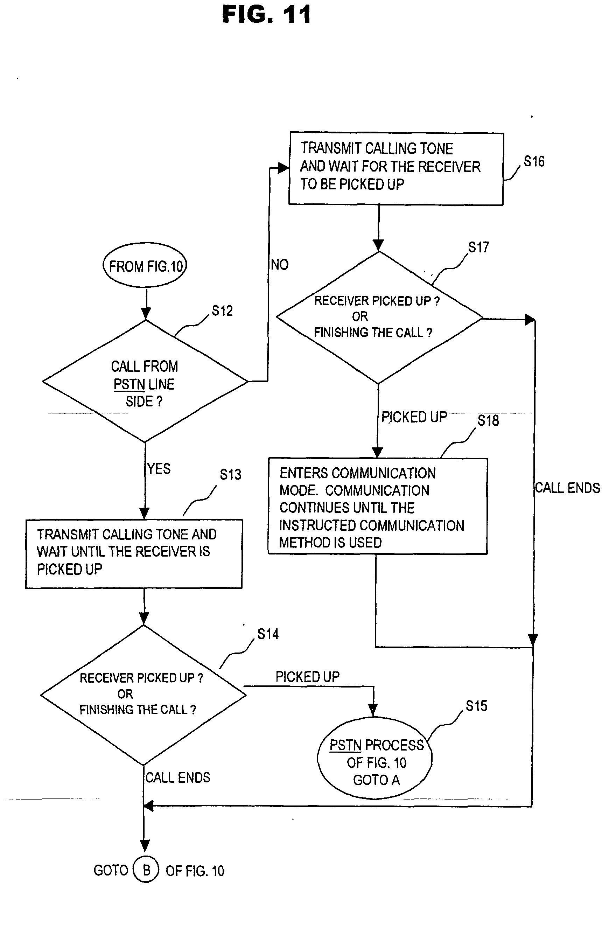

The process procedure of step S18 is described in detail with reference to the flow chart of Fig. 7.

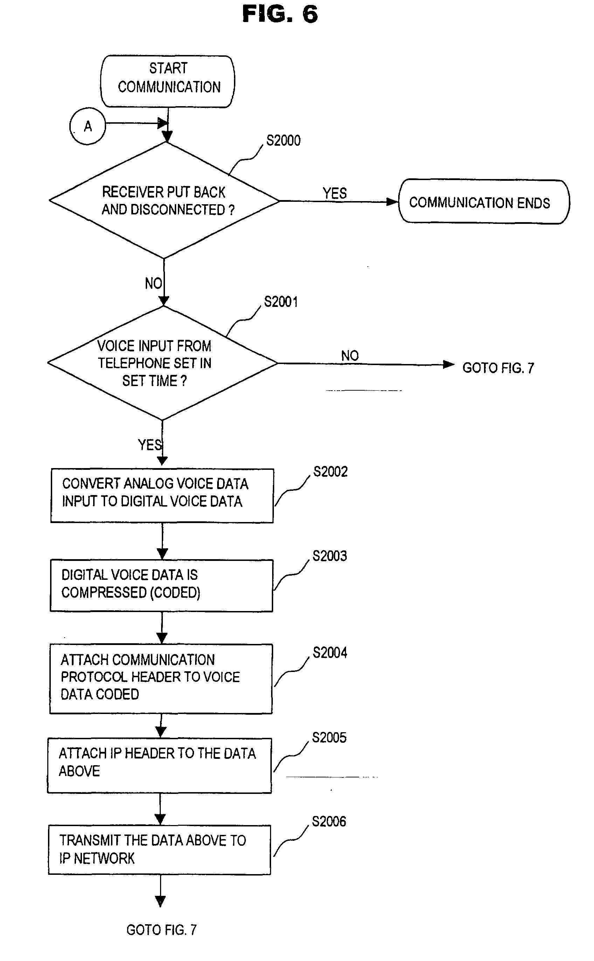

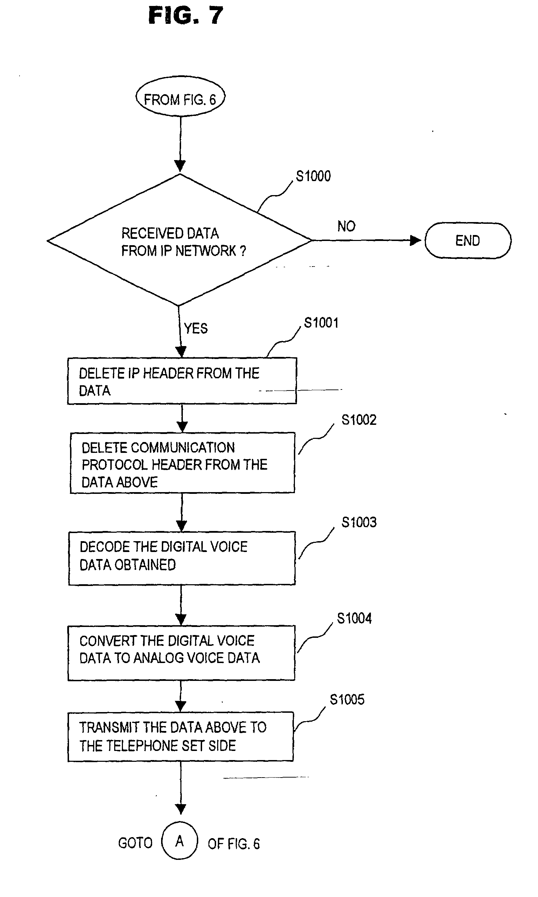

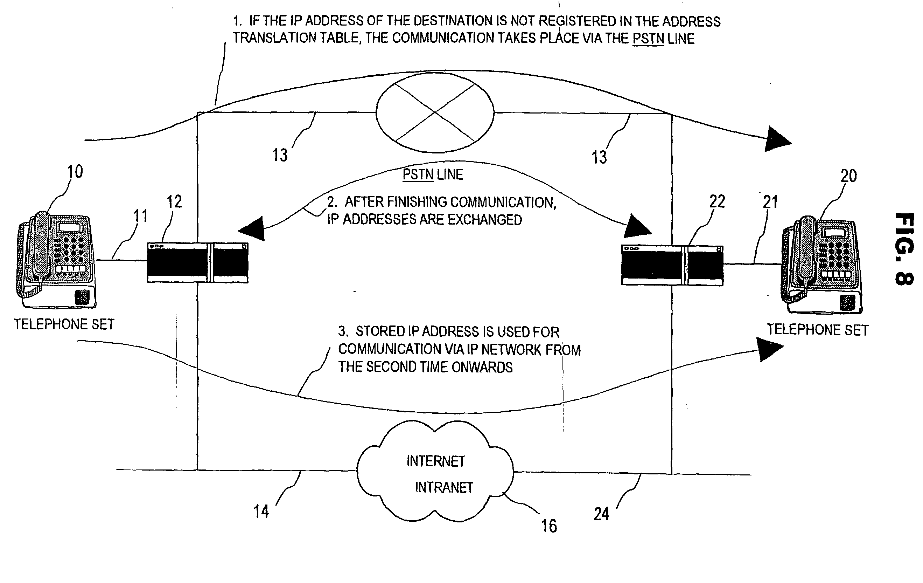

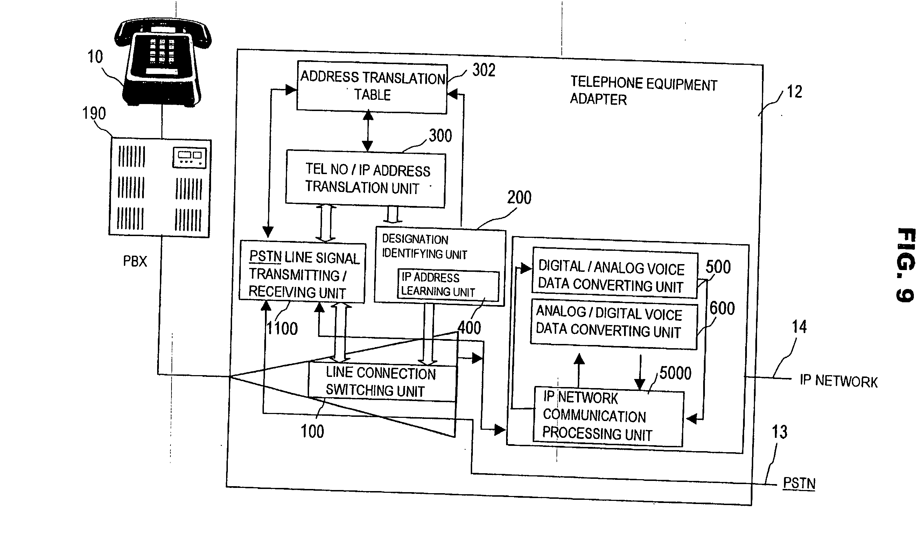

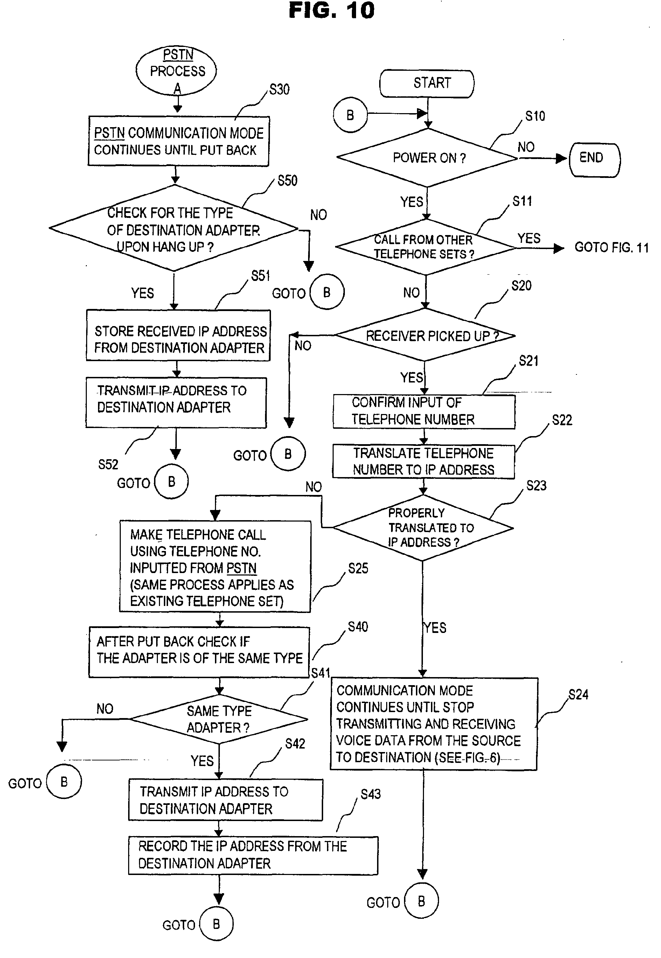

With reference to Fig. 7, in step S1000, the IP_network_communication_processing_unit 5000 checks if a data is received from the IP network 14. The process ends if no data is being received. If the data is being received, then in step S1001, the IP_network_communication_processing_unit 5000 deletes an IP header from the data received. Note that the received data is inputted from the IP network 14. The received data is a digital voice data. The digital voice data is a packet information. Following on, in step S1002, the IP_network_communication_processing_unit 5000 further deletes a communication protocol header from the data that removed the IP header. In step S1003, the obtained digital voice data is decoded. Next, in step S1004, the IP_network_communication_processing_unit 5000 converts the decoded digital voice data to the analog voice data. Then, the IP_network_communication_processing_unit 5000 transmits the analog voice data converted by the digital_voice_data/analog_voice_data_converting_unit 500 to the PSTN_line_signal_transmitting/receiving_unit 1100. In step S1005, the PSTN_line_signal_transmitting/receiving_unit 1100 transmits the transmitted analog voice data to the telephone set 10. After finishing the transmission of the analog voice data to the telephone set 10, in order to decide if the communication should go on or not, the communication process continues by returning to step S2000 of Fig. 6 which shall be described later in the specification.

What is meant by the communication mode mentioned in step S18 of Fig. 5 is that the analog_voice_data/digital_voice_data_converting_unit 6000 of the telephone equipment adapter 22 converts an analog voice signal from the telephone set 20 to a digital voice data. The digital voice data is transmitted to the IP network 24. This is illustrated in Figs. 6 and 7. On the other hand, the digital_voice_data/analog_voice_data_converting_unit 500 converts the digital voice data transmitted via the internet/intranet to an analog voice data, and transmits the analog voice data to the telephone set 10.

Now, back to the beginning of the processes, in step S11 when there is no call from other telephone sets at all, the PSTN_line_signal_transmitting/receiving_unit 1100 confirms if a receiver of its own telephone set 10 is picked up in step S20. At this time, if the receiver is not picked up, then return to step S10. If the receiver is picked up, the PSTN_line_signal_transmitting/receiving_unit 1100 transmits a tone of notifying the telephone set 10 that it is ready for the telephone number inputting mode, and confirms the input of the telephone number in step S21. In step S22, the telephone_number/IP_address_translation_unit 300 refers to the address translation table and obtains the IP address of the destination telephone set 20 based on the inputted telephone number. If the IP address is obtained properly in step S23, the designation identifying unit 200 creates a path selection information for transmitting and receiving the communication information via the IP network. The line_connection_switching_unit 100 activates the IP_network_communication_processing_unit 5000. The IP_network_communication_processing_unit 5000 transmits a digital signal for calling the destination telephone set 20. The telephone sets 10 and 20 enter a communication mode when the receiver of the telephone set 20 is picked up. The communication goes on until disconnected in step S24.

The detailed explanation of step S24 in Fig. 4 is described with reference to Fig. 6.

With reference to Fig. 6, in step S2000, the IP_network_communication_processing_unit 5000 confirms if the receiver of the telephone set 10 is put back or not. Following on, in step S2001, the IP_network_communication_processing_unit 5000 confirms if a voice is input by the telephone set 10 during the set time. If a voice is input in the set time, then the analog_voice_data/digital_voice_data_converting_unit 600 converts the inputted analog voice data into the digital voice data. The IP_network_communication_processing_unit 5000 collects the voice data during a sampling time that is previously determined. The collected voice data during the pre-determined time is converted from the analog data to the digital data. The digital voice data is transmitted to the destination telephone set 20 in step S2002. The converted digital voice data is handed over to the IP_network_communication_processing_unit 5000, and the voice data is compressed (coded) in step S2003. Then, the IP_network_communication_processing_unit 5000 attaches a communication protocol header to the coded voice data itself in step S2004. Further, an IP header is attached to this data in step S2005. The created data is transmitted to the IP network 14 in step S2006. The process advances to the next stage of confirming the returning of communication information from the telephone set 20 via the IP network 24 as in step S1000 of Fig. 7. Explanation of the processes in Fig. 7 is omitted herewith. Refer to the detailed explanation of step S18 in Fig. 5 for the process of Fig. 7.

If not translated properly to the IP address, then the designation identifying unit 200 creates a path selection information in such a way that allows the communication information to be transmitted and received via the PSTN line. The line_connection_switching_unit 100 switches the connection line to the PSTN line 13 and activates the PSTN_line_signal_transmitting/receiving_unit 1100. In step S25, the PSTN_line_signal_transmitting/receiving_unit 1100 transmits a call tone via the PSTN line 13 to a telephone set having a telephone number corresponding to the telephone number input by the telephone set 10. In step S30, the communication enters the communication mode via the PSTN line if the destination receiver is picked up. The communication goes on until disconnected.

The case in which the receiver of the telephone set 20 is not picked up is not described in the flow chart of Fig. 4. This is the case of disconnecting itself and returning to the first step of S10.

The telephone equipment adapter of Embodiment 1 connects a telephone line to both the PSTN line and the IP network. The telephone line such as PBX is connected by a typical telephone set (dial, push button type). The telephone equipment adapter decides if a telephone call can be made from a telephone set and can be connected to the destination telephone set via the IP network. Based on the decision, the line_connection_switching_unit 100 automatically switches the connection line. The telephone call is made via the IP network if decided as possible. However, if the telephone call cannot be made via the IP network, then the telephone call is made via the PSTN line. Such cases are as follows. The telephone number cannot be converted to the IP address. The destination telephone set is not connected to the IP network. The telephone equipment adapter between the telephone set 20, and the IP network 24 is not interchangeable to the telephone equipment adapter 12.

As so far described if the call destination telephone set is geared for communication via the IP network, then the IP network side is used. If not, the PSTN line side is used to make a telephone call. With the automatic switching of the connection line to the IP network side or to the PSTN line side, the user only has to set up the telephone set and the telephone equipment adapter once. The user can transmit or receive communication information via any one of the PSTN line or the IP network as desired without too much trouble.

Accordingly, the internet telephone network system of Embodiment 1 comprises the line_connection_switching_unit 100, the PSTN_line_signal_transmitting/receiving_unit 1100, and the IP_network_communication_processing_unit 5000. The line_connection_switching_unit 100 switches the connection line based on a result of checking the possibility of connecting to the destination telephone set via the IP network when making a call from a typical telephone set connected to both the PSTN line and an IP network configured to IP communication (hereinafter simply referred to as IP network). The PSTN_line_signal_transmitting/receiving_unit 1100 transmits and receives a signal between the telephone sets on the PSTN line. The IP_network_communication_processing_unit 5000 transmits and receives the IP network signal of the IP network side. If the communication is possible on the IP network, then a telephone call is made via the IP network. If the communication is not possible on the IP network, then a telephone call is made via the PSTN line.

In addition to that, the internet telephone network system of Embodiment 1 comprises the designation identifying unit 200. The designation identifying unit 200 decides whether or not a telephone call can be made from a telephone set connected to a telephone equipment adapter to an another telephone set connected to the same type of telephone equipment adapter via the IP network. A telephone call can be made via the IP network accordingly.

In addition to that, the internet telephone network system of Embodiment 1 comprises the telephone_number/IP_address_translation_unit 300. The telephone_number/IP_address_translation_unit 300 automatically translates a telephone number of a general PSTN line to the internet protocol address (hereinafter referred to as IP address) when the telephone call can be made via the IP network. This way, the telephone number that was being used by the user can be adapted as it is, to make a telephone call via the IP network.

In addition to that, the internet telephone network system of Embodiment 1 comprises the digital_voice_data/analog_voice_data_converting_unit 500 and the analog_voice_data/digital_voice_data_converting_unit 600. The digital_voice_data/analog_voice_data_converting_unit 500 converts a digital voice data from the IP network to the analog voice signal for transmitting to the telephone set 10 in order to allow for the voice communication from a telephone set connected to the telephone equipment adapter to the telephone set 10 connected to the IP network side. The analog_voice_data/digital_voice_data_converting_unit 600 converts the analog voice data from the telephone set 10 to the digital voice data. The digital voice data is transmitted via the IP network side. The telephone call can be made via the IP network. This is made possible by the bi-directional conversion of digital voice data and analog voice data.

### Embodiment 2

In the Embodiment 2, the designation identifying unit 200 of destination telephone set transmits its IP address if that IP address is not registered in the address translation table 302 of the calling side. The IP address transmitted from the destination telephone set is registered to the address translation table 302 in the telephone equipment adapter of the calling side.

The drawing of Fig. 8 explains a learning function possessed by the designation identifying unit 200 in the Embodiment 2.

Referring to Fig. 8, a telephone call is made from the telephone set 10 to the telephone set 20. If the IP address of the telephone set 20 is not registered in the address translation table 302 of the telephone equipment adapter 12, then the following procedures will apply:
1. if the IP address is not registered in the address translation table 302, a telephone call is made via the PSTN line.
2. after finishing the call, the IP addresses are exchanged, and the received IP address is registered to their respective address translation tables 302.
3. the IP address stored in the address translation table 302 is referred to make a second telephone call onwards via the IP network.

The procedures 1, 2, and 3 mentioned above is the learning function for obtaining the IP address of the destination side, which is equipped by the designation identifying unit 200.

The drawing of Fig. 9 shows a configuration diagram of each unit of the telephone equipment adapter of the present invention.

Referring to Fig. 9, the PSTN_line_signal_transmitting/receiving_unit 1100 transmits an IP address information upon putting the receiver back after a call is made via a general PSTN line. The reference numeral 400 denotes an IP_address_learning_unit for giving an instruction to the PSTN_line_signal_transmitting/receiving_unit 1100 for obtaining an IP address from the telephone equipment adapter connected to the destination telephone set. The IP address is mapped to the telephone number used in the conventional general PSTN line. The IP_address_learning_unit 400 is provided at the designation identifying unit 200.

The operation of the telephone equipment adapter shown in Fig. 9 is now described with reference to the flow charts of Fig. 10 and Fig. 11.

The whole process of making a telephone call is same as Fig. 4 and Fig.5 of Embodiment 1. That is, steps S10 ∼S30 of Fig. 4 and Fig. 5 are equivalent to the steps S10∼S30 of Fig. 10 and Fig. 11.

The additional process to note in Figs. 10 and 11 compared to Figs. 4 and 5 is that if a telephone call cannot be made from the telephone set 10 via the IP network, then the IP addresses are exchanged after confirming that the telephone equipment adapter is of the same kind upon finishing the call. A similar process is added in both cases of. making and receiving a telephone call.

Operation of the former case, that is, the case of making a telephone call from the telephone set 10 is now described. In step S25, the telephone communication via the PSTN line finishes. In step S40, the IP_address_learning_unit 400 instructs the PSTN_line_signal_transmitting/receiving_unit 1100 to transmit a tone signal to inquire if the destination telephone set is connected to the telephone equipment adapter of the same kind. As a result of the inquiry, in step S41, if a configuration of the telephone equipment adapter of the destination telephone set is not interchangeable to the configuration of the telephone equipment adapter illustrated in Fig. 9, then the process finishes because there is no response from the telephone equipment adapter of the destination telephone set after waiting for a pre-determined amount of time. If however, the telephone equipment adapter of the destination telephone set is of the same kind in step S41, then there will be a response. So that in step S42, the IP_address_learning_unit 400 instructs the PSTN_line_signal_transmitting/receiving_unit 1100 to transmit the IP address to the telephone equipment adapter of the destination telephone set using the analog signal tone. Its own IP address is stored in the address translation table 302 along with its telephone number. The PSTN_line_signal_transmitting/receiving_unit 1100 refers to the address translation table 302 and obtains its own IP address corresponding to its telephone number. Alternatively, the IP_address_learning_unit 400 may refer to the address translation table 302 for obtaining the IP address mapped to its telephone number, and may pass the obtained IP address onto the PSTN_line_signal_transmitting/receiving_unit 1100. Following on, the destination telephone equipment adapter transmits its IP address and the PSTN_line_signal_transmitting/receiving_unit 1100 receives the IP address. The PSTN_line_signal_transmitting/receiving_unit 1100 transmits the received IP address to the IP_address_learning_unit 400. The IP_address_learning_unit 400 stores the received IP address along with the destination telephone number in the address translation table 302 in step S43.

The operation of the latter case, that is, the case of receiving a telephone call is now described. In step S30, a telephone communication via the PSTN line finishes. The telephone equipment adapter of the destination telephone set making a telephone call transmits a tone signal for inquiring whether a telephone equipment adapter is interchangeable or not. The PSTN_line_signal_transmitting/receiving_unit 1100 receives a tone signal transmitted from the telephone equipment adapter connected to the destination telephone set, and sends a response tone signal within a pre-determined time in step S50. Return to step S10 if the inquiring tone signal from the destination telephone equipment adapter does not reach. After responding by sending a tone signal, the IP address of the destination telephone equipment adapter is transmitted, therefore, the PSTN_line_signal_transmitting/receiving_unit 1100 receives the transmitted IP address, and hands over the received IP address to the IP_address_learning_unit 400. The IP_address_learning_unit 400 stores the destination telephone number and IP address to the address translation table 302 in step S51. The destination telephone number is sent along with the IP address. Alternatively, in the case of receiving a telephone call from the destination telephone set, the destination telephone number is obtained and temporarily stored in the PSTN_line_signal_transmitting/receiving_unit 1100 or the IP_address_learning_unit 400. Following on, the IP_address_learning_unit 400 obtains its own telephone number and the IP address from the address translation table 302 and notifies the telephone number and the IP address to the PSTN_line_signal_transmitting/receiving_unit 1100. The PSTN_line_signal_transmitting/receiving_unit 1100 transmits the notified telephone number and the IP address by means of analog signal tone to the destination telephone set in step S52. Note that only IP address may be notified here.

In the operations described as per above have regarded the IP addresses are exchanged after finishing the communication, however, such exchanges may be done before the start of the communication immediately after picking up the receiver of the telephone set.

As described, the IP_address_learning_unit 400 is provided for receiving the IP address mapping to the telephone number of the destination telephone set after making a call via the PSTN line. Likewise, the IP_address_learning_unit 400 notifies the IP address mapping to the telephone number of its own telephone after finishing a telephone call via the PSTN line. An extra process of looking up the IP address of the destination and setting the information to the address translation table 302 is no longer necessary.

Accordingly, the internet telephone network system of Embodiment 2 comprises the PSTN_line_signal_transmitting/receiving_unit 1100 and the IP_address_learning_unit 400. The PSTN_line_signal_transmitting/receiving_unit 1100 exchanges the IP address information upon finishing the telephone communication with the destination telephone set connected to the telephone equipment adapter of the same kind or of the present invention having an interchangeable configuration. The IP_address_learning_unit 400 maps and stores the IP address and the telephone number being used in the conventional PSTN line. The IP_address_learning_unit 400 equipped in the internet telephone network system of the present embodiment allows an automatic usage of the IP network from the second telephone call onwards.

### Embodiment 3

In the Embodiment 3, the telephone equipment adapter is equipped with a tele-conference function. The Embodiment 3 describes an example of carrying out the tele-conference using a telephone set connected to the telephone equipment adapter.

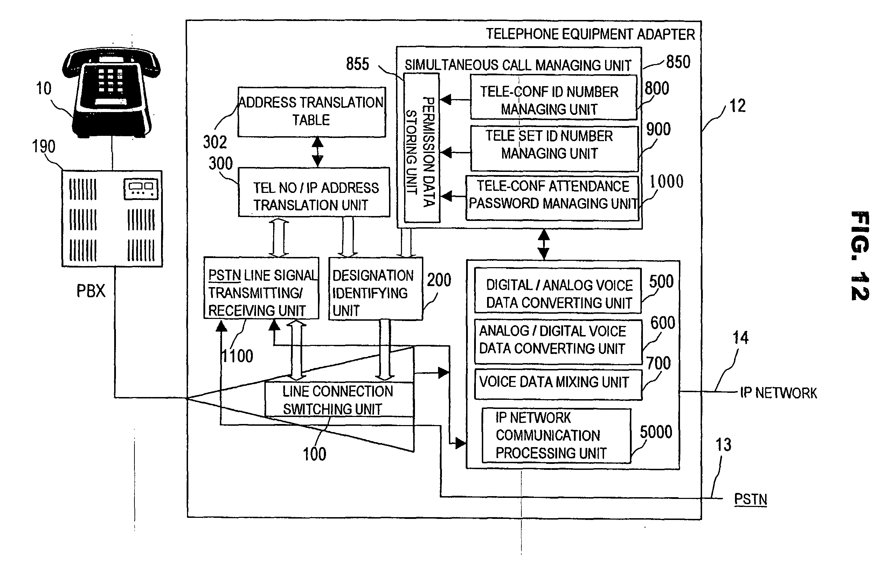

Fig. 12 shows a configuration of various parts of the telephone equipment adapter of Embodiment 3.

Referring to Fig. 12, the reference numeral 700 denotes a voice_data_mixing_unit 700 for mixing more than two voice data other than your own voice speaking using the telephone set 10 and outputting the mixed voices. The reference numeral 800 denotes a tele-conference_identification_number_managing_unit for managing the set identification number of the tele-conference. The reference numeral 900 denotes a telephone_set_identification_number_managing_unit for managing the telephone identification number of the participants in the tele-conference. The reference numeral 1000 denotes a tele-conference_attendance_password_managing_unit for storing and managing the passwords registered by the participants of the tele-conference. The tele-conference_identification_number_managing_unit 800, the telephone_set_identification_number_managing_unit 900, and the tele-conference_attendance_password_managing_unit 1000 altogether comprises a simultaneous_call_managing_unit 850. The simultaneous_call_managing_unit 850 comprises a permission_data_storing_unit 855 for storing the tele-conference attendance passwords or the telephone identification number or tele-conference identification number as a permission data. The tele-conference_identification_number_managing_unit 800, the telephone_set_identification_number_managing_unit 900, and the tele-conference_attendance_password_managing_unit 1000 refer to the permission_data_storing_unit 855 and manage the individuals or the telephone sets that are allowed to participate in the tele-conference.

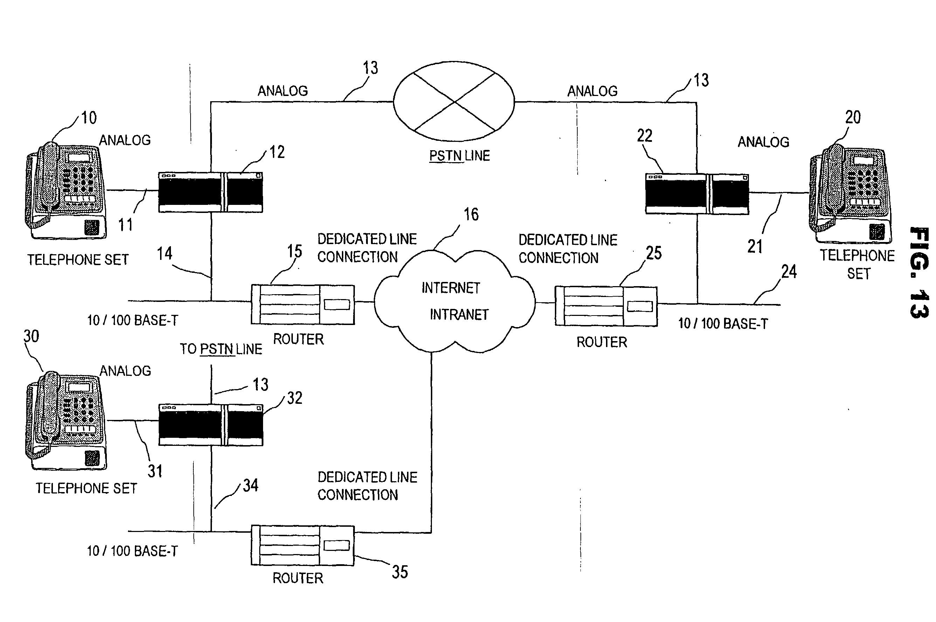

Fig. 13 shows a configuration of the internet telephone network system of Embodiment 3.

Referring to Fig. 13, the reference numeral 30 denotes a telephone set. The reference numeral 31 denotes an indoor telephone line. The reference numeral 32 denotes a telephone equipment adapter. The reference numeral 34 denotes an IP network. The reference numeral 35 denotes a router. Refer to Fig. 1 for the description of other reference numerals of Fig. 13.

In the Embodiment 3, let's assume that the telephone set 10 is communicating with the telephone set 20 via the IP networks 14 and 24. While communication is taking place between the two, a telephone call is made to the telephone set 10 from a telephone set 30. The telephone set 30 requests to participate in the communication.

The operation is now described.

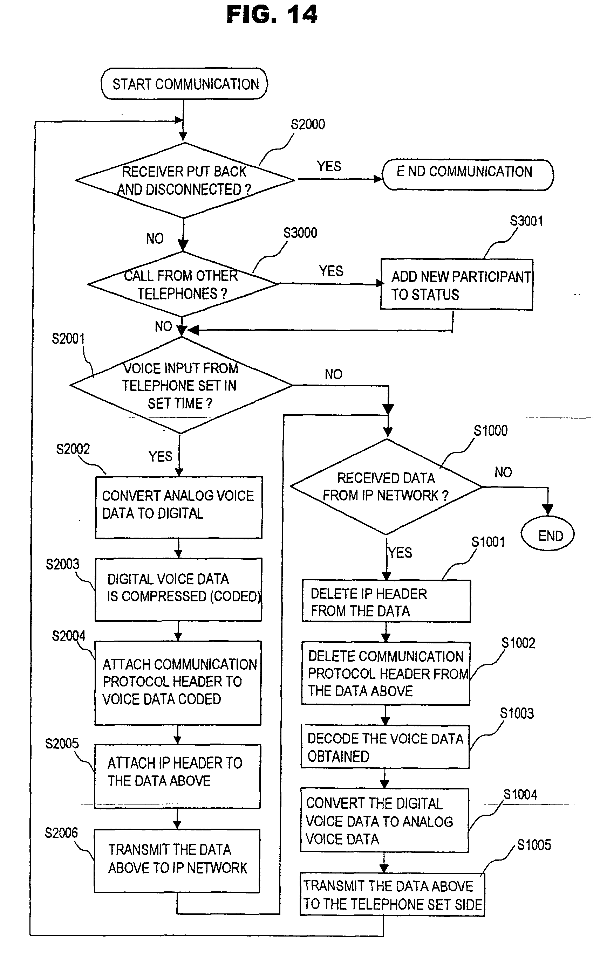

The basic process of in making a telephone call is same as Figs. 4 and 5 of the Embodiment 1. However, unlike the situation in the Embodiment 1, the tele-conference is the communication is considered to be involving at least more than three individuals. A process of accepting the participation of a third individual who is using the telephone set 30 is needed while the two individuals are talking to one another using the telephone sets 10 and 20, respectively. This being the case, a process of confirming the participation of the next individual during the process of step S24 of Fig. 4 and step S18 of Fig. 5 is needed. The detail of the process of the step S24 of Fig. 4 is shown in Fig. 6. The detail of the process of the step S18 of Fig. 5 is shown in Fig. 7. An extra process of confirming the tele-conference participants is described with reference to the flow chart of Fig. 14. The additional process of confirming the participation of three individuals onwards is added to Figs. 6 and 7 for describing the Fig. 14.

For the detailed description starting from step S1000 and finishing at step 1005, refer to the step S200 to step S2006 of Fig. 6. For the description starting from step 2000 and finishing at step 2006, refer to step S1000 to step S1005 of Fig. 7. Since they are the equivalent processes, the descriptions are omitted herewith. Additional processes in Fig. 14 are the step S3000 for confirming an incoming telephone call from a third individual onwards, and the step S3001 for adding a status of the new individual to the communication process if there is an incoming telephone call from the third individual.

In the tele-conference, two individuals are communicating to each other via the IP network to begin with. Then, a third individual makes a call to either one of the two individuals via the IP network. At this situation, all of them are in the communication mode including the third individual. The same applies to the fourth individual onwards making telephone calls in the similar-manners. The process of confirming the participation of the third individual onwards is as follows. The voice_data_mixing_unit 700 mixes more than two voice data other than your own voice received from the same kind of telephone equipment adapters connected to the other telephone sets via the IP network. For instance, the communication voices from the telephone sets 20 and 30 mixed by the voice_data_mixing_unit 700 of the telephone equipment adapter 12 is output to the individual at the telephone set 10.

In this embodiment, the voice_data_mixing_unit 700 is built-in to the telephone equipment adapter. Another possible configuration is having the voice_data_mixing_unit 700 as a separate unit for transmitting the mixed voices of the other participants by eliminating own one to the other telephone equipment adapter. In this case, there is no need to provide the voice_data_mixing_unit 700 to the other telephone equipment adapters.

The procedures of confirming the participation to the tele-conference described above is a procedure of confirming whether there is any more participation of individuals after third individual onwards during two individuals are communicating to one another. A process of confirming whether the third individual is permitted in the tele-conference is not included in these procedures. If the communication among the three individuals is about a simple everyday matter of affairs and notification of liaison matters, there is no need to confirm whether the participating individual is a permitted one or not, however, as for the tele-conference, there is definitely a need for that. Such that in the Embodiment 3, in order to confirm whether an individual wishing to participate in the tele-conference is a permitted one or not, an identification number is attached to the tele-conference. Before the start of communication, the individual must input the conference identification number that is one of the permission data. Three methods are considered. First method is to attach a tele-conference identification number to the tele-conference, and inputs the tele-conference identification number by an individual before communication, and to decide if the inputted tele-conference identification number is correct one or not. The tele-conference identification number is one of the permission data. Second method is to confirm whether the telephone set is allowed for participation to the tele-conference based on the telephone identification number of the telephone set making a telephone call. The telephone identification number is another permission data. Note that in this method, the telephone identification number is attached to the telephone set beforehand. The third method is to confirm whether the password is correct one or not. The password is an another permission data input before starting communication. The three methods are described hereinbelow.

To begin with, the first method of setting the tele-conference identification number is described.

The tele-conference identification number is set to each tele-conference. The tele-conference identification numbers set are previously stored in the permission_data_storing_unit 855. The tele-conference identification number is not stored in all of the permission_data_storing_unit 855 of all of the telephone equipment adapters connected to the telephone sets participating in the tele-conference. The tele-conference identification number is only stored in the permission_data_storing_unit 855 of the telephone equipment adapter of the telephone set of the Chairman in the tele-conference. The telephone equipment adapter connected to the Chairman's telephone set confirms whether or not the participant can join the tele-conference. The IP_network_communication_processing_unit 5000 of the Chairman's telephone equipment adapter notifies a communication request from the IP network 14 to the tele-conference_identification_number_managing_unit 800. The tele-conference_identification_number_managing_unit 800 that received the request notifies by means of voice data message to the telephone set that requested the communication to input the tele-conference identification number. When the tele-conference identification number is input by the destination telephone set who made the call, then the IP_network_communication_processing_unit 5000 receives the inputted tele-conference identification number, and notifies the received tele-conference identification number to the tele-conference_identification_number_managing_unit 800. The tele-conference_identification_number_managing_unit 800 refers to the permission_data_storing_unit 855 and confirms whether or not the notified tele-conference identification number matches the tele-conference identification number being set there. If the tele-conference identification number matches, then the tele-conference_identification_number_managing_unit 800 outputs a message of permitting the communication via the IP_network_communication_processing_unit 5000. The destination individual hears the permission approval message. In addition to that, if the tele-conference identification number notified by the destination telephone set does not match the number set in the permission_data_storing_unit 855, then the tele-conference_identification_number_managing_unit 800 outputs a message of not permitting the participation to the tele-conference to the destination telephone set via the IP_network_communication_processing_unit 5000. Likewise, the destination individual hears the message.

Next, the second method of confirming the participation to the tele-conference based on the telephone identification number is described.

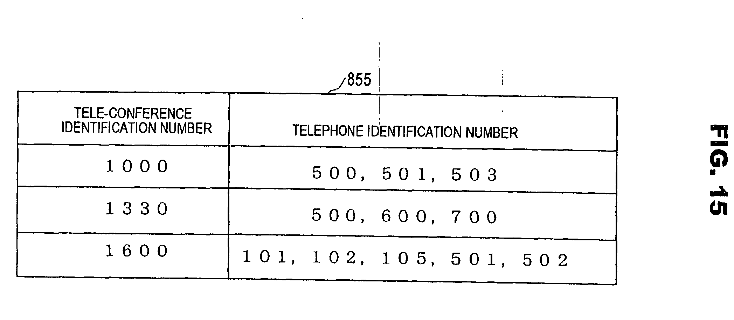

The telephone identification numbers of telephone sets that can participate in the tele-conference are previously set to the permission_data_storing_unit 855 of the telephone equipment adapter connected to the tele-conference Chairman's telephone set. The IP_network_communication_processing_unit 5000 of the telephone equipment adapter connected to the Chairman's telephone set receives the communication request from the IP network 14 and notifies to the telephone_set_identification_number_managing_unit 900 of the notification request. The telephone_set_identification_number_managing_unit 900 notifies a message to input the telephone set identification number to the requesting telephone set. The individual at the destination telephone set hears this message. Next, the IP_network_communication_processing_unit 5000 refers to the permission_data_storing_unit 855 and confirms whether or not the notified telephone identification number is being set there. If the telephone identification number is being set, then the IP_network_communication_processing_unit 5000 outputs a message of permitting the participation to the tele-conference. The individual at the destination telephone set hears this message. If the notified telephone identification number is not being set in the permission_data_storing_unit 855, then the IP_network_communication_processing_unit 5000 outputs a message of not permitting the participation to the tele-conference. The individual at the destination telephone set hears this message. In addition to that, there are cases in which a single Chairman organizes a plurality of tele-conferences. In most of such cases, the number of telephone sets participating in a tele-conference varies. Under such circumstances, a telephone identification number is set to the tele-conference identification number described above. For instance, in the case of organizing three tele-conferences as in Fig. 15, the tele-conference identification number is set as 1000, 1330 and 1600 for every tele-conferences. For the tele-conference identification number 1000, the telephone set identification numbers are 500, 501, and 503. For the tele-conference identification number 1330, the telephone set identification numbers are 500, 600, and 700. For the tele-conference identification number 1600, the telephone set identification numbers are 101, 102, 105, 501, and 502.

It has so far been described that an individual who is making a telephone call from a telephone set inputs the telephone identification number. Alternatively, the telephone identification number is previously stored in the telephone equipment adapter connected to the telephone set, and the telephone_set_identification_number_managing_unit 900 of the telephone equipment adapter connected to the Chairman's telephone set may notify the telephone equipment adapter of the Chairman.

Next, the third method of confirming the participation to the tele-conference by inputting a password is described.

The password is stored in the permission_data_storing_unit 855 of the Chairman's telephone equipment adapter. The password has no use if it is breached to others. Therefore, it is important for the individuals to set his/her own password to protect the tele-conference identification number information beforehand. The method of setting the password is described in the other embodiment. In the Embodiment 3, let's say that the password is already being stored in the permission_data_storing_unit 855 of the chairman's telephone equipment adapter. The passwords are stored for every tele-conference identification numbers just like the telephone identification numbers of Fig. 15. The IP_network_communication_processing_unit 5000 of the chairman's telephone equipment adapter notifies to the tele-conference_attendance_password_managing_unit 1000 when received a communication request from the IP network 14. The tele-conference_attendance_password_managing_unit 1000 and the IP_network_communication_processing_unit 5000 output a message to input the password to the destination telephone set. The individual at the destination telephone set hears this voice message. The individual of the destination telephone set inputs a password. The IP_network_communication_processing_unit 5000 receives the password and notifies the received password to the tele-conference_attendance_password_managing_unit 1000. The tele-conference_attendance_password_managing_unit 1000 refers to the permission_data_storing_unit 855 and confirms whether the received password is being set there. The passwords are set in the permission_data_storing_unit 855 based on the tele-conference identification number. Therefore, the tele-conference identification number and the password must be input at the same time. The IP_network_communication_processing_unit 5000 receives the password inputted from the destination telephone set along with the tele-conference identification number. The tele-conference_attendance_password_managing_unit 1000 notifies to the destination telephone set by sending a message of permitting participation to the tele-conference if the notified password and tele-conference identification number are set in the permission_data_storing_unit 855. If they are not being set in the permission_data_storing_unit 855, then a message of not permitting the participation is sent to the destination telephone set. The individual of the destination telephone set hears the voice notification message.

The tele-conference identification number, the telephone set identification number, and the password are arbitrary combined to be used as a permission data used for confirming the participation to the tele-conference.

Accordingly, in the Embodiment 3, more than two voice data other than your own one received via the IP network from the other telephone sets connected to the telephone equipment adapters of this embodiment are mixed, and the voices are output. Hence, tele-conference by more than three individuals via the IP network is possible.

In addition to that, the tele-conference identification number is set to the tele-conference. The tele-conference identification number must directly be specified and transmitted. Therefore, the tele-conference is possible among the specified participants via the IP network.

In addition to that, the telephone identification number is set to the telephone set connected to the telephone equipment adapter. The telephone identification number of the telephone set is transmitted to the Chairman's telephone set. The Chairman is organizing the tele-conference. The tele-conference is possible via the IP network among the specified telephone sets via the IP network.

In addition to that, the allocated password to each participant is managed for every tele-conference. Each participant inputs the password upon participating to the tele-conference. The inputted password is referred and compared to the registered password, therefore, the verification of the tele-conference participant is possible.

Accordingly, the internet telephone network system of Embodiment 3 comprises the voice_data_mixing_unit 700 for mixing more than two voice data other than your own voice, and output the voices. This allows the tele-conference using telephone sets connected to telephone equipment adapters via the IP network by more than three individuals.

In addition to that, the internet telephone network system comprises the tele-conference_identification_number_managing_unit 800 and the telephone_set_identification_number_managing_unit 900. The tele-conference_identification_number_managing_unit 800 manages the tele-conference identification number of the tele-conference. The telephone_set_identification_number_managing_unit 900 manages the telephone identification number of the participants to the tele-conference. This way, participants of the tele-conference are verified.

In addition to that, the internet telephone network system comprises the tele-conference_attendance_password_managing_unit 1000 for managing and storing the password registered by the participants to the tele-conference. This way, the participants of the tele-conference are verified.

### Embodiment 4.

In the Embodiment 4, an example related to a configuration_data_storing_unit in the telephone equipment adapter is described. The configuration_data_storing_unit stores a data for controlling the telephone equipment adapter. An information for changing the configuration data stored in the configuration_data_storing_unit is input via the IP network or the PSTN line, and the data of the configuration_data_storing_unit is changed.

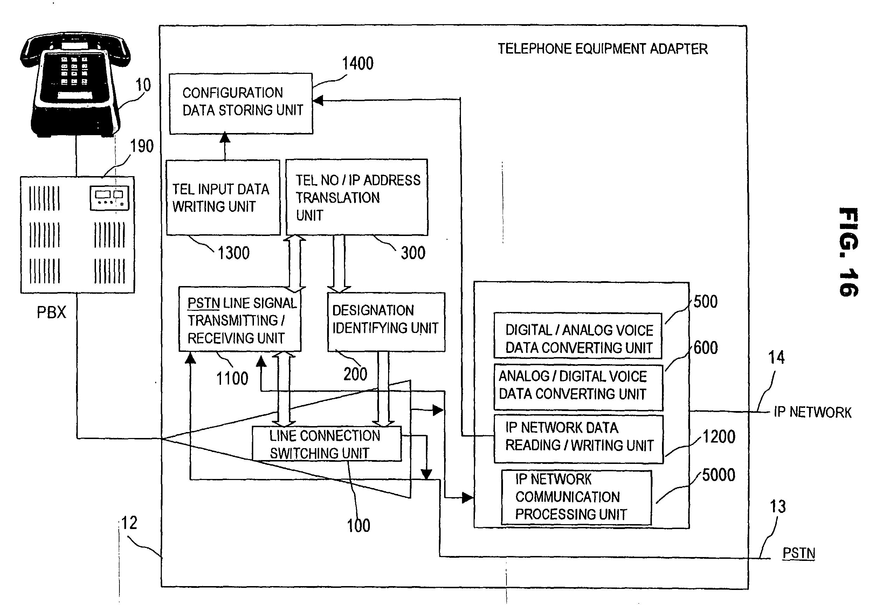

Fig. 16 shows a configuration of various parts in the telephone equipment adapter of Embodiment 4.

Referring to Fig. 16, the reference numeral 1200 denotes an IP_network_data_reading/writing_unit for inputting update information to change a configuration data that controls the telephone equipment adapter from the IP network 14, and for changing the configuration data by accessing to the memory unit where the configuration data is stored. The reference numeral 1300 denotes a telephone_input_data_writing_unit for inputting the update information for changing the configuration data to control the telephone equipment adapter 12 from the telephone set 10, and changing the configuration data by accessing to the memory unit where the configuration data is stored. The reference numeral 1400 denotes a configuration_data_storing_unit for storing the configuration data to control the telephone equipment adapter 12.

Next, the operation is described.

For instance, let's say that a maintenance operation of the telephone equipment adapter is taking place. An update information is input to change the configuration data by using push button on the telephone set 10. The PSTN_line_signal_transmitting/receiving_unit 1100 receives the update information in a form of tone signal. The PSTN_line_signal_transmitting/receiving_unit 1100 hands over the received update information to the telephone_input_data_writing_unit 1300. The telephone_input_data_writing_unit 1300 accesses the configuration_data_storing_unit 1400 according to the update information handed over by the PSTN_line_signal_transmitting/receiving_unit 1100. The configuration data is changed.

In addition to that, the update information can be input by any telephone set other than the telephone set 10 via the PSTN line 13. By doing so, the configuration data stored in the configuration_data_storing_unit 1400 of the telephone equipment adapter 12 can be changed from a distant location, for example.

In addition to that, for example, let's say that a personal computer is connected to the IP network 14. The IP address of the telephone equipment adapter is specified from the personal computer connected to the IP network 14. The update information for changing the configuration data is input to the telephone equipment adapter 12 via the IP network 14. The IP_network_communication_processing_unit 5000 receives the update information. The IP_network_communication_processing_unit 5000 hands over update information received to the IP_network_data_reading/writing_unit 1200. The IP_network_data_reading/writing_unit 1200 changes the configuration data stored in the configuration_data_storing_unit 1400 according to the update information for changing the control information handed over by the IP_network_communication_processing_unit 5000. Accordingly, a configuration data for the purpose of maintenance operation is input from a pre-existing telephone set or a general-purpose personal computer connected to the telephone equipment adapter. The configuration data stored in the configuration_data_storing_unit is changed based on the inputted update information. Therefore, this can reduce the cost incurred in attaching an extra data input/output device to the telephone equipment adapter for the maintenance operation use. The users can easily carry out the set up of maintenance operation using the conventional devices.

In addition to that, the permission data such as a tele-conference identification number, a telephone identification number, and a password stored in the permission_data_storing_unit 855 (refer to Fig. 12 of Embodiment 3) are input from a telephone set connected to the telephone equipment adapter, from a personal computer connected to the IP network, or from a telephone set in the distant location. If a permission data is input from the telephone set, the telephone_input_data_writing_unit 1300 accesses and permission_data_storing_unit 855 where the permission data is registered. If the permission data is input from a personal computer via the IP network 14, the IP_network_data_reading/writing_unit 1200 accesses the permission_data_storing_unit 855 where the permission data is registered. The fact that the permission data related to the tele-conference is input and registered from the personal computer connected to the IP network or the telephone set connected to the telephone equipment adapter allows the registration changing operation of the permission data related to the tele-conference considered to have a frequent registration changes such as new registration or changing and deleting the registered information easy.

In the Embodiment 4, the internet telephone network system comprises the IP_network_data_reading/writing_unit 1200 for updating and writing data stored in the telephone equipment adapter based on the received data from the IP network to the telephone equipment adapter. The IP_network_data_reading/writing_unit 1200 is in the telephone equipment adapter. This way, the configuration data maintenance operation for controlling the telephone equipment adapter is done from the computer such as a personal computer connected to telephone equipment adapter via the IP network.

In addition to that, the internet telephone network system of Embodiment 4 comprises the telephone_input_data_writing_unit 1300. The telephone_input_data_writing_unit 1300 inputs an information for registering and changing the data stored inside the telephone equipment adapter using the dial or push buttons of the telephone set. The inputted information is used to register and change the data stored in the telephone equipment adapter. This way, the maintenance operation of the configuration data for controlling the telephone equipment adapter is done from the telephone set connected to the telephone equipment adapter.

### Embodiment 5

The drawings that have described the Embodiments 1, 2, 3 and 4 show configuration diagrams of various units indicating configuration elements of the telephone equipment adapter in the internet telephone network system. In the Embodiment 5, a detailed inner configuration of the IP_network_communication_processing_unit 5000 is described.

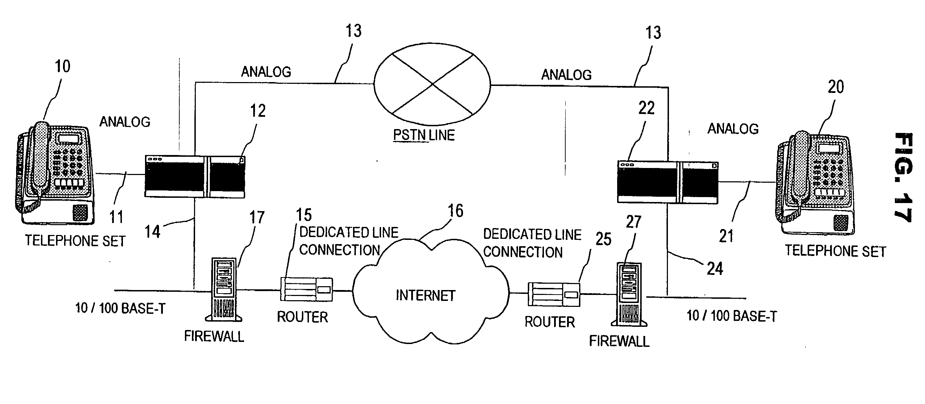

The drawing of Fig. 17 shows a network configuration that is provided with the firewall on the IP network for the Embodiment 5.

Referring to Fig. 17, the reference numerals 17 and 27 denote firewalls. Refer to Fig. 1 for the description of other reference numerals.

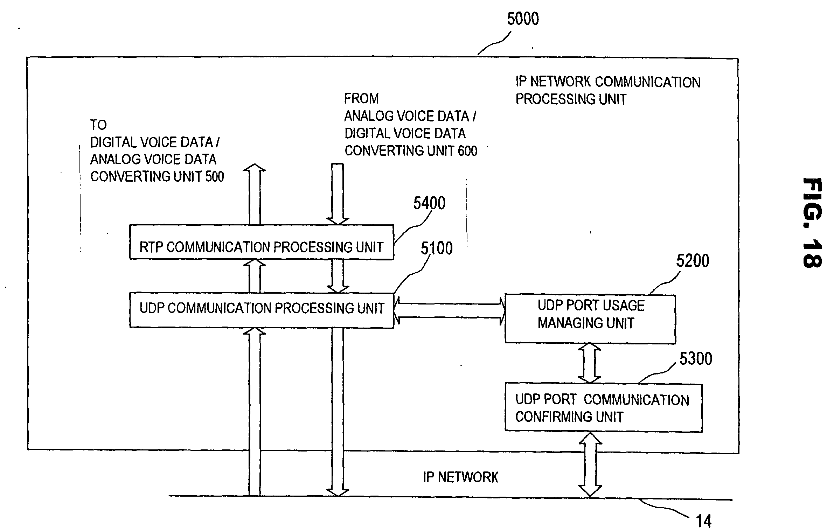

The drawing of Fig. 18 shows a configuration of the IP_network_communication_processing_unit 5000 for the Embodiment 5. The IP_network_communication_processing_unit 5000 of Fig. 18 of the present embodiment is applied to the IP_network_communication_processing_unit 5000 described in the referred drawings in the Embodiments 1, 2, 3 and 4 as it is.

Referring to Fig. 18, the reference numeral 5100 denotes a UDP_communication_processing_unit for processing User Datagram Protocol (hereinafter abbreviated to as UDP) used as a communication protocol in transmitting and receiving operations of the voice data on the IP network 14. The reference numeral 5200 denotes a UDP_port_usage_managing_unit for transmitting and receiving the voice data via a specified UPD port despite of the firewall. The reference numeral 5300 denotes a UDP_port_communication_confirming_unit for searching the UPD port that can transmit and receive data despite of the firewall. The reference numeral 5400 denotes a RTP_communication_processing_unit for processing the Real-time Transport Protocol (hereinafter abbreviated to as RTP) used as a communication protocol in transmitting and receiving the voice data on the IP network 14.

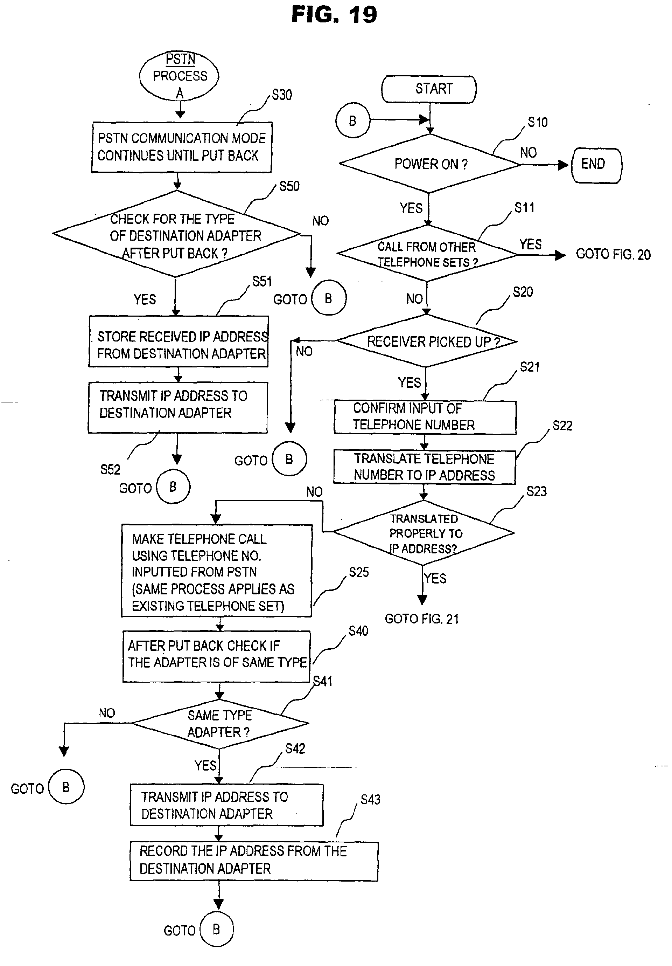

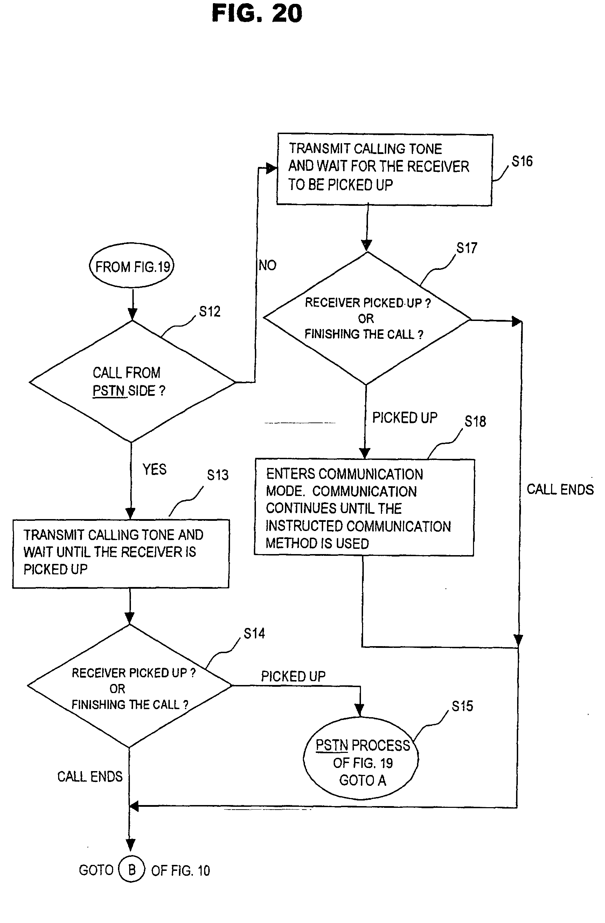

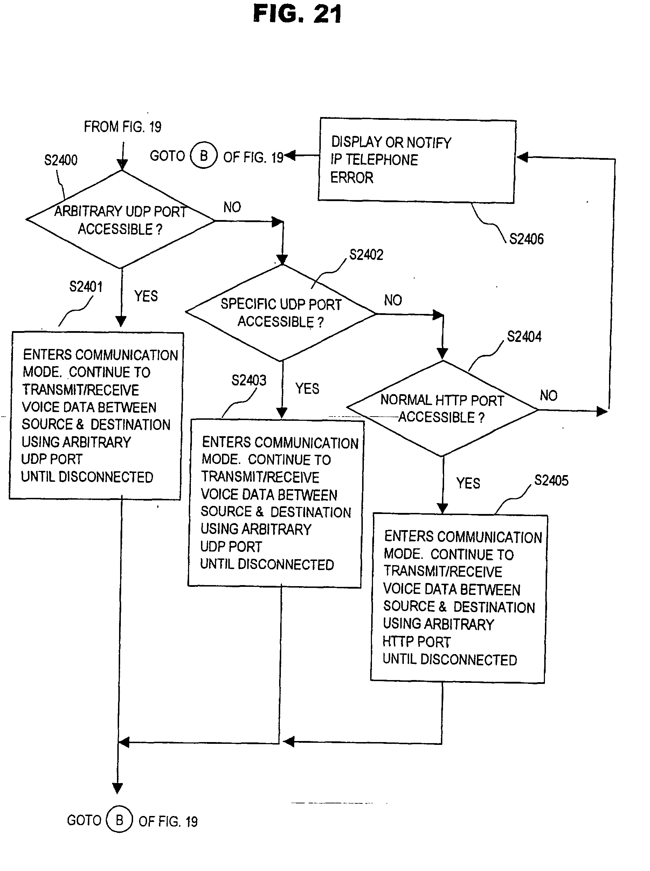

Following on, the operation is described with reference to the flow charts of Figs. 19, 20 and 21.

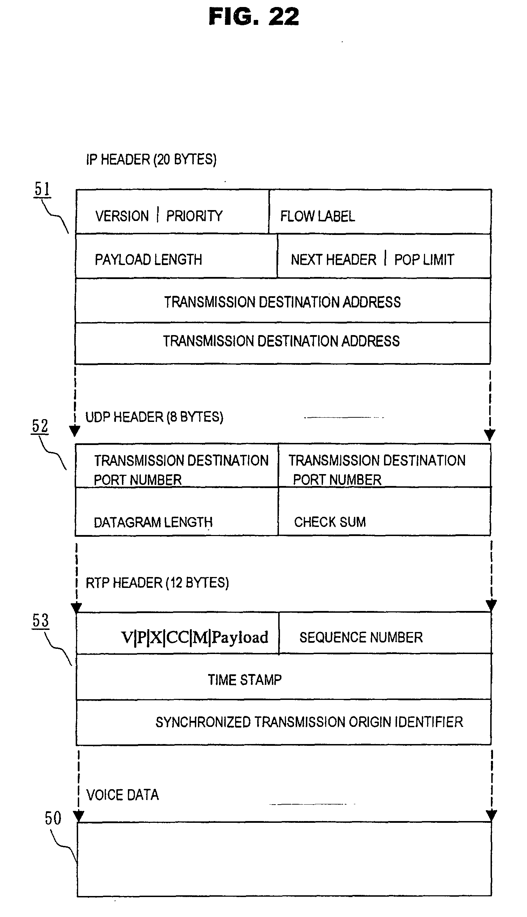

The flow charts of Fig. 19 and Fig. 20 describe the same processes as in the flow charts of Fig. 10 and Fig. 11 of the Embodiment 2. The Fig. 21 describes the processes of Embodiment 5. The IP_network_communication_processing_unit 5000 operates at the communication situation that is transmission and reception processes of the voice data in the Embodiments 1, 2, 3 and 4. The Embodiment 5 shall be described using a case example of transmitting a voice data from the communication destination telephone equipment adapter 22 to the telephone equipment adapter 12 via the IP network 14. Prior to that, let's describe about a header which is used in transmitting and receiving the voice data by using the communication protocols UDP and RTP, with reference to the drawing of Fig. 22. The configuration of voice data packets between the telephone equipment adapter 22 and the telephone equipment adapter 12 via the IP networks 14 and 24 are illustrated in Fig. 22. In the Embodiment 5, the IP packet is constructed by attaching the following headers: an IP header 51, a UDP header 52, and a RTP header 53.

The voice data is transmitted from the telephone equipment adapter 22 via the IP network 14. The UDP_communication_processing_unit 5100 of the telephone equipment adapter 12 takes out a packet that attaches the UDP header 52 except for the IP header 51 from the IP packet of the voice data. Then, the RTP_communication_processing_unit 5400 takes out a packet that attaches the RTP header 53 from the packet that attaches the UDP header 52. Then, the RTP_communication_processing_unit 5400 transmits the digital voice data itself that has removed the RTP header to the digital_voice_data/analog_voice_data_converting_unit 500. The digital_voice_data/analog_voice_data_converting_unit 500 converts the digital voice data to the analog voice data, and transmits the analog voice data to the telephone set 10 via the PSTN_line_signal_transmitting/receiving_unit 1100. This case example has described that the analog voice data converted by the digital_voice_data/analog_voice_data_converting_unit 500 is transmitted to the telephone set 10 via the PSTN_line_signal_transmitting/receiving unit_1100. An alternative path is also possible. That is, the digital_voice_data/analog_voice_data_converting_unit 500 transmits the analog voice data to the PSTN_line_signal_transmitting/receiving_unit 1100 via the IP_network_communication_processing_unit 5000, and the analog voice data is output to the telephone set 10.

Following on, let's now describe a case example of transmitting the communication information from the telephone set 10 to the telephone set 20 via the IP network 14.

The analog voice data itself inputted from the telephone set 10 is input to the IP_network_communication_processing_unit 5000 via the PSTN_line_signal_transmitting/receiving_unit 1100, the designation identifying unit 200, and the line_connection_switching_unit 100. The IP_network_communication_processing_unit 5000 converts the inputted analog voice data to the digital voice data by the analog_voice_data/digital_voice_data_converting_unit 600. The converted digital voice data is input to the RTP_communication_processing_unit 5400 of the IP_network_communication_processing_unit 5000. A packet that attaches the RTP header 53 is created. Further, the UDP_communication_processing_unit 5100 creates a packet that attaches the UDP header 52. The IP packet that attaches the IP header 51 is transmitted to the telephone set 20 connected to the destination telephone equipment adapter 22 via the IP network 14.

By utilizing UDP, if the voice data packet did not reach the telephone equipment adapter 22 connected to the destination telephone set 20, the voice data packet is not retransmitted. Owing to this fact, the real time property of the voice data communication is improved. In addition to that, by utilizing RTP, the transmission time and a number of the voice data packets are managed, therefore, the real time property of the voice data communication is improved.

Next, in order to comply with the firewalls 17 and 27 standing in a path of the IP network, the configuration for confirming whether the UDP port is usable or not is described. An information indicating that the communication destination is in the network environment blocked by the firewall is stored in the address translation table 302 along with the IP address. Since the information is stored in the address translation table 302, the network environment of the destination is known when making a telephone call.

The procedure of making a telephone call from a telephone set connected to the telephone equipment adapter, and the procedure of processing the received telephone call is same as Embodiment 2 described using Figs. 10 and 11. If the telephone call can be made to the destination via the IP network, then a confirmation process is executed which confirms an availability of port for communicating with the destination telephone equipment adapter.

The communication procedures of the telephone set 10 via the telephone equipment adapter 12 are illustrated according to the flow charts of Figs. 19, 20, and 21. Fig. 19 is the same process as a process described in Fig. 10 of the Embodiment 2. Fig. 20 is the same process as a process described in Fig. 11 of the Embodiment 2. Fig. 21 shows a flow chart of an additional process in Embodiment 5. The steps from S2400 to S2406 in Fig. 21 are the processes that correspond to the step S24 of Fig. 10. Referring to Fig. 19, in step S23, if the IP address is obtained based on the telephone number inputted from the telephone set 10 by mapping, then the UDP_port_communication_confirming_unit 5300 scans each port of the destination telephone equipment adapter via the IP network 14, and checks whether or not an arbitrary UDP port is accessible in step S2400. The UDP_port_communication_confirming_unit 5300 specifies a fixed port number and transmits data for confirming whether or not that port number is communication possible. If a reply data is reached within a certain period of time from the telephone equipment adapter connected to the destination telephone set, then we will know that port number is usable. If the access is possible at an arbitrary UDP port, then a port number of the UDP port is checked by the UDP_port_communication_confirming_unit 5300, and is set to the transmission destination port number of the UDP header 52, and the communication process of the voice data at that arbitrary UDP port starts in step S2401. If the port number is not usable, then in step S2402, confirm the possibility of communication to the previously specified UDP port that is managed and controlled by the UDP_port_usage_managing_unit 5200. In general, the firewalls do not allow the use of arbitrary UDP port, however, the firewall can be set so that the limited and specified UDP port is usable. For this purpose, the limited and specified UDP port is previously managed and stored in the UDP_port_usage_managing_unit 5200. If this is possible, then in step S2403, the communication processes of the voice data by using the specified UDP port starts. If this is not possible, another communication port is searched in order to find another possibility. In the example of this flow chart, the accessibility of the HTTP port that is normally used is being checked (S2404). However, in order to confirm whether the HTTP port is accessible or not as in step S2404, a HTTP_port_communication_confirming_unit is needed, which will be described later in the Embodiment 6. In this example, if determined "NO" in step S2402, the accessibility to the HTTP port is confirmed as possible. In step S2402, if determined "NO", then the process may be branched to the error notification process of S2406.

As described above, UDP or RTP having an excellent real time property is used in the communication process, therefore, the voice quality in the communication is improved. In addition to that, the firewall which in general does not allow the use of arbitrary UDP port is set so that the limited and specified UDP port is usable, and the UDP port number of that specified UDP port is stored in the telephone equipment adapter. This way, the voice data communication process beyond the firewall is possible. In addition to that, an usable UDP port by the firewall which in general does not allow the use of arbitrary UDP port is scanned even if the usable UDP port is unknown, that UDP port is searched and the voice data communication process is possible.

In the Embodiment 5, the internet telephone network system comprises the UDP_communication_processing_unit 5100. The UDP_communication_processing_unit 5100 can process UDP as a communication protocol used in transmitting and receiving the voice data on the IP network, in the case of making a telephone call by the telephone equipment adapter via the IP network. The voice data is transmitted and received by the UDP.

In addition to that, the internet telephone equipment adapter of the Embodiment 5 comprises the UDP_port_usage_managing_unit 5200. The UDP_port_usage_managing_unit 5200 transmits and receives a voice data via the specified UDP port by controlling and storing the specified UDP port, complying to the firewall which plays a role of the security preventing the illegal access to the outside IP network from the IP network managed and connected to the telephone equipment adapter, installed at the IP network boundary, in the case of making a telephone call by the telephone equipment adapter via the IP network. The stored UDP port is used for the voice data communication.

In addition to that, the telephone equipment adapter of the Embodiment 5 comprises the UDP_port_communication_confirming_unit 5300. The UDP_port_communication_confirming_unit 5300 checks for the availability of UDP port for transmitting and receiving data, complying to the firewall which plays a role of the security preventing the illegal access to the outside IP network from the IP network managed and connected to the telephone equipment adapter, installed at the IP network boundary, in the case of making a telephone call by the telephone equipment adapter via the IP network. The UDP port that can transmit and receive the voice data is specified, and that UDP port is used for the voice data communication.

In addition to that, the telephone equipment adapter of the Embodiment 5 comprises the RTP_communication_processing_unit 5400. The RTP_communication_processing_unit 5400 can process the RTP as a communication protocol used in transmitting and receiving voice data on the IP network, in the case of making a telephone call by the telephone equipment adapter via the IP network. The voice data is transmitted and received by the RTP.

### Embodiment 6

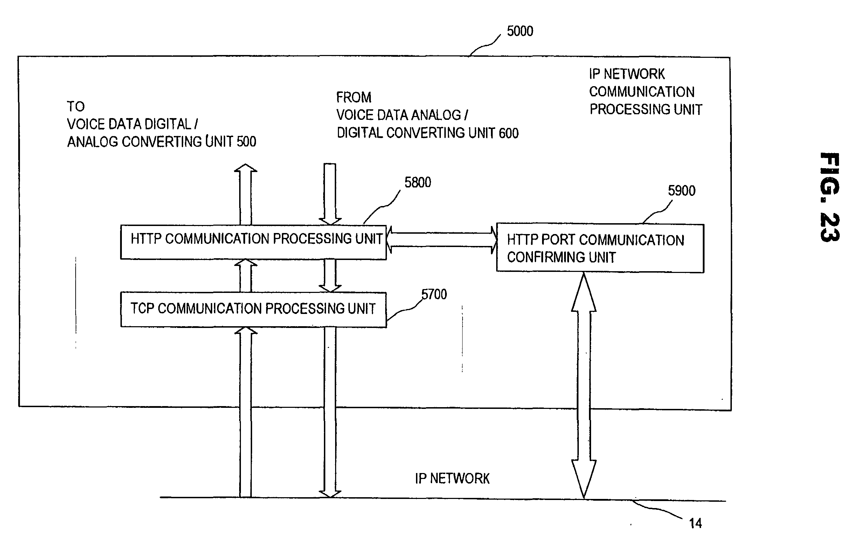

Each part of the telephone equipment adapter in the internet telephone network system is described using the configuration drawings of the Embodiments 1, 2, 3, and 4. In the Embodiment 6, the detailed inner configuration of the IP_network_communication_processing_unit 5000 is described with reference to Fig. 23. The IP_network_communication_processing_unit 5000 of Fig. 23 can be applied to the drawings of Embodiments 1, 2, 3, and 4 as it is.

The configuration diagram of the internet telephone network system of the Embodiment 6 is regarded same as the network configuration shown in Fig. 17 of the Embodiment 5.

Referring to Fig. 23, the reference numeral 5700 denotes a TCP_communication_processing_unit for processing the Transmission Control Protocol (hereinafter abbreviated to as TCP) as a communication protocol for transmitting and receiving voice data on the IP network. The reference numeral 5800 denotes a HTTP_communication_processing_unit for processing the Hypertext Transfer Protocol (hereinafter abbreviated to as HTTP) as a communication protocol for transmitting and receiving voice data on the IP network. The reference numeral 5900 denotes a HTTP_port_communication_confirming_unit for checking the availability of HTTP port where the data can be transmitted and received.

The operation is described next.

Similar to the Embodiments 1, 2, 3, 4 and 5, the IP_network_communication_processing_unit 5000 of Embodiment 6 operates in regard to the transmitting and receiving processes of the voice data taking place during the communication. When a voice data is transmitted from the destination telephone equipment adapter 22 to the telephone set 10 connected to the telephone equipment adapter 12 via the IP network 14, the TCP_communication_processing_unit 5700 receives the IP packet of the transmitted voice data. The TCP_communication_processing_unit 5700 takes out a packet that attaches the TCP header and removes the IP_header from the IP packet. Next, the HTTP_communication_processing_unit 5800 takes out a packet that attaches the HTTP header from a packet which attaches the TCP header, and transmits the digital voice data that has removed the HTTP header to the digital_voice_data/analog_voice_data_converting_unit 500. The digital_voice_data/analog_voice_data_converting_unit 500 transmits the digital voice data converted to analog voice data to the PSTN_line_signal_transmitting/receiving_unit 1100. The PSTN_line_signal_transmitting/receiving_unit 1100 transmits the analog voice data to the telephone set 10. In this example, the analog voice data is transmitted to the telephone set 10 via the PSTN_line_signal_transmitting/receiving_unit 1100. Alternatively, the analog voice data can be transmitted from the digital_voice_data/analog_voice_data_converting_unit 500 bypassing the IP_network_communication_processing_unit 5000 via the PSTN_line_signal_transmitting/receiving_unit 1100 to the telephone set 10.

Next, let's describe the case in which the analog voice data input by the telephone set 10 is transmitted to the destination telephone set 20 via the IP network.

The analog voice data itself inputted from the telephone set 10 goes through the PSTN_line_signal_transmitting/receiving_unit 1100, the designation identifying unit 200, and the line_connection_switching_unit 100, and is inputted to the IP_network_communication_processing_unit 5000. The IP_network_communication_processing_unit 5000 transmits the analog voice data itself to the analog_voice_data/digital_voice_data_converting_unit 600. The analog_voice_data/digital_voice_data_converting_unit 600 converts the analog voice data to digital voice data. The HTTP_communication_processing_unit 5800 attaches an HTTP header and forms a packet. Continuing on, the TCP_communication_processing_unit 5700 creates a packet that attaches the TCP header. The IP header is attached. This is transmitted to the destination telephone set 20 via the IP network 14 as the IP packet.

In the Embodiment 5, the HTTP_port_communication_confirming_unit 5900 checks whether or not the UDP port is usable as shown in step S2404 of Fig. 21. If the UDP port is not usable at all, then the HTTP_port_communication_confirming_unit 5900 takes a sequential step of checking whether the HTTP port is usable or not, and carries out the voice data communication by HTTP if the HTTP port is usable.

As described above, in most of the cases, the UDP port is not usable due to the typical firewall. However, normally, the HTTP port is open, and the voice data communication is carried out by using the HTTP message, therefore, the communication is implemented via the IP network despite of the firewall.

The internet telephone network system of Embodiment 6 comprises the TCP_communication_processing_unit 5700. The TCP_communication_processing_unit 5700 can process TCP as a communication protocol for transmitting and receiving voice data on the IP network when making a telephone call by the telephone equipment adapter via the IP network. This way, the voice data is transmitted and received by the TCP.

In addition to that, the internet telephone network system of Embodiment 6 comprises the HTTP_communication_processing_unit 5800. The HTTP_communication_processing_unit 5800 can process HTTP as a communication protocol for transmitting and receiving voice data on the IP network when making a telephone call by the telephone equipment adapter via the IP network. This way, the voice data is transmitted and received by the HTTP.

In addition to that, the internet telephone network system of the Embodiment 6 comprises the HTTP_port_communication_confirming_unit 5900. The HTTP_port_communication_confirming_unit 5900 checks for the availability of HTTP port in which the data can be transmitted and received, complying to the firewall which plays a role of the security preventing the illegal access to the outside IP network from the IP network managed and connected to the telephone equipment adapter, installed at the IP network boundary, in the case of making a telephone call by the telephone equipment adapter via the IP network. The HTTP port in which the voice data is transmitted and received is specified. The voice data communication is possible using the specified HTTP port.

### Embodiment 7.

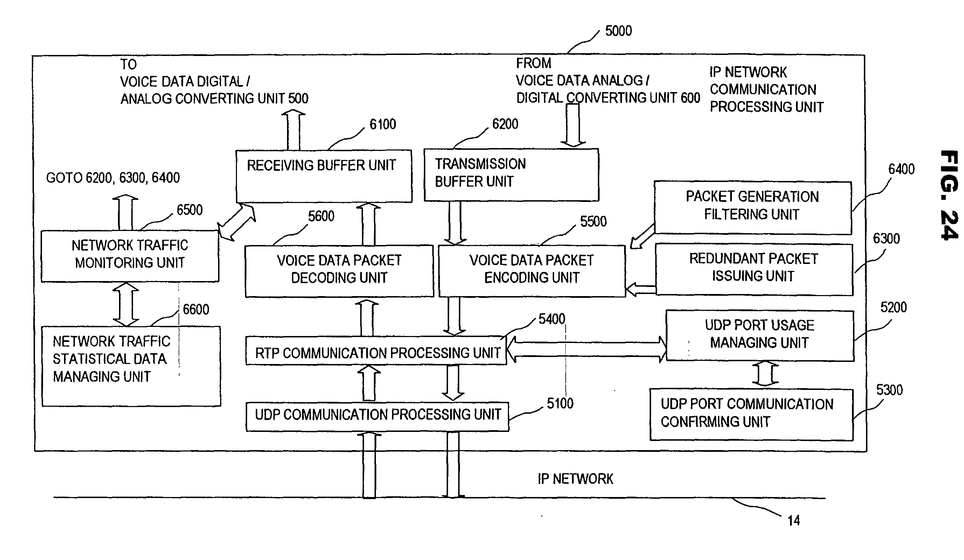

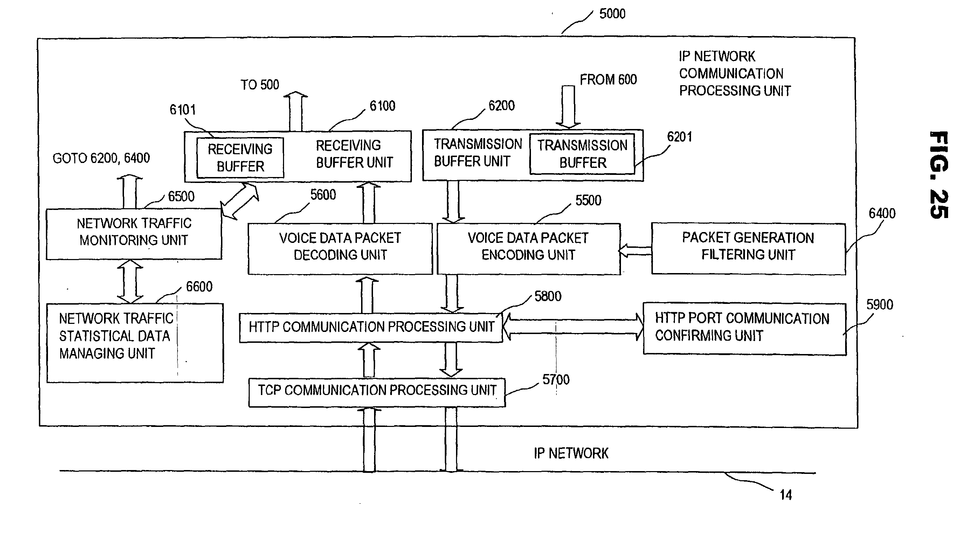

Various units of the telephone equipment adapter of the internet telephone network system is described in the configuration drawings of Embodiments 1, 2, 3, 4, 5, and 6. In the Embodiment 7, the detailed inner configuration of the IP_network_communication_processing_unit 5000 is described with reference to Figs. 24 and 25. The IP_network_communication_processing_unit 5000 of Figs. 24 and 25 can be applied to the drawings of Embodiments 1,2,3,4,5, and 6 as it is.

The configuration diagram of the network system of the Embodiment 7 is regarded same as the network configuration shown in Fig. 17 of Embodiment 5.

Referring to Figs. 24 and 25, the reference numeral 5500 denotes a voice_data_packet_encoding_unit for compressing the voice data itself, and for changing a header of packet having a standard format such as RTP and HTTP to a compressed header restricted down to minimum necessary information. The reference numeral 5600 denotes a voice_data_packet_decoding_unit for decoding the compressed voice data itself received, and analyzing the compressed header, and obtaining the header of packet having a standard format such as RTP and HTTP. The reference numeral 6100 denotes a receiving buffer unit for converting a digital voice data to an analog signal, and for changing the buffer size so that the analog signal is transmitted at a constant delayed timing, and for temporarily storing the digital voice data packet received at a discontinuous timing due to change in the network traffic, from a destination telephone set 20 connected to the IP network. The reference numeral 6200 denotes a transmission buffer unit for creating a digital voice data packet for transmission in the case of transmitting the digital voice data packet to the destination telephone set 20 connected to the IP network 14 and 24, and for performing an additional process of creating a packet using only a required voice data accumulated in the transmitting buffer where the buffer size can be modified before transmitting it. The reference numeral 6300 denotes a redundant_packet_issuing_unit for transmitting a variable number of the same voice data packet copies. When the digital voice data packet is being transmitted to the telephone set 20 connected to the IP networks 14 and 24, the multiple copies of the same voice data packet are transmitted. This is done in order to comply with a loss of the voice data packets that reflect on the network traffic condition. The reference numeral 6400 denotes a packet_generation_filtering_unit for deducing the number of voice data packet subjected to transmission for deducing the network traffic in the case of transmitting the digital voice data packet to the telephone set connected to the IP network 14 and 24. The reference numeral 6500 denotes a network_traffic_monitoring_unit for monitoring the reception timing of the voice data packet from the IP network 14. The reference numeral 6600 denotes a network_traffic_statistical_data_managing_unit for accumulating the statistical data of the network traffic condition, and calculates a parameter showing the average traffic condition at a day or a weekly cycle.

The operation is described next.

In the similar manner as the IP_network_communication_processing_unit 5000 of Embodiments 1, 2, 3, 4, 5, and 6, the IP_network_communication_processing_unit 5000 of Embodiment 7 operates during the communication situation of transmitting and receiving processes of the voice data. The basic operation of the IP_network_communication_processing_unit 5000 of Embodiment 7 is executed in the similar manner as the IP_network_communication_processing_unit 5000 of Embodiments 5 and 6. In the Embodiment 7, the voice data is transmitted to and extracted from the RTP_communication_processing_unit 5400 and the HTTP_communication_processing_unit 5800. The voice_data_packet_encoding_unit 5500 compresses the voice data, the HTTP header and the RTP header. The voice_data_packet_decoding_unit 5600 decodes the voice data, the HTTP header and the RTP header. Instead of the standardized header format, the RTP header and HTTP header compression remake a compact header by bringing together only the minimum necessary informations.

In addition to that, since there are various data traffics existing on the IP network, the voice data packets may not arrive continuously at a constant time interval. Such variation in the arrival time of each packet is referred to as a transmission time fluctuation. Accumulating the voice data packets in the receiving buffer upon receiving the packets absorbs the transmission time fluctuation. The packets are then output to the PSTN_line_signal_transmitting/receiving_unit 1100 that is an analog side at a constant time interval from the receiving buffer. By doing so, provided that it is within the capacity of the receiving-buffer, the output timing of the voice data to the output side is going to be constant even if a delay occurs in a packet such that the regenerated voice is not broken. This process is performed at the receiving buffer unit 6100. The receiving buffer unit 6100 includes a receiving buffer 6101 that executes the above-mentioned process. There is going to be a delay in regenerating the voice while the voice data packets are accumulating in the receiving buffer 6101. Therefore, the size capacity of the receiving buffer cannot always be increased since this also increases the delay. To give an extreme example, if there are fluctuation in the arrival times of the voice data packets transferred via the IP network, a conversation such as "good-morning" may be heard as "goo...do...mo..or...nin...g". Whereas the "..." is the time gap being inserted between the conversation. The time gap is referred to as broken voice. The receiving buffer is prepared in order to compensate for the time gap. The regeneration time as a whole is delayed. The broken voice is removed this way. These are the receiving buffer processes. The larger the size of the receiving buffer, the smaller the broken voice. The voice quality improves but the delay as a whole increases, therefore, the communication timing is delayed such that it is difficult to hear. In other words, if the receiving buffer size is increased, the fluctuation is absorbed that the voice quality improves. On the other hand, the delay is increased to cause difficulty in hearing them. If the receiving buffer size is decreased, the voice quality deteriorates but the talk timing improves. The receiving buffer size is decided by the trade-off of both characteristics. An optimum value must be set by considering them. However, in reality, the optimal value changes depending on the network traffic condition. At the receiving buffer unit 6100, the size capacity of the receiving buffer 6101 is changed according to the arbitrary condition. In addition to that, to comply with a frequent occurrence of buffer overflow, the size capacity of buffer is set larger, and only one part of the data is transmitted to the digital_voice_data/analog_voice_data_converting_unit 500 that is the regenerating side. In such cases, not only the size capacity of the receiving buffer but also the data size for transmitting to the digital_voice_data/analog_voice_data_converting_unit 500 which is the regenerating side must be controlled and change depending on the various conditions.

In addition to that, likewise, in order to comply with the various data traffic conditions on the IP network, the voice data packet size of the receiving side for transmitting to the IP network 14 is changed. For this purpose, the transmission buffer unit 6200 includes a transmission buffer 6201. The transmission buffer unit 6200 accumulates a certain amount of voice data at the transmission buffer 6201 before they are transmitted. The smaller the voice data packet size for transmission the less frequent the delay. The communication quality improves. However, each packet always carries a header having a certain size. There is going to be a limit in making the packet size small. In addition to that, by making the packet size small, the number of packets increases. Therefore, the amount of network traffic is enlarged. Accordingly, the size of receiving buffer is controlled to change depending on the network traffic condition.

In addition to that, likewise, in order to comply with various data traffic conditions on the IP network, in preparation to the frequent occurrence of transmission data packet loss in UDP communication process, there is a measure to transmit a multiple copies of the voice data packet having an identical content as a back-up. This process is executed by the redundant _packet_issuing_unit 6300. The redundant packets are not always issued. There is a need to adjust the amount of redundant packets being issued in order to delete the unnecessary packets since all the packets are delayed when the network traffic increases. The redundant packet issuance is controlled in the case of frequent occurrence of packet loss and when the network traffic is not increased so that the packet loss is deduced and the communication quality increases.

In addition to that, likewise, in order to comply with various data traffic conditions on the IP network, if the network traffic increases, those voice data packet that does not affect the communication quality is not transmitted in order to deduce the amount of transmission data. The packet _generation_filtering_unit 6400 executes such control process. As a filtering condition, there is a set up of eliminating a voice data below a certain volume level. As for the human perception, it is already being recognized that there is no influence on the communication even if a volume below certain level is not regenerated. Accordingly, when the network traffic is increased, the amount of voice data for elimination is controlling the elimination of the level of voice data volume upon transmission. This way, the communication continues without having to lose the communication quality.

In addition to that, likewise, in order to comply with various data traffic conditions on the IP network, we have discussed the importance in carrying out various communication controls at various units in regard to the communication process. Herewith, in order to grasp the network traffic condition, the network_traffic_monitoring_unit 6500 records the timing of receiving the voice data packet intermittently. Due to this, the network traffic amount is inferred, and the condition for the communication control above is appropriately changed. For example, for the case of receiving buffer unit 6100, if the network_traffic_monitoring_unit 6500 recognizes that the network traffic is increased, it notifies the receiving buffer unit 6100 to increase the size capacity of the receiving buffer 6101. If the receiving buffer size capacity is increased, the packets are handed over to the digital_voice_data/analog_voice_data_converting_unit 500 after a certain amount of the packets are accumulated in the receiving buffer 6101. The network traffic is resolved this way. On contrary, if the network traffic is less, since the packet arrives to the telephone equipment adapter at a stable timing therefore, the network_traffic_monitoring_unit 6500 notifies to the receiving buffer unit 6100 to decrease the size capacity of the receiving buffer 6101.

In addition to that, likewise, in order to comply with various data traffic conditions on the IP network, a statistical data are used to change various parameters. These parameters control the communication above. The monitored and accumulated data at the network_traffic_monitoring_unit 6500 is received by the network_traffic_statistical_data_managing_unit 6600. The network_traffic_statistical_data_managing_unit 6600 supplies information to control communication that is needed by the receiving buffer unit 6100, the transmission buffer unit 6200, the redundant_packet_issuing_unit 6300, and the packet_generation_filtering_unit 6400. The network_traffic_statistical_data_managing_unit 6600 presents a trend of average network traffic at one-day cycle or a weekly cycle. The information is referred and used to carry out communication control by various units.

In the configuration drawing shown in Fig. 24, the communication processing unit includes the RTP_communication_processing_unit 5400 and the UDP_communication_processing_unit 5100. In the configuration drawing shown in Fig. 25, the communication processing unit includes the TCP_communication_processing_unit 5700 and the HTTP_communication_processing_unit 5800. The following units are shared in the configuration drawings of Figs. 24 and 25: the receiving buffer unit 6100; the transmission buffer unit 6200; the packet _generation_filtering_unit 6400; the network_traffic_monitoring_unit 6500; and the network_traffic_statistical_data_managing_unit 6600. The redundant_packet_issuing_unit 6300 is only included in the configuration drawing of Fig. 24. This is because the redundant_packet_issuing_unit 6300 relates to the UDP_communication_processing_unit 5100. Since it carries a characteristic of transmitting the data to the destination without establishing the UDP session, the UDP itself does not have a function to deal with packet loss even if the packet loss is frequent. This being the case, the redundant_packet_issuing_unit 6300 is provided for supporting the UDP. On the other hand, TCP carries a characteristic of re-try many times until the data is definitely communicated since it starts communication after the session is established. This being the case, TCP does no need to support re-try function. This is the reason why the telephone equipment adapter of Fig. 25 does not include the redundant_packet_issuing_unit 6300.

Accordingly, the headers of communication voice data packet is individually compressed. Such that the packet size can be made smaller than its standard size. The network traffic is deduced. What is meant by the individual compression is, for example, the packet size is made small by using the header information compression program. It indicates compressing only those data needed by the telephone equipment adapter that is the element of the present invention.

In addition to that, even if there are fluctuation in the transmission time of each voice data packet subject to communication, the voice data packets are accumulated until they attain a certain size upon reception, and transmitted to the analog regeneration side, therefore, even if the network traffic condition is unstable, a stable communication quality is maintained.

In addition to that, upon transmitting each voice data packet subjected to communication, the packet size is made small if the amount of network traffic is less, and the packet size is made large if the network traffic is more. Even if the network traffic condition is unstable, a stable communication quality is maintained without influencing the network traffic.

In addition to that, the redundant packet is issued upon a frequent occurrence of the packet loss upon transmitting each voice data packet subjected to communication, therefore, a stable communication quality is maintained even in the condition when the packet loss is frequent due to the network traffic.

In addition to that, if the amount of network traffic is increased upon transmitting each voice data packet subjected to communication, those voice data packet that do not affect the communication quality such as those below a certain volume level are not transmitted, therefore, a stable communication quality is maintained despite of increased amount of network traffic.

In addition to that, various parameters in the communication processes described above are adjusted according to the estimated network traffic condition and the measured receiving timing of each voice data packet subjected to communication, therefore, the optimal communication process is possible responding the updated condition of the network traffic. A stable communication quality is maintained.

In addition to that, the results of measured timing of receiving each voice data packet subjected to communication are accumulated, and it is referred to as a data for showing the network traffic condition at a day cycle or a weekly cycle, therefore, the optimal communication process is controlled responding to the average network traffic condition. A stable communication quality is maintained.

In the Embodiment 7, the internet telephone network system comprises the voice_data _packet_encoding_unit 5500 and the voice_data_packet_decoding_unit 5600. The voice_data_packet_encoding_unit 5500 compresses the voice data itself, and transmits the voice data by changing a packet having a standard format such as RTP and HTTP to a compressed header restricted to the least necessary information upon the destination telephone equipment adapter is recognized as of the same type as the other telephone set connected to the telephone equipment adapter. The voice_data_packet_decoding_unit 5600 obtains a packet header having a standard format such as RTP or HTTP, and analyzes the compressed header by decoding the compressed voice data received. By deducing the amount of data, the communication data is efficiently transmitted and received.

In addition to that, the internet telephone network system of Embodiment 7 comprises the receiving buffer unit 6100 for temporarily storing the digital voice data packets received at discontinuous timing due to the change in the network traffic from the destination telephone set via the IP network to the receiving buffer in which the buffer size is changeable so that the digital voice data packets converted to analog signals are transmitted from the telephone equipment adapter to the telephone set at a constant delay. This way, the analog voice signals are transmitted to the telephone set at a stable timing.

In addition to that, the internet telephone network system of Embodiment 7 comprises the transmission buffer unit 6200 for creating the digital voice data packet subjected to transmission, in the case of transmitting the digital voice data packet to the destination telephone set via the IP network, for accumulating them in the transmitting buffer in which its buffer size is changeable, and for reassembling only the necessary data before transmitting it. The optimal digital voice data packet transmission is implemented in accordance to the network traffic condition, and the voice data with an excellent quality is possible.

In addition to that, the internet telephone network system of Embodiment 7 comprises the redundant _packet_issuing_unit 6300 for transmitting a multiple copies of the same voice data packet to comply with the voice data packet loss occurring due to the network traffic condition, in the case of transmitting the digital voice data packet to the destination telephone set via the IP network. This way, the excellent quality voice data is transmitted despite of the unfavorable network traffic condition causing the packet loss.

In addition to that, the internet telephone network system of Embodiment 7 comprises the packet_generation_filtering_unit 6400 for deducing the number of voice data packets subjected to transmission in order to deduce the network traffic as much as possible, in the case of transmitting the digital voice data packet to the destination telephone set via the IP network. This way, an increase in the network traffic due to the increased number of voice data is suppressed and the excellent quality voice data is transmitted.

In addition to that, the internet telephone network system of Embodiment 7 comprises the network_traffic_monitoring_unit 6500 for monitoring the timing of receiving the voice data packets via the IP network. The network_traffic_monitoring_unit 6500 analyzes the network traffic condition, and instructs the operation condition of various units including the receiving buffer unit 6100, the transmission buffer unit 6200, the redundant_packet_issuing_unit 6300, and the packet_generation_filtering_unit 6400, after having detected a certain condition on the network. The optimal transmission/reception processes are implemented responding to the network traffic condition. The excellent quality voice data is transmitted.

In addition to that, the internet telephone network system of Embodiment 7 utilizes the network_traffic_statistical_data_managing_unit 6600 to calculate parameters indicating the average traffic condition at a day or weekly cycle, by accumulating the statistical data of network traffic condition received from the network_traffic_monitoring_unit 6500 which monitors the timing of receiving the voice data packets via the IP network. The network_traffic_statistical_data_managing_unit 6600 is used to instruct the change in the operation conditions of the following units: the receiving buffer unit 6100; the transmission buffer unit 6200; the redundant_packet_issuing_unit 6300; and the packet_generation_filtering_unit 6400. This way, the optimal transmission/reception processes are implemented in response to the average network traffic condition. The excellent quality in voice data is transmitted.

### Embodiment 8

In the internet telephone network system of Embodiment 8 equipped with a HTTP relay server for transmitting communication information to the destination telephone set without having to be aware of the firewall, even if the destination network environment is protected by the firewall.

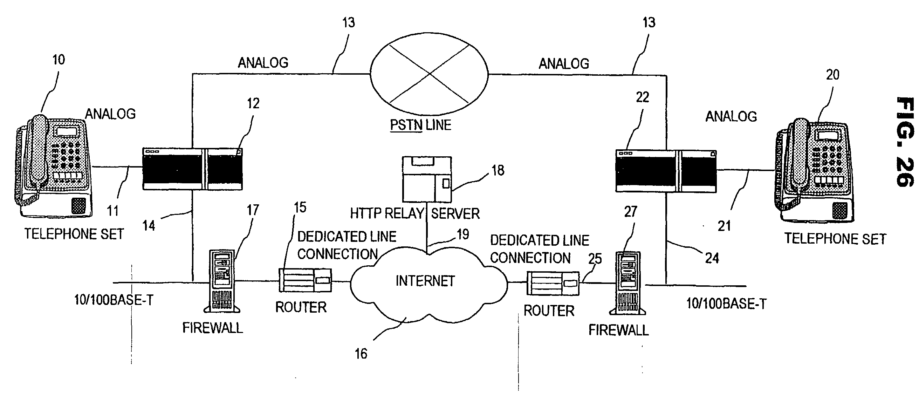

The drawing of Fig. 26 shows a network configuration of the Embodiment 8.

Referring to Fig. 26, the reference numeral 18 denotes a HTTP relay server. Refer to Fig. 17 for the description of other reference numerals.

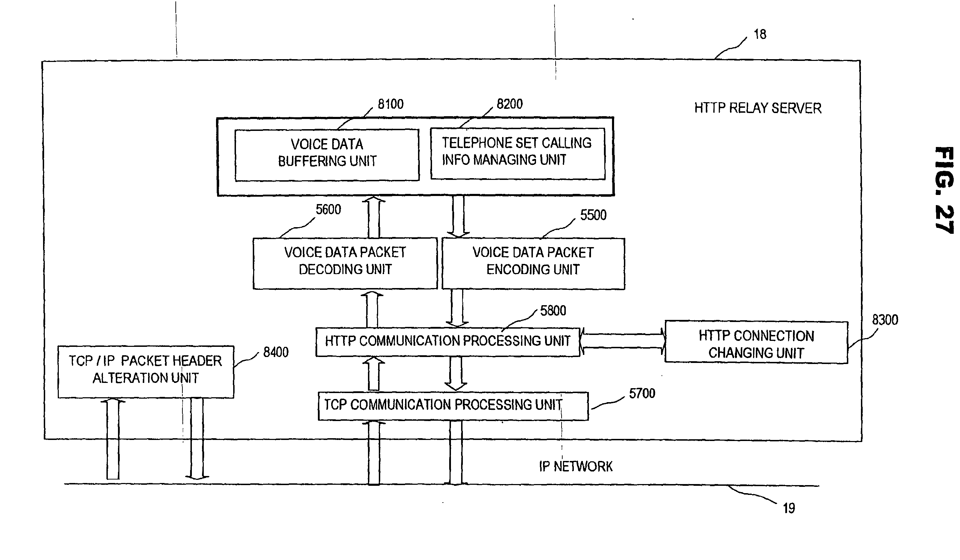

The drawing of Fig. 27 shows a configuration of various units of the internet telephone network system of Embodiment 8 comprising the HTTP relay server.

Referring to Fig. 27, the reference numeral 5700 denotes a TCP_communication_processing_unit for transmitting and receiving data via the IP network 19 by using TCP. The reference numeral 5800 denotes a HTTP_communication_processing_unit for receiving data packet from the TCP_communication_processing_unit 5700, analyzes it as the HTTP message, and assembles the HTTP message for transmitting to the TCP_communication_processing_unit 5700. The reference numeral 5600 denotes a voice_data_packet_decoding_unit for analyzing the voice data packet obtained from the HTTP_communication_processing_unit 5800, and for extracting the coded voice data. The reference numeral 5500 denotes a voice_data_packet_encoding_unit for assembling the coded voice data subjected for transmission into a packet, and transmitting it to the HTTP_communication_processing_unit 5800. The reference numeral 8100 denotes a voice_data_buffering_unit for temporarily storing the voice data obtained from the voice_data_packet_decoding_unit 5600, and for transmitting it to the voice_data_packet_encoding_unit 5500 upon extracting the voice data at HTTP access. What is meant by the HTTP access is that by supposing that the HTTP relay server is the Web server, the telephone equipment adapter is assumed to have the Web browser in it, so that each telephone equipment adapter can transmit voice data to the HTTP relay server by using POST message at the HTTP. In addition to that, each telephone equipment adapter can get a location of whereabouts the accumulated voice data that are outputted from the telephone set connected to each telephone equipment adapter by using the G ET message. The voice data is temporarily held in the HTTP relay server. The telephone equipment adapter connected to another telephone set requiring that voice data go and gets them, and the communication process is implemented.

The reference numeral 8200 denotes a telephone_set_calling_information_managing_unit for confirming if the information regarding the telephone call is being made to each telephone set from the telephone equipment adapter and for responding if there is an inquiry from each telephone equipment adapter.
The reference numeral 8300 denotes an HTTP_connection_changing_unit. In case that we connect two telephone equipment adapters (for example, the telephone equipment adapter 12 connected to the telephone set 10, and the telephone equipment adapter 22 connected to the telephone set 20 about a communication between the telephone set 10 and the telephone set 20) to the HTTP relay server 18, the HTTP_connection_changing_unit 8300 changes the HTTP relay server 18 to a Web server, each of the two telephone equipment adapters to a Web browser.
The reference numeral 8400 denotes a TCP/IP_packet_header_alteration_unit. The telephone equipment adapter connected to the calling side telephone set transmits a voice data packet to the HTTP relay server 18. The TCP/IP_packet_header_alteration_unit 8400 converts the TCP header port number and the IP address of the IP header inside the voice data to a port number and an IP address of the telephone equipment adapter of the final destination.

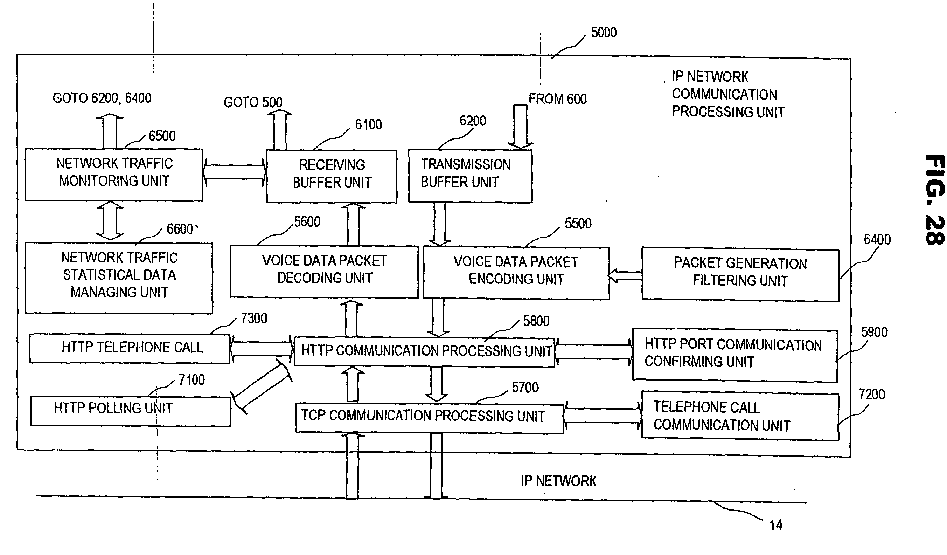

The drawing of Fig. 28 shows an inner configuration of the IP_network_communication_processing_unit 5000 of Embodiment 8. The IP_network_communication_processing_unit 5000 in Fig. 28 can be applied to the equivalent parts of the Embodiments 1, 2, 3, 4, 5, 6, and 7 as it is.

Referring to Fig. 28, the reference numeral 7300 denotes an HTTP telephone call for transmitting telephone call information to the HTTP relay server 18 by using HTTP access. The reference numeral 7100 denotes an HTTP polling unit for checking the communication situation of the destination telephone equipment adapter stored in the telephone_set_calling_information_managing_unit 8200 by using inquiry information by means of HTTP access polling. The reference numeral 7200 denotes a telephone_call_communication_unit for reporting that the destination telephone equipment adapter is receiving a telephone call when the telephone_number/IP_address_translation_unit 300 detects that the destination telephone equipment adapter is protected by firewall.

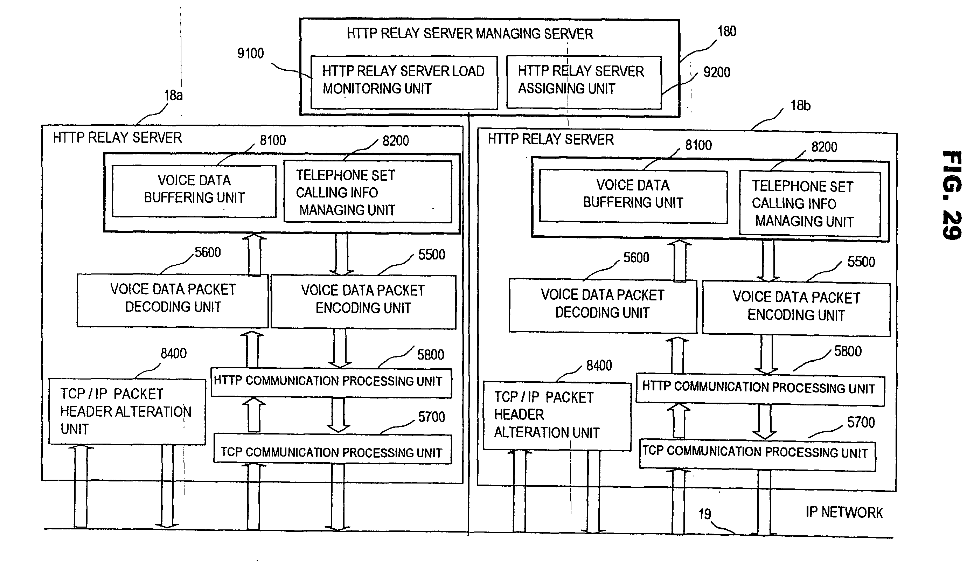

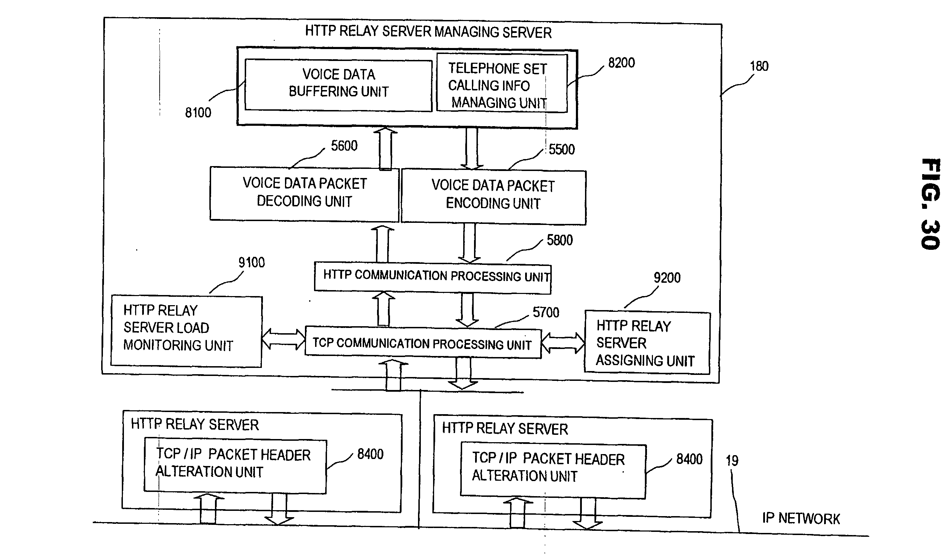

The drawings of Figs. 29 and 30 show the first and the second examples of various units of the HTTP_relay_server_managing_server of the internet telephone network system of the Embodiment 8.

Referring to Figs. 29 and 30, the reference numeral 9200 denotes a HTTP_relay_server_assigning_unit for monitoring the load situation of the plurality of HTTP relay servers. The reference numeral 9100 denotes a HTTP_relay_server_load_monitoring_unit for specifying the HTTP relay server used in the communication process based on the inquiry from the telephone equipment adapter.

In the first example of Fig. 29, a plurality of the HTTP relay servers 18 shown in Fig. 27 are prepared, and the HTTP_relay_server_managing_server for managing them is described. In the second example of Fig. 30, the HTTP relay server 18 extracts the processing units required in negotiating connection with the telephone equipment adapter. The processing units extracted is built into the HTTP_relay_server_managing_server 180. The HTTP_relay_server_managing_server 180 carries out the connection negotiation. In this case, after negotiating connection, the voice data transmission and reception processes are performed only in the TCP/IP_packet_header_alteration_unit 8400. Therefore, the HTTP relay server only builds in the TCP/IP_packet_header_alteration_unit 8400.

The operation is described next.

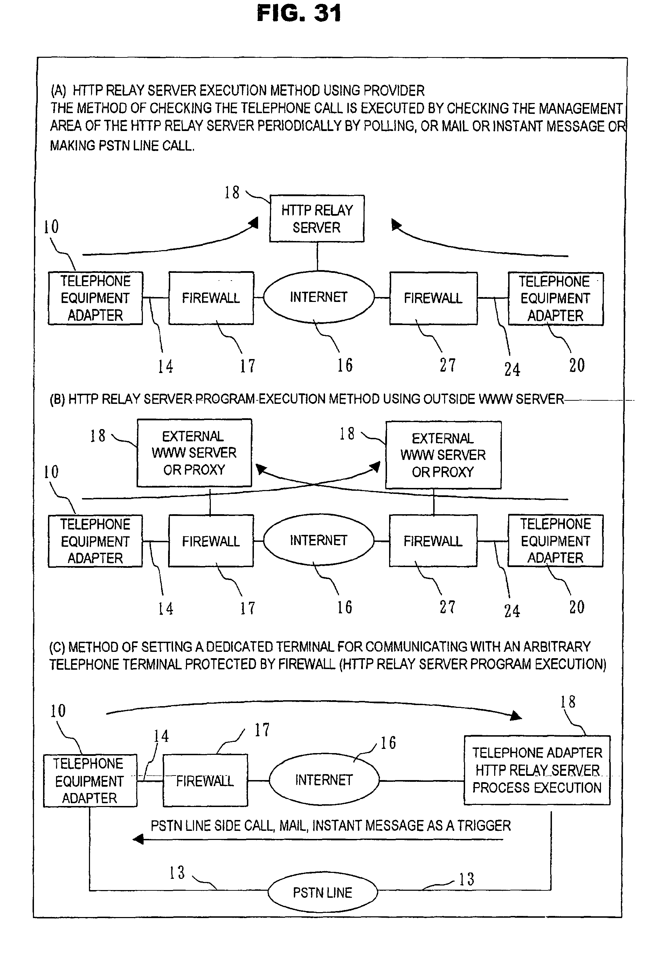

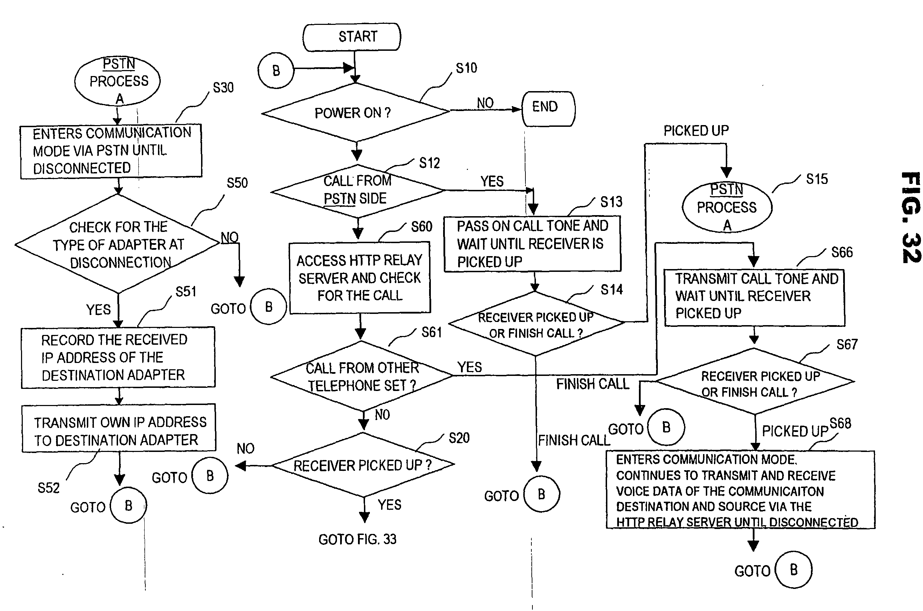

To begin with, the network configuration comprising the telephone equipment adapter and the HTTP relay server is shown in Fig. 31. The drawing of Fig. 31 (A) shows a method of executing the HTTP relay server by assuming it as a provider. There are two methods of checking if a telephone call is being made to the telephone set connected to the telephone equipment adapter. The method one is checking information stored in the telephone_set_calling_information_managing_unit 8200 by a periodic polling. The telephone_set_calling_information_managing_unit 8200 is a management area of the HTTP relay server 18. Alternatively, the method two includes checking from outside by mailing, by instant message, and by PSTN_call.

In the drawing of Fig. 31 (B), the telephone equipment adapters 12 and 22 are in the network environments protected by the firewalls 17 and 27. The-network-environment provided with external WWW server or proxy is protected by the same firewall. In such environment, the HTTP relay server program is executed in the external WWW server.

In the drawing of Fig. 31 (C), a telephone terminal that can communicate with a dedicated terminal (i.e., terminal executing the HTTP relay server program) is placed in the network environment protected by the firewall. The method of communication between the dedicated terminal and the telephone terminal is considered.

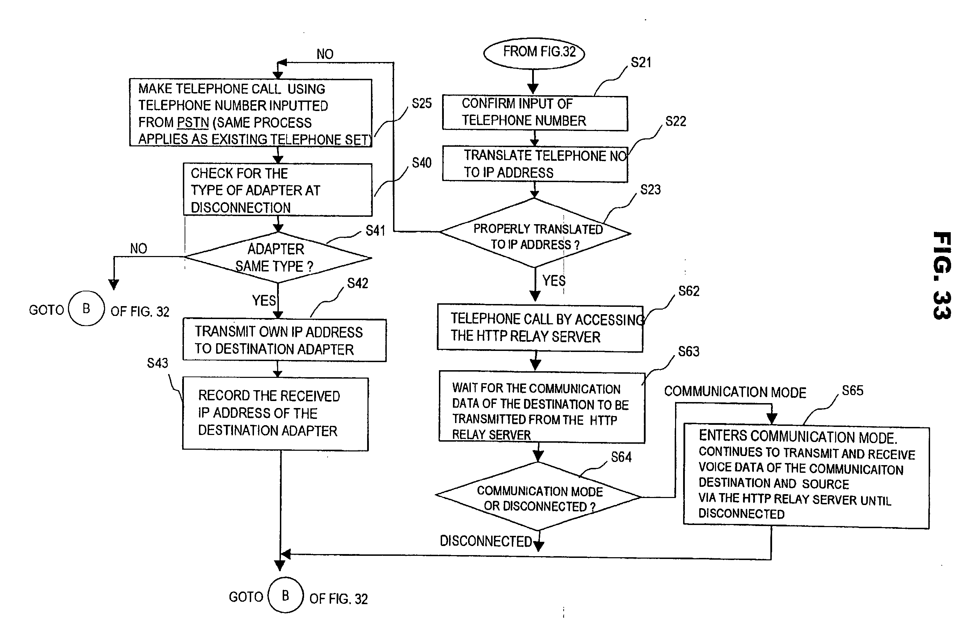

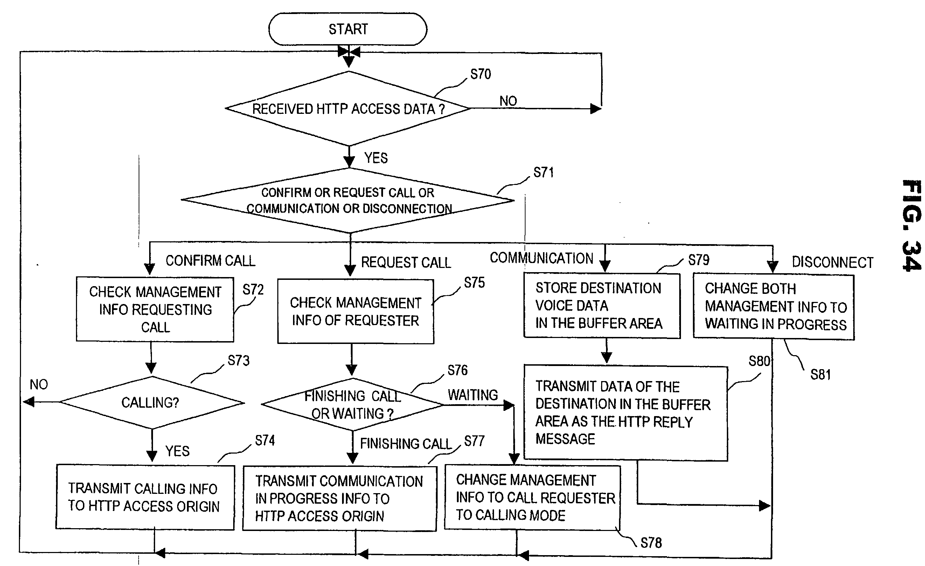

The present embodiment indicates three configuration (A), (B), and (C). The configuration (A) is described based on the flow charts of Figs. 32 and 33. The configuration (A) is the polling method of executing the HTTP relay server at the provider.

The procedure of making a telephone call from one telephone equipment adapter to the other telephone equipment adapter starts as follows. First of all, the user picks up the receiver of the telephone set calling side and inputs a telephone number. The telephone_number/IP_address_translation_unit 300 translates the inputted telephone number to the IP address. Refer to Embodiment 1 for the method of translating to the IP address.

(The Polling Method) In step S22 of Fig. 33, the telephone number is translated to IP address. If translated properly to IP address in step S23, then in step S62, the HTTP telephone call 7300 sets a flag information related to IP address trying to make a telephone call. The flag is set in the management area of each IP address of the telephone_set_calling_information_managing_unit 8200 inside the HTTP relay server 18. The management area of each IP address of the telephone_set_calling_information_managing_unit 8200 is periodically referred by the HTTP polling unit 7100 of the communication destination telephone equipment adapter. Such that the telephone equipment adapter connected to the destination telephone set will know that the telephone call is being received.

(Mail and Instant Messages) The telephone number translated to IP address is confirmed in step S23 of Fig. 33. Next, the telephone_call_communication_unit 7200 transmits a mail or instant message to the communication destination telephone equipment adapter, and notifies to the destination telephone set that the telephone call is received. The process of the mail or the instant message is not particularly illustrated in the flow charts of Figs. 32 and 33.

(Notified by telephone call via PSTN) The telephone number is translated to IP address properly in step S23 of Fig. 33. Next, the PSTN_line_signal_transmitting/receiving_unit 1100 makes a telephone call to the destination telephone set from the PSTN side. The telephone equipment adapter connected to the destination telephone set will know instantly that the telephone call is being received.

Then, the destination telephone equipment adapter transmits a call tone to a telephone set connected for commencing the communication (Step S66). If the receiver of the destination telephone set of the call receiving side is picked up in steps S63 and S67, then the communication mode is entered in step S64, and their respective telephone equipment adapters go and get the destination communication data. Depending on the requirement, the communication data spoken by them are transmitted to the HTTP relay server in steps S65 and S68. This continues on until disconnected. The unit where the communication data transmitted from the telephone equipment adapter is temporarily stored until the other telephone equipment adapter gets them is the voice data buffer. The voice_data_buffering_unit 8100 executes the transmission and reception process of the voice data of this communication. The steps S66, S67, and S68 of Fig. 32 are the procedure of receiving a telephone call, entering the communication mode, communication taking place, and continuing communication. The steps S62, S63, S64, and S65 are the procedure of making a telephone call to the destination telephone set, picking up the receiver of the destination telephone set is to enter the communication mode, and the communication goes on until disconnected. Two telephone sets communicating via the HTTP relay server is same for both cases of receiving a call and making a call. The communication data transmission and reception processes via the HTTP relay server by two telephone sets in the communication mode described above is equivalent to the process from step S66 to S68 of Fig. 32 and step S62 to S65 of Fig. 33.

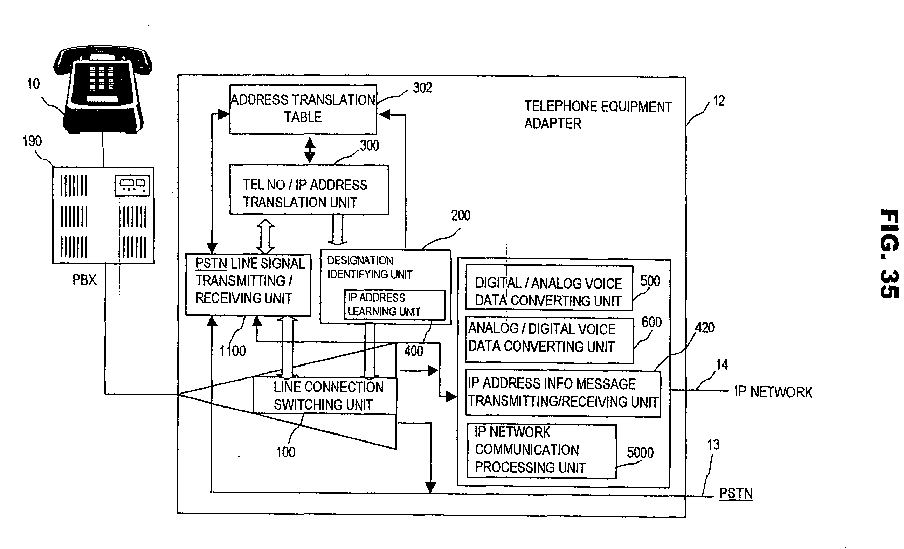

Next, a flow chart of Fig. 34 describes the polling method by using the HTTP relay server.

The HTTP relay server 18 only accepts HTTP access among from the outside access via the IP network. In step S70 of Fig. 34, the HTTP_communication_processing_unit 5800 confirms that the data is received by using HTTP access. The HTTP access exists just in the polling method for confirming if a telephone call is being made to itself from each telephone equipment adapter. Other than that, the following accesses exist: the access for making a new telephone call to other telephone set; the access for obtaining the voice data for itself; and the HTTP access for liaison disconnection communication. In step S71, when the HTTP access decides to make a new telephone call to other telephone set, then the telephone_set_calling_information_managing_unit 8200 accesses the communication destination management area, and checks if the telephone is in the communication in progress in step S75. If the telephone is in the communication in progress mode, then HTTP message indicating communication in progress is replied in step S76 and S77, if not, the HTTP message indicating that the telephone started to ring is replied in step S78. If the communication mode is entered, the voice data delivered from the telephone equipment adapter are temporarily accumulated in step S79. The voice_data_buffering_unit 8100 manages so that the other telephone equipment adapter collects them. If there are communication data in the destination voice data buffering area, then in step S80, the voice_data_buffering_unit 8100 and the HTTP_communication_processing_unit 5800 transmits that communication data as the HTTP reply message to the telephone equipment adapter connected to the communication destination telephone set. In addition to the process of step S71, if HTTP access for confirming whether or not the telephone call is being made to its telephone equipment adapter, the telephone_set_calling_information_managing_unit 8200 checks the management information if the telephone set is ringing connected to the telephone equipment adapter of the confirmation requesting origin in step S72. As a result of checking, if the telephone call is being made in step S73, then in step S74, the HTTP_communication_processing_unit 5800 transmits the information to the telephone equipment adapter connected to the telephone set of the confirmation requesting origin. In addition to the process of step S71, if decided as HTTP access for disconnecting the communication, then in step S81, the telephone_set_calling_information_managing_unit 8200 changes the information to indicate that both management information of communication origin and destination are in the waiting mode.

As described above, a typical firewall can access to the outside Internet by using HTTP, and the telephone equipment adapter can carry out the communication process and telephone call via the HTTP relay server, therefore, the telephone call is made via the IP network without having to modify the set up of the typical firewall.

The HTTP relay server carries out communication data transmission and reception after negotiating process of connecting to the first telephone equipment adapter. This process load is going to be a heavy one. Henceforth, the communication data transmission and reception are carried out directly between the telephone equipment adapters without bypassing the HTTP relay server. The load put on the HTTP relay server is reduced this way. Even if many users make telephone calls so that the process concentrates, the process continues and the communication quality is maintained. Due to this, the HTTP_connection_changing_unit 8300 negotiates the first connection and changes the connection from the HTTP and TCP connection to the connection between both adapters.

As described above, the communication data transmission and reception is carried out directly between the telephone equipment adapters without bypassing the HTTP relay server. This reduces the load put on the HTTP relay server. Even if the communication process concentrates due to many users making telephone calls, the process continues, and the communication quality is maintained.

In addition to the HTTP relay server described above, it also carries out communication data transmission and reception after negotiation process of connecting to the first telephone equipment adapter. This process load is going to be a heavy one. In order to reduce the load put on the HTTP relay server, the process performed by the HTTP relay server is limited down as much as possible by executing the simple processes only. This is executed by the TCP/IP_packet_header_alteration_unit 8400 for directly converting the port number of TCP header and IP address of IP header inside the transmitted voice data packet from both telephone equipment adapters to the HTTP relay server to the port number and IP address of the final transmission destination telephone equipment adapter, at a point when the communication process preparation is ready by connecting both telephone equipment adapters communicating by the HTTP relay server.

As described above, as the process on the HTTP relay server, the communication data transmission and reception are carried out by converting the port number of TCP header and IP address of IP header inside the transmitted voice data packet from both telephone equipment adapters to the HTTP relay server to the port number and IP address of the final transmission destination telephone equipment adapter. This can reduce the load put on the HTTP relay server. Even if the communication process concentrates due to many users making telephone calls, the process continues, and the communication quality is maintained.

On the other hand, in order to carry out an efficient communication process at the HTTP relay server, if a number of telephone equipment adapters requesting the communication process increased accompanied by the increased number of the users, since there is a performance limit in one HTTP relay server, it will fail at some point. Therefore, a plurality of HTTP relay servers is prepared. A favorable communication is maintained to various by dispersing the communication process of various telephone equipment adapters.

A HTTP_relay_server_managing_server for integrating and managing the plurality of HTTP relay servers is required. The relationship between the HTTP_relay_server_managing_server and the HTTP relay server is illustrated in the drawings of Figs. 29 and 30. A first telephone equipment adapter inquires the HTTP_relay_server_managing_server 180. The HTTP_relay_server_load_monitoring_unit 9100 for monitoring the load situation on the plurality of HTTP relay servers finds the HTTP relay server having a small number of users. The HTTP_relay_server_assigning_unit 9200 specifies the candidate HTTP relay server to be used for the communication process.

Accordingly, if the number of telephone sets connected to the telephone equipment adapter increases dramatically, the HTTP_relay_server_load_monitoring_unit 9100 prepares the plurality of HTTP relay servers, and monitors an appropriate number of HTTP relay server's load situation, and allocates the usable HTTP relay server. The communication process is dispersed, and the process load of the HTTP relay server is confined within it capacity, Therefore, even if many users make telephone calls so that communication process concentrate, the process continues and the communication quality is maintained.

The internet telephone network system of the Embodiment 8 comprises the HTTP relay server and the internet connection apparatus where the HTTP communication process is possible, which includes the followings: the TCP_communication_processing_unit 5700, the HTTP_communication_processing_unit 5800, the voice_data_packet_encoding_unit 5500, the voice_data_packet_decoding_unit 5600, the telephone_set_calling_information_managing_unit 8200, the voice_data_buffering_unit 8100. The internet connection apparatus is placed as an arbitrary terminal on the internet not protected by the firewall. The voice data received by HTTP access via the IP network from one of the telephone set connected to the telephone equipment adapter through the firewall that allows passage of HTTP data communication. The voice data transmission and reception process between two telephone sets protected by firewall is possible via the HTTP relay server.

In addition to that, the internet telephone network system of the Embodiment 8 comprises the HTTP telephone call 7300. If the telephone_number/IP_address_translation_unit 300 detects that the destination telephone equipment adapter is protected by the firewall, upon making a telephone call from a telephone set connected to the telephone equipment adapter via the Internet, in order to report that a telephone call is being made to the communication destination telephone equipment adapter, the HTTP telephone call 7300 transmits the telephone cal information by the HTTP access, and HTTP is accessed from the destination telephone equipment adapter which notifies that the telephone call is being made from arbitrary unit to the destination telephone equipment adapter. This way, the voice data on the HTTP relay server is received, and its reverse process which is transmission and reception process of the voice data is also possible.

In addition to that, according to the internet telephone network system of Embodiment 8, if the telephone_number/IP_address_translation_unit 300 detects that the destination telephone equipment adapter is protected by the firewall, upon making a telephone call from a telephone set connected to the telephone equipment adapter via the Internet, in order to report that a telephone call is being made to the communication destination telephone equipment adapter, the HTTP polling unit 7100 checks the communication situation of various telephone stored in the telephone_set_calling_information_managing_unit 8200. As a result of checking, the HTTP relay server is receiving a call at appropriate time interval. At this point, the telephone equipment adapter call receiving side can make a telephone call via the HTTP relay server made possible by the HTTP access.

In addition to that, according to the internet telephone network system of Embodiment 8, if the telephone_number/IP_address_translation_unit 300 detects that the destination telephone equipment adapter is protected by the firewall, upon making a telephone call from a telephone set connected to the telephone equipment adapter via the Internet, in order to report that a telephone call is being made to the communication destination telephone equipment adapter, the telephone_call_communication_unit 7200 transmits telephone cal using communication method such as mail message or instant message that passes through the firewall, so that the call receiving side telephone equipment adapter can make a telephone call via the HTTP relay server made possible by the HTTP access.

In addition to that, according to the internet telephone network system of Embodiment 8, if the telephone_number/IP_address_translation_unit 300 detects that the destination telephone equipment adapter is protected by the firewall, upon making a telephone call from a telephone set connected to the telephone equipment adapter via the Internet, in order to report that a telephone call is being made to the communication destination telephone equipment adapter, the PSTN_line_signal_transmitting/receiving_unit 1100 only transmits the telephone call information via a temporary PSTN line, and the call receiving side telephone equipment adapter can make a telephone call via the HTTP relay server made possible by the HTTP access.

In addition to that, the internet telephone network system of the Embodiment 8 comprises the HTTP_connection_changing_unit 8300. A telephone call is made from the telephone set connected to the telephone equipment adapter via the Internet. The communication process is ready both telephone equipment adapters are connected by the HTTP relay server. At this point, the HTTP_connection_changing_unit 8300 changes the HTTP connection between the both telephone equipment adapters and the HTTP relay server, and creates a HTTP connection directly between both telephone equipment adapters.

In addition to that, the internet telephone network system of the Embodiment 8 comprises the TCP/IP_packet_header_alteration_unit 8400. A telephone call is made from the telephone set connected to the telephone equipment adapter via the Internet. The communication process is ready when the HTTP relay server connects both telephone equipment adapters. At this point, the TCP/IP_packet_header_alteration_unit 8400 alters the IP address of IP header unit and a port number of the TCP header contained in the voice data packets transferred from both telephone equipment adapters to the HTTP relay server. They are altered to the IP address and port number of the final transmission destination of the telephone equipment adapter. The processing speed via the HTTP relay server for carrying out the voice data communication between both telephone equipment adapter is increased.

In addition to that, the internet telephone network system of the Embodiment 8 comprises the HTTP_relay_server_load_monitoring_unit 9100 and the HTTP_relay_server_assigning_unit 9200. When the number of telephone sets connected to the telephone equipment adapter for performing HTTP access to the HTTP relay server increases extremely, then the HTTP_relay_server_load_monitoring_unit 9100 monitors the load situation by preparing a plurality of HTTP relay server. This way, the HTTP relay server process load is contained within the limit of its performance. The HTTP_relay_server_assigning_unit 9200 specifies the HTTP relay server used in the communication process by inquiry from the first telephone equipment adapter.

### Embodiment 9

In the Embodiment 9, the telephone equipment adapters connected to the telephone sets mutually transmit their terminal names to one another upon disconnecting the communication.

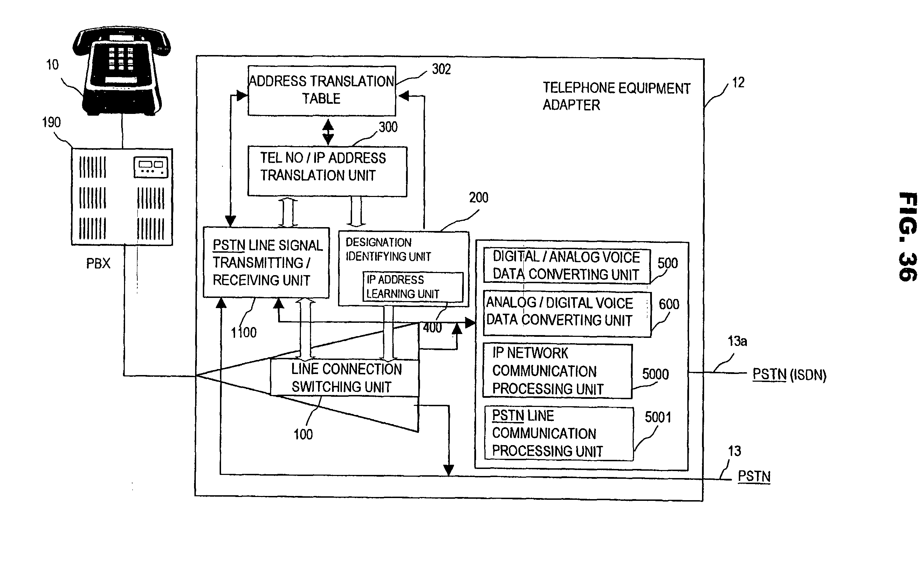

The drawing of Fig. 35 shows a configuration of the telephone equipment adapter of Embodiment 9.

Referring to Fig. 35, the reference numeral 420 denotes a IP_address_information_message_transmitting/receiving_unit for exchanging messages between the telephone equipment adapters by using SMTP protocol, regarding the IP address information. The IP_address_information_message_transmitting/receiving_unit 420 is also referred to as IP address information message processing unit. In addition to that, the PSTN_line_signal_transmitting/receiving_unit 1100 has a function to transmits the terminal name to the telephone equipment adapter connected to a telephone set. In addition to that, the address translation table is a table for storing the telephone number and terminal name by mapping.

In the recent years, inside the company, in order to cut down on the IP address, there are many cases in which the IP address is dynamically allocated to DHCP (which stands for Dynamic Host Configulation Protocol) server or router. In addition to that, in the dial up configuration, there are cases in which the IP addresses are allocated dynamically. In this case, in order to specify the destination telephone equipment adapter upon calling, the terminal name is used to recognize the telephone equipment adapter instead of the IP address.

By mutually transmitting and receiving the IP addresses to the communication destination by using the mail protocol by specifying the terminal name upon calling, it becomes possible to specify the IP address for the later communication process.

In the Embodiment 2, the IP address of the communication destination telephone equipment adapter connected to a telephone set is obtained upon disconnecting the communication by using the IP_address_learning_unit 400 which is included in the designation identifying unit 200. Its own IP address is notified to the destination telephone equipment adapter from its telephone equipment adapter. In the Embodiment 9, the terminal names attached to the telephone equipment adapters are mutually exchanged by the IP_address_information_message_transmitting/receiving_units 420 instead of exchanging the IP addresses upon disconnection. The received terminal name is mapped to the telephone number and stored in the address translation table 302. When making a telephone call to the destination telephone set after receiving the terminal name, since the IP address is being allocated and mapped to the terminal name, the telephone call can be made via the IP network.

The internet telephone network system of Embodiment 9, a telephone call is made to a telephone set connected to the telephone equipment adapter from another telephone set connected to the same kind of telephone equipment adapter by inputting a telephone number of conventional general PSTN line. The telephone call is made via the PSTN line, the IP_address_learning_units 400-mutually transmit the terminal names upon disconnection.
The address translation table 302 learns and stores the terminal name and telephone number of the typical conventional PSTN line. The IP_address_information_message_transmitting/receiving_unit 420 exchanges the IP address information message between the telephone equipment adapters by using protocol such as SMTP (which stands for Simple Mail Transfer Protocol). This way, the next telephone call is automatically made via the IP network.

### Embodiment 10

In the Embodiment 10, an another method of dynamic allocation of IP address of the telephone equipment adapter that is different from the Embodiment 9 is described.

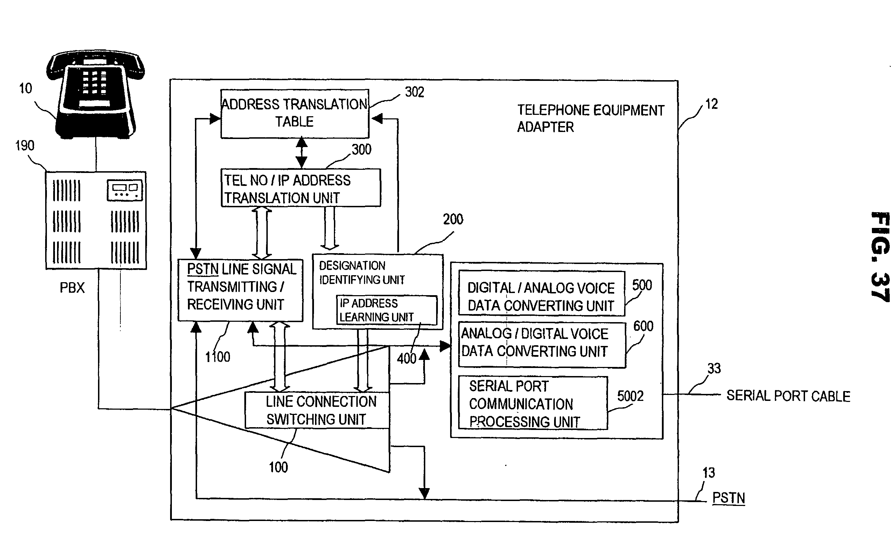

Fig. 36 shows a configuration drawing of various units in the telephone equipment adapter of Embodiment 10.

Referring to Fig. 36, the reference numeral 5001 denotes a PSTN_line_communication_processing_unit for performing communication process via the IP network on the dial up connection by using protocol such as PPP (which stands for Point-to-Point tunneling Protocol) via the PSTN line.

The PSTN_line_communication_processing_unit 5001 of Embodiment 9 makes a telephone call by replacing the process described in Embodiments 1 and 2 via the IP network with the communication process on the dial up connection.

The internet telephone network system of Embodiment 10 comprises the PSTN_line_communication_processing_unit 5001 for performing the communication process via the IP network on the dial up connection that uses protocol such as PPP via the PSTN line. A telephone call can be made to a telephone set connected to telephone equipment adapter by replacing the process via the IP network with the communication process on the dial up connection.

### Embodiment 11

In the Embodiment 11, the telephone equipment adapter for making a telephone call by replacing the process via the IP network with the communication process on the serial port connected to the terminal adapter.

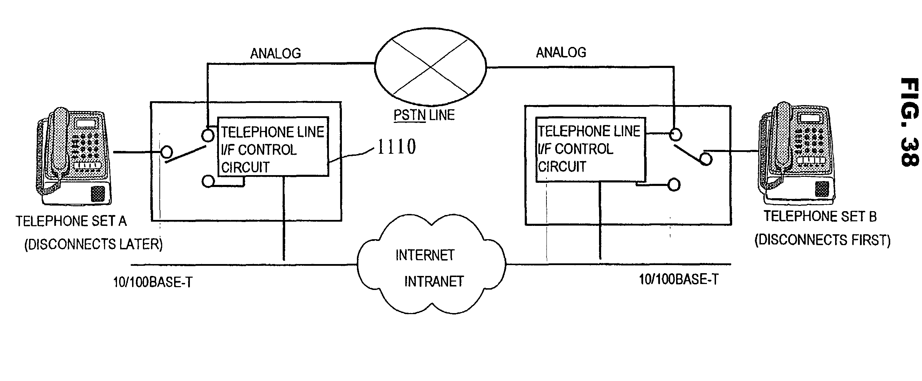

The drawing of Fig. 37 shows a configuration of various units in the telephone equipment adapter for the Embodiment 11.

Referring to Fig. 37, the reference numeral 5002 denotes a serial_port_communication_processing_unit for performing the communication process via the IP network on the dialup connection by protocol such as PPP via a typical PSTN line by connecting a typical terminal adapter to the serial port such as RS232C. The telephone equipment adapter 12 is connected to the serial port cable 33. Refer to Fig. 9 of Embodiment 2 for the description of other reference numerals.

The internet telephone network system of the Embodiment 11 comprises the serial_port_communication_processing_unit 5002 for performing the communication process via the IP network by connecting a typical terminal adapter which can perform dialup connection using protocol such as PPP via the PSTN line to the serial port such as RS232C. The process via the IP network is replaced with the communication process on the serial port connected to the terminal adapter.

### Embodiment 12

According to the previously described Embodiments 1, 2, 3, 4, 5, 6, 7, 8, 9, 10, and 11, the communication device such as telephone set outputs the communication information inputted to the telephone equipment adapter. However, the communication device is not limited to the telephone set only, but a personal computer or cellular phone may be adapted.

### Embodiment 13

As already described in the Embodiment 2, in both cases of making a telephone call and receiving a telephone call, the telephone equipment adapter learns the communication destination's IP address. It is most likely that the calling side will make the telephone call again to the same destination. However, if receiving a telephone call, the likelihood of making a telephone call to the calling side is not necessary high. Such examples includes a salesman making a telephone call or making a telephone call inquiring for a specific information. In these cases, the call receiving side does not make a call back to the call making side. If so many of such calls are being made, the entries of the address translation table 302 may be over-written due to storing the IP addresses of the undesired destination.

Henceforth, the address translation table of the telephone equipment adapter receiving many such calls is set so that the such undesired destination IP address is not learned.

Accordingly, the process method of not learning the IP address is adapted when receiving too many such telephone calls. However, it would be convenient for if the user if s/he can change the set up of this process method of not learning the IP address. The telephone equipment adapter is set so that the user can make selection of learning the destination IP address if received a telephone call. Using the previously described maintenance function does this. Alternatively, if the user is making a telephone call, the user can input an address learning prevention information by using the dial or push phone, which instructs not to learn the IP address. The address learning prevention information is input before or after inputting the telephone number. The address learning prevention information is previously set to the pre-determined dial or pre-determined push button telephone set. The PSTN_line_signal_transmitting/receiving_unit 1100 detects the address learning prevention information and notifies to the IP_address_learning_unit 400 not to learn the IP address. Accordingly, the IP address of the communication destination is not learned.

The Embodiment 2 described one example of the internet telephone network systems comprising the PSTN_line_signal_processing_unit for learning address information from both call making side and call receiving side. The Embodiment 13 describes one example of the internet telephone network systems comprising the PSTN_line_signal_processing_unit for not learning address information of the call making side at the call receiving side.

In addition to that, it is also possible to construct the internet telephone network system where a mode set up in the PSTN_line_signal_processing_unit is possible by enabling the user to select two modes. Mode one is to carry out the learning process of the IP address learning unit for learning the address information of the call making side and call receiving side. Mode two is to not carry out the learning process of the IP address learning unit for learning address information of communication of the call making side at the call receiving side.

### Embodiment 14

In the Embodiment 14, the system of mutually exchanging the IP address after finishing the communication as in the Embodiment 2 is further described in detail.

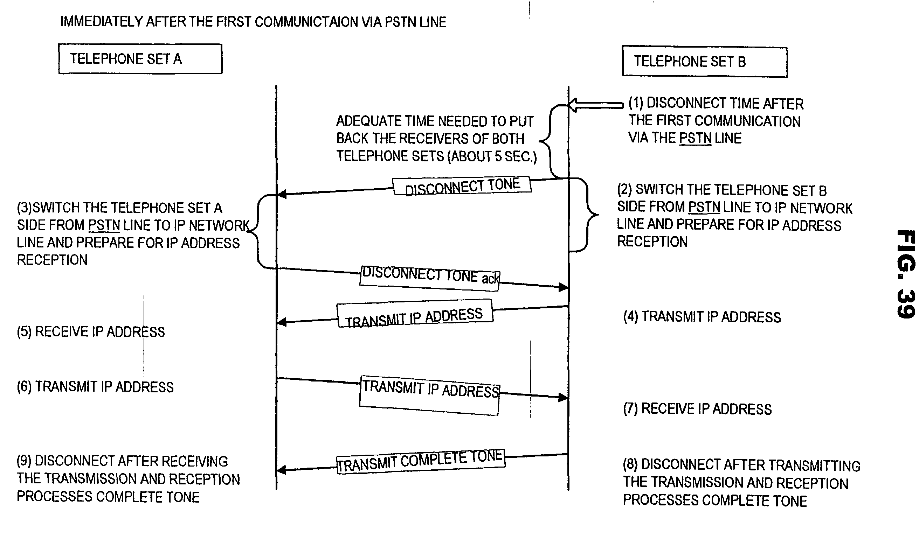

The drawing of Fig. 38 outlines a configuration of two users communicating by using telephone sets and telephone equipment adapters of the present embodiment.

Referring to Fig. 38, the reference numeral 1110 denotes a telephone_line_interface_control_circuit, which tentatively combines the PSTN_line_signal_transmitting/receiving_unit 1100, the line_connection_switching_unit 100, and the designation identifying unit 200.

After finishing the communication, a user puts the receiver back to the telephone set after an appropriate time elapses. This receiver's situation is in general called on-hook. In contrast to that, a situation of the receiver being picked up is called off-hook. If the on-hook situation is transmitted to the exchanger of the PSTN_line as it is, the exchanger disconnects the communication line so that the IP address information cannot be exchanged. The PSTN_line_signal_transmitting/receiving_unit 1100 of the telephone equipment adapter detects the on-hook situation of the telephone set, and the telephone_line_interface_control_circuit 1110 switches the PSTN circuit for indicating that the of-hook situation of the telephone set is indicated. In other words, the telephone set itself at this point is separate from the PSTN line, and the telephone equipment adapter is directly connected to the PSTN line instead of the telephone set.

Accordingly, even after the user puts the receiver back to finish the communication, the connection is held on for transmitting and receiving the IP address information.

This fact is described in one example of the internet telephone network systems. Immediately after two users finish the communication and on-hook the receivers, the PSTN_line_communication_processing_unit maintains the connection on the PSTN line and transmits an address information corresponding to the identification information. The address information of the telephone set of the communication information transmitting side is transmitted to the destination of transmitting the communication information telephone set via the PSTN line.

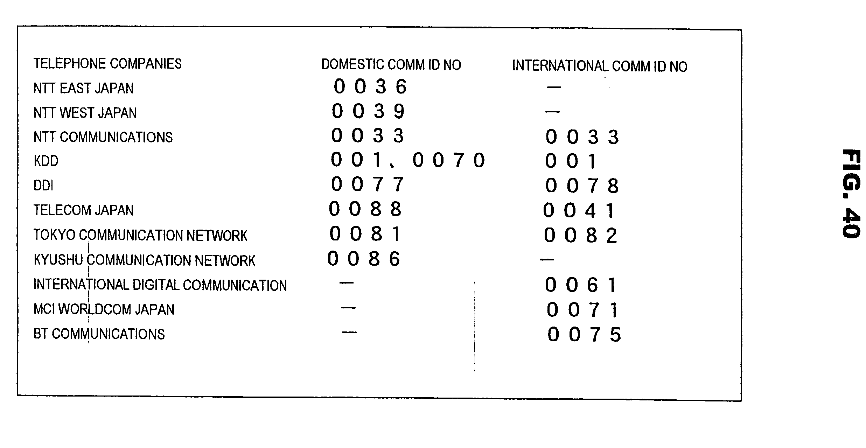

The drawing of Fig. 39 shows one example of sequential procedure of transmitting and receiving the IP address information. In this example, a telephone set A makes a call to a telephone set B. The sequence is indicated from (1) to (9). The telephone set B which receives a call transmits a disconnect tone which is going to be an indicator for a start of the first process (1). At a point of transmitting the disconnect tone which is the first indicator, the users at both telephone sets must on-hook the receiver. After finishing communication, a sufficient amount of time needed to put the receiver back by the user, for example, wait for about 5 seconds and then the first disconnect tone is transmitted. By doing so, the transmitting and receiving of the IP address will be successful mostly. If the disconnect tone is transmitted while the telephone set A is still in on-hook situation, the process will fail, therefore, the IP address is transmitted and received from the next call onwards.

This fact is described in one example of the internet telephone network systems. Immediately after one of the users finishes the communication and on-hook the receiver, the PSTN_line_communication_processing_unit maintains the connection on the PSTN line after waiting for a sufficient amount of time needed to on-hook the receiver by the other user, and transmits an address information corresponding to the identification information of the telephone set from the communication information transmitting side to the destination of transmitting the communication-information via the PSTN line.

In addition to that, after finishing communication, a busy tone (which is a tone indicating communication in progress mode) is transmitted to the communication destination telephone set from the telephone equipment adapter connected to it when the telephone set is on-hooked. This is done so that the on-hook operation of the receiver will be in time for the start of the IP address transmission and reception process after finishing communication. The users in general are accustomed to putting back the receiver if s/he hears a busy tone rather than not hearing any sound at all. Alternatively, it may be effective to use a high note alarm tone instead of the busy tone.

This fact is described in one example of the internet telephone network systems. Immediately after two users on-hook the receiver to finish the communication, the PSTN_line_communication_processing_unit transmit a tone such as a busy tone from the telephone equipment adapter of the other user to the telephone set, so that the other user still hanging onto the receiver will know that the communication is finished and on-hooks the receiver.

In addition to that, while the IP address transmission and reception process are in progress, immediate use of the telephone set straight after finishing the communication is not possible. As the telephone equipment adapter process, if the IP address transmission and reception process starts, the connection is not switched to the PSTN line to the telephone set side until the process completely finishes. In order to notify the user of such situation, the user is notified by using a busy tone to alarm them that the communication cannot be used while the IP address transmission and reception processes are in progress. If the off-hook operation of the receiver of the telephone set is detected during the IP address transmission and reception process, the busy tone is transmitted to the telephone set side. As described before, a high note alarm tone may be transmitted instead of the busy tone.

This fact is described in one example of the internet telephone network systems. Immediately after one of the users finishes the communication and on-hook the receiver, the PSTN_line_communication_processing_unit maintains the connection on the PSTN line, and while an IP address corresponding to the identification information of the telephone set is transmitted from the communication information transmitting side to the destination for transmitting the communication information via the PSTN line, if either one of the users off-hooks the receiver again to use the telephone set, this user is alarmed that the transmission process is still in progress that the telephone cannot be used yet. Transmitting a busy tone from the telephone equipment adapter of the user to the telephone set alarms the user.

In the above example, the telephone cannot be used while the IP address transmission and reception processes are in progress. However, the telephone equipment adapter is capable of accepting the telephone number input from the telephone set. Instead of sending the busy tone, the telephone number input is accepted in a normal manner, and the telephone identification information of the telephone number is stored, and after finishing the IP address transmission and reception process, the telephone call is made as usual. Since the IP address transmission and reception process does not take too much time, and it is very likely that the process would be complete while the user is inputting the telephone number. By doing so, the user can make another telephone call immediately after finishing the communication, without having to wait for the completion of the IP address transmission and reception process.

This fact is described in one example of the internet telephone network systems. Immediately after one of the users finishes the communication and on-hook the receiver, the PSTN_line_communication_processing_unit maintains the connection on the PSTN line, and while an IP address corresponding to the identification information of the telephone set is transmitted from the communication information transmitting side to the destination for transmitting the communication information via the PSTN line, if either one of the users off-hooks the receiver again to use the telephone set, the identification information of the destination telephone set input by the user is accepted and stored, and after the completion of the IP address transmission and reception process, the communication process using the inputted identification information starts.

The registration process of registering the IP address to the IP address table is so far described. Next, we shall describe the method of erasing the registered destination IP address to suit the convenience of the users. We have already discussed the necessity of not registering the destination IP address in the Embodiment 13. Under these circumstances, set up is made so that the IP address is not registered autonomously. After a specific communication, if a user thinks that future communication with this destination is not likely, such as a claim call, a wrong numbered call, an inquiry call, or a questionnaire call etc, then immediately after the communication, the IP address registration is cancelled. In order to implement this function, after the IP address transmission and reception processes, the user picks up the receiver, and inputs a number indicating the registration erasing function along with a specific symbols such as sharp "#" and asterisk "*" (erase instruction information). Based on this operation, the PSTN_line_signal_transmitting/receiving_unit 1100 inside the telephone equipment adapter erases the IP address entry that is just stored via the telephone_number/IP_address_translation_unit 300. The user can erase the unnecessary destination IP address registration accordingly.

This fact is described in one example of the internet telephone network systems. After finishing communication by the user, the PSTN_line_communication_processing_unit can erase the IP address information registration of the destination telephone set acquired from the IP address learning unit in such cases as an apparent wrong telephone number call.

### Embodiment 15

In the previously described Embodiment 2, an input of telephone number is confirmed as shown in step S21 of Fig. 4. In the Embodiment 15, the content of that process shall be described in detail.

The telephone number is an identification information of the telephone set. There are various digits available in the telephone number. There are several different ways as to decide whether the input of telephone number by user is finished or not. Basically, an appropriate time interval between inputting one digit of the telephone number and the next digit one would be, for example, 0.3 seconds. It is very unlikely that this time interval to exceed 5 seconds. Therefore, if there is no more input operation taking place from the user after a certain set up time exceeded, then the input of the telephone number by the user is determined as finished. This time interval depends on the habit of the user's telephone number inputting operation; therefore, the user ideally sets up an appropriate time interval.

This fact is described in one example of the internet telephone network systems. The PSTN_line_communication_processing_unit detects the situation of no input of word by word successive information after a specific time elapse and decides that the input of identification number by the user from the destination telephone set is finished.

In the above example, the waiting time until the input is finished is set to 5 seconds. Some users may not like this waiting time. Henceforth, such users may adapt a method of inputting a pre-determined information after finishing the input of the last digit of the telephone number for notifying the input completion to the telephone equipment adapter. The pre-determined information is configured by words such as sharp "#" and asterisk "*". This is input as finishing information. Of course, together with the method of inputting the finishing information, an automatic decision after set time is also possible. On the other hand, as for the internal telephone inside a company where the digit size of telephone number is fixed to 4 digits, the completion of telephone number input is automatically decided by inputting "9" before inputting the telephone-number which notifies that it is internal telephone number.

This fact is also described in one example of the internet telephone network systems. The PSTN_line_communication_processing_unit detects the situation of no input of word by word successive information after a specific time elapse and decides that detecting the specific word input last finishes the input of identification number of the destination telephone set.

Further, in regard to the telephone numbering system, the communication enterprise information is determined for each communication enterprise (telephone service company). Such communication enterprise information (for example, 090 for cellular phones) input can be used to implement the method of confirming the following telephone number digits (that is, the size of the telephone number).

This fact is described in one example of the internet telephone network systems. The user inputs the identification information of the destination telephone set. The PSTN_line_communication_processing_unit decides the input completion and confirms the input of the upper identification information (communication enterprise information) for specifying the telephone company. The digit number (size) of the identification information is determined based on the upper identification information of the numbering system of various telephone companies. By counting the number of words being inputted, the completion of input is detected.

Hereinbelow, the upper identification number for various telephone companies is described. The company name of the telephone company is abbreviated.

### · upper identification information

In using the communication enterprise other than NTT from the NTT subscribed telephone, the first 3 to 4 digits is dialed. After the spring of 2001, the "telephone priority connection system" is endorsed. This is a communication without having to dial the 3 to 4 digits identification number by previously registering the communication enterprise for the everyday use. Accompanied by the reorganization of the NTT, both NTT East Japan and NTT West Japan were granted with this identification number from the Ministry of Posts and Telecommunication in August 1999.

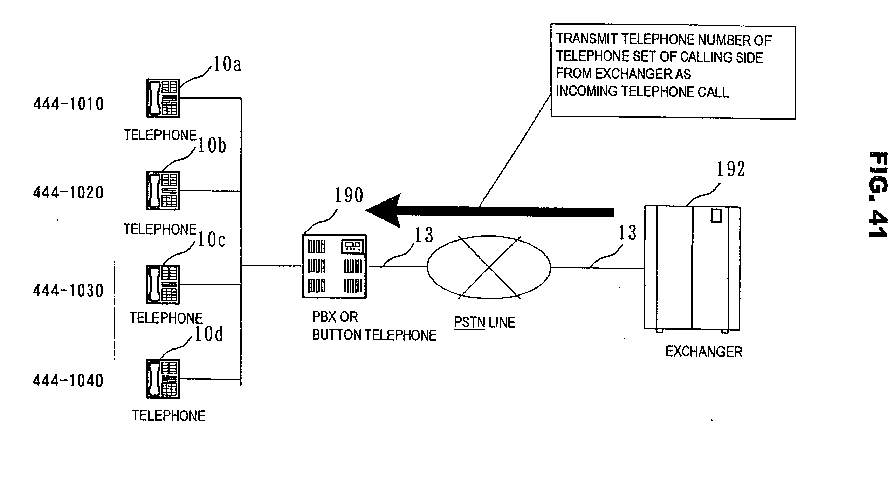

The drawing of Fig. 40 shows the upper identification information for various telephone services companies (communication enterprises). However, the names of telephone service companies (communication enterprise) mentioned in Fig. 40 are abbreviated.

On the other hand, after step S21 of Fig. 4 for the Embodiment 4, according to the inputted telephone number, the address translation table is being referred in step S22. This referring process may be executed after completing the input of all the telephone number information. Alternatively, the referring process can take the method of narrowing down the candidates of the IP address table entries digit by digit every time one digit of the telephone number is input from the top.

This fact is described in one example of the internet telephone network systems. Every time 1 word of the identification information is input from the destination telephone set after having determined the completion of input from the telephone set, the designation identifying unit maintains the translating process by the address translation unit.

As described previously, when the IP address table entries are being searched for 1 digit input of the telephone number, even before commencing the entry searching by using all the digits, there are cases when only 1 address information candidate is remaining. Under such circumstances, when come to a point of no more address information candidate available, the IP address translation process finishes. This way, the process is implemented rapidly.

This fact is described in one example of the internet telephone network systems. Every time 1 word of the identification information is input from the destination telephone set after having determined the completion of input from the telephone set, the designation identifying unit restricts those address information candidates that have possibility of translating by the translation process of the address translation unit. When the selection is narrow down to 1, that address information candidate is adapted as a final translated result without waiting for input of the whole identification information.

In addition to that, in confirming the telephone number per 1 digit by 1 digit entry, if the configuration is structured in such a way that the IP address table entry candidate cannot narrow down, then the whole digits of telephone number is used for the search. The intermediate situation of both cases, for example, if 8 digits telephone number is input; the IP address table entry is searched. This is based on the assumption that a search process may be a successful if 8 digits search result match, in advance reading search. There is much suitable number of digits for advance reading other than 8 digits. If making many internal calls using 4 digits internal telephone number, the search process is executed once after 4-digit input. In total, a rapid determining process is implemented. In addition to that, the advance reading of the search process, if a plurality of candidates is remaining, search is executed to the telephone number added again; an accurate search process is implemented.

This fact is described in one example of the internet telephone network systems. Every time 1 word of the identification information is input from the destination telephone set after having determined the completion of input from the-telephone set, the designation identifying unit restricts those address information candidates that have possibility of translating by the translation process of the address translation unit. When the selection is narrow down to 1 after the identification information is input by a specific number of digits, that address information candidate is adapted as a final translated result without waiting for input of the whole identification information.

### Embodiment 16

In this embodiment, the process when the telephone equipment adapter is connected to the communication device managing device such as PBX or button type telephone device is described in detail.

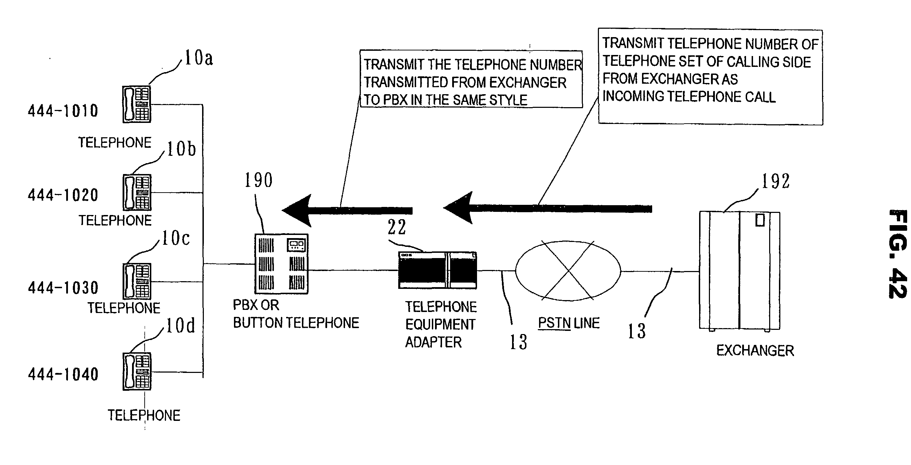

The drawing of Fig. 41 shows a plurality of telephone line connections in use by using a typical PBX or button type telephone device. When making a telephone call from a communication device (i.e., telephone set) to an outside area beyond the PBX 190, the communication process is no different from the case of direct connection of the pre-existing telephone set. The telephone number information inputted to the telephone set upon making a call is transmitted to the exchanger of the telephone center, and the exchanger creates a connection to the communication destination. On the other hand, as in Fig. 41, if a telephone call is made from a telephone set outside of the PBX 190, there is a need for selecting a specific telephone set inside the PBX. Therefore, an exchanger 192 must transmits a lower digit information of the telephone number for identifying a plurality of telephone sets 10a, 10b, 10c, and 10d that are supported by the PBX. The transmission and reception method of information between the PBX 190 and the exchanger 192 is pre-arranged by the telephone company.

The drawing of Fig. 42 shows a plurality of telephone line connection in use by using a telephone managing device connected to the telephone equipment adapter.

In order for the telephone equipment adapter 22 to support the connection configuration with the telephone managing device such as PBX and button type telephone, if a telephone set from outside of the PBX 190 is making a call. Then the lower digit information of the telephone number received from the exchanger 192 must be transmitted to the telephone managing device. This is being performed by the actual telephone managing device. The transmission and reception method between the telephone equipment adapter 22 and the telephone managing device of PBX 190 is identical to the method adapted between the exchanger 192 and the PBX 190. In regard to the transmission and reception method of the lower digit information of this telephone number, various telephone companies disclose the detailed procedures.

This fact is described in one example of the internet telephone network systems. When the telephone managing device such as PBX or button type telephone is connected in between the telephone sets, and if the telephone equipment adapter makes a telephone call via the IP network or the PSTN line, the PSTN_line_communication_processing_unit of the telephone equipment adapter transmits an identification information for identifying a specific telephone set among from the plurality of telephone sets connected to the telephone managing device. This way, the telephone set for communication is specified.

In addition to the transmission and reception processes taking place between an exchanger of the telephone company and a typical telephone set, in order to provide a special service using the device such as PBX, the transmission and reception processes are also available for implementing that service. Other than the support service by the PBX, there is a service related to the number display. This function displays the communication destination's telephone number to the display unit of the its own telephone set. The telephone number information is transmitted and received between the exchanger and the telephone set. Basically, the exchanger transmits the telephone number information to a telephone set of the call receiving side. In order to implement this concept to the internet telephone network system of the present invention, the telephone equipment adapter temporarily connected to the telephone set call receiving side accumulates the telephone number information transmitted from the exchanger, and transmits that telephone number information to the telephone set in the similar manner as the transmission and reception method to the exchanger.

This fact is described in one example of the internet telephone network systems. When the telephone equipment adapter has an arrangement for the number display function in regard to the communication service on the PSTN line, then the PSTN_line_communication_processing_unit transmits the identification information for identifying the communication destination telephone set if a call is being made from the telephone equipment adapter via the IP network or the PSTN line. By doing so, the identification number of the communication destination is displayed in the display unit of the telephone equipment adapter.

The service described above is a service of the exchanger on the PSTN line. In order to support and implement the same function also on the IP network, the telephone equipment adapter of the calling side can transmit its telephone number information to the telephone equipment adapter of the call receiving side.

This fact is described in one example of the internet telephone network systems. When the telephone equipment adapter has an arrangement for the number display function in regard to the communication service on the PSTN line, then the PSTN_line_communication_processing_unit transmits the identification information for identifying the communication destination telephone set if a call is being made from the telephone equipment adapter via the IP network. By doing so, the identification number of the communication destination is displayed in the display unit of the telephone equipment adapter.

In addition to that, in regard to the number display function, by inputting a special number digits at the head of the telephone number (non-notification information such as 184), the transmission of the telephone number information to the communication destination can be refused. The telephone equipment adapter of the call making side via the PSTN line need only input the telephone number including the special number digit to the exchanger as it is such that a special communication process is unnecessary. The call receiving side of the telephone equipment adapter must mediate the refusal communication process requiring the telephone number information between the exchanger and the telephone set. In addition to that, when making a call via the IP network, when the special number digit input is confirmed, the telephone number information is not transmitted to the telephone equipment adapter of call receiving side. In addition to that, the telephone equipment adapter of call receiving side must refuse the transmission of the telephone number information to the telephone equipment adapter in the similar manner as the communication process of the exchanger.

This fact is described in one example of the internet telephone network systems. When the telephone equipment adapter has an arrangement for the number display function in regard to the communication service on the PSTN line, then the PSTN_line_communication_processing_unit transmits the identification information for identifying the communication destination telephone set if a call is being made from the telephone equipment adapter via the IP network. If it did not attach the number digit for refusing the notification of the telephone number, by not transmitting it to the communication destination telephone equipment adapter, able to control the display of identification number of own telephone set to the display unit of the destination telephone equipment adapter.

As regard to the services of the number display function, communication process method procedures between the exchanger of telephone company and the telephone are disclosed. In accordance to that procedure, the number display function is implemented to the telephone equipment adapter.

### Embodiment 17

According to the maintenance-set up function described in the Embodiment 4, the user can set up a particular control information to the configuration data storing unit. If there is an error in that set up, the telephone equipment adapter cannot operate properly. For example, if a net mask or the IP address of the telephone equipment adapter is wrong, then all the processes of accessing to the IP network will fail. Therefore, if an apparent error in the set up value for executing the process of telephone equipment adapter is detected, the user is notified of the error in that set up value. Example of the notification includes: displaying of alarm display lamp or display screen to the telephone equipment adapter; and transmitting an alarm tone indicating error in the set up when the user picks up the receiver upon using the communication device connected.

This fact is described in one example of the internet telephone network systems. When a user sets up the telephone equipment adapter by using the IP_network_data_reading/writing_unit or the telephone_input_data_writing_unit, and if an error is detected in that set up upon executing the whole communication processes so that the communication process cannot be executed properly, then the IP_network_communication_processing_unit or the PSTN_line_communication_processing_unit display alarm to the display unit of the telephone equipment adapter or transmit an alarm noise to the connected telephone set, and guides the user to correct the mistake in that set up.

In the internet telephone network system described above, a wrong set up of the IP address is given as an example. However, as regard to the IP network access, the user is alarmed in the similar manner if the IP network access is not executed due to other causes such as a failure in the connected router or cut-off in the IP network.

In the internet telephone network system described above, when a user sets up the telephone equipment adapter by using the IP_network_data_reading/writing_unit or the telephone_input_data_writing_unit, and if an error is detected in that set up upon executing the whole communication process but still the communication procesess are executed, but if the IP network or the PSTN line connected to the telephone equipment adapter is cut-off or the IP network device is broken or not operating, then the IP_network_communication_processing_unit or the PSTN_line_communication_processing_unit display alarm to the display unit of the telephone equipment adapter or transmit an alarm noise to the connected telephone set, and notifies the user of the abnormality in the peripheral devices.

Henceforth, in regard to the alarm function described above, if the broken router is restored, or if the IP network which was being cut-off is restored, a normal IP network access is re-started, therefore, by stopping the conventional alarm process and starting the normal process, the user does not have to go through the trouble of releasing the alarm function.

In the internet telephone network system described above, when a user the set telephone equipment adapter by using the IP_network_data_reading/writing_unit or the telephone_input_data_writing_unit, and if an error is detected in that set up upon executing the whole communication processes but still the communication process is executed, but if the IP network or the PSTN line connected to the telephone equipment adapter is cut-off or the IP network device is broken or not operating. If able to get out of that situation by the restoration process of peripheral devices, the user is notified of the restoration of abnormality in the peripheral devices by not transmitting the alarm noise to the connected telephone set or by stopping the alarm display by the display unit of the telephone equipment adapter.

### Embodiment 18

In the previously described Embodiment 8, the POST message is described as a message to transmit the voice data to the HTTP relay server. Other than the POST message, others message such as GET and PUT messages may be used. However, the GET message must be incorporated into the field known as URL, therefore, it basically has a limit in the data size. The POST and PUT messages can carry the main data body as well as the various fields called headers, therefore, they basically have no limit in the data size. Exception is the restriction in the implementation of HTTP proxy.

In addition to that, in obtaining the voice data using the GET message from the HTTP relay server, the sliced voice data can repeatedly be obtained by issuing the GET message. Alternatively, the GET message obtains the second size data which is sufficiently larger than the first size voice data of communication time. The GET message only has to be issued once to obtain the voice data. At this point, it is possible to obtain the first size sliced voice data repeatedly.

According to the HTTP method, the transmission and reception processes of the message are executed after the client side and the server side is connected. Basically, generation of this connection takes time, therefore, once the connection is established, in order to improve the performance of the voice data transmission and reception processes in real time, it would be ideal to keep that connection as much as possible. However, in most of the cases, there are network node such as HTTP proxy existing in between the client side and the server side, therefore, depending on the relay situation, the connection may be disconnected without concerning the conveniences of the client side and the server side. Under such circumstances, establishing a new connection restarts the voice data transmission and reception processes.

In addition to the HTTP method, the communication on the IP network using the TCP is being conducted at the telephone equipment adapter and the HTTP relay server. The TCP is a connection type communication protocol. The connection must be established before transmitting and receiving data. When using the communication process by this TCP, for some reason on the IP network, if a data is still held for a long period of time, or if the connection is disconnected, the program process is stopped. The following measures are taken to avoid the system hangout. A certain timeout value is set to all the data transmission and reception processes. If there is no response from the communication destination and if the timeout value is exceeded during the reply waiting process from the destination, then the connection is newly established. The IP network access process is re-started from the beginning.

This is described in one example of the internet telephone network systems. The telephone equipment adapter connects to the HTTP communication processing unit of the relay server for transmitting the voice data packet. After connection, the voice data is stored in the GET, POST, PUT messages in the encode format for transmission. The GET, POST, PUT messages are prescribed by the HTTP.

This is also described in one example of the internet telephone network systems. The telephone equipment adapter connects to the HTTP communication processing unit of the relay server for receiving the voice data packet. After connection, the voice data is stored in the GET method reply message in the encode format for reception. The GET method message is prescribed by the HTTP.

This is also described in one example of the internet telephone network systems. The telephone equipment adapter connects to the HTTP communication processing unit of the relay server for receiving the voice data packet. After connection, data size larger than the size of voice transmission reception data such as in telephone conversation is obtained by the GET method message prescribed by HTTP, and the voice data is stored in the reply message data itself in an encode format. Every time the voice data is generated, that voice data is continuously received as segments.

This is also described in one example of the internet telephone network systems. The telephone equipment adapter connects to the HTTP communication processing unit of the relay server for transmitting and receiving the voice data packet. After connection, various method messages or their reply messages are transmitted and received, and after having done that the connection is not immediately disconnected but the connection is maintained to transmit and receive various method messages or their reply messages.

This is also described in one example of the internet telephone network systems. The telephone equipment adapter connects to the HTTP communication processing unit of the relay server for transmitting and receiving the voice data packet. After connection, while the various method messages and their replay messages are being transmitted and received, or immediately after being transmitted and received, if the connection is disconnected for one reason or the other, the connection is re-established, and the new connection is maintained to transmit and receive various method messages or their reply messages.

This is also described in one example of the internet telephone network systems. The telephone equipment adapter connects to the HTTP communication processing unit of the relay server for transmitting and receiving the voice data packet. After connection, while the various method messages and their replay messages are being transmitted and received, or immediately after being transmitted and received, if no response of the HTTP or TCP transmission and reception processes after a certain period of set time is elapsed, the connection is disconnected, and then re-connected, and the new connection is maintained to transmit and receive various method messages and their reply messages.

### Embodiment 19

According to the previously described Embodiment 8, the telephone_set_calling_information_managing_unit 8200 accesses the management area of the communication destination, and checks whether it is in the communication mode or not in step S75 (refer to Fig. 34). In the Embodiment 19, an identifier which is the communication connection identification information is given to the communication itself, (hereinafter the identifier shall be referred to as session ID), upon making a telephone call by using HTTP method, at a point of inquiring whether or not the telephone call can be made to the HTTP relay server, when the telephone call can be made, the HTTP relay server attaches the session ID to the communication, and confirms that the telephone call can be made. Basically, the session ID is created by the counter incrementally.

Based on this session ID, the HTTP relay server manages information related to the communication. The telephone equipment adapter of the user side obtains this session ID as a communication approval. This way, the voice data transmitted and received to the HTTP relay server is distinguished from the other communication while referring to the session ID. In the HTTP relay server, the following log information are recorded and managed: the session ID, the information related to communication such as identification information of communication device of both sides, the IP address information, duration of communication, communication starting time, and communication finishing time. Accounting is taken care of based on these management informations.

This is described in one example of the internet telephone network systems. The relay server manages a session information that is a collection of address information of the telephone equipment adapters of both users as a communication connection identification information. The communication connection identification information is stored inside the voice data packet and is transmitted via the IP network.

This is also described in one example of the internet telephone network systems. The relay server manages session information that is a collection of address information of the telephone equipment adapters of both users as a communication connection identification information. Every time the communication takes place between the users, the communication duration, and the amount of communication packets are memorized and extracted as log information.

### Embodiment 20

The Embodiment 20 describes the telephone equipment adapter having a process method of notifying the communication in progress mode to a third individual while the communication is taking place using the three methods of the communication via the PSTN line, the communication using UDP via the IP network, and the communication using HTTP via the IP network. The third individual is making a call using other method.

We have already explained the communication process where the three methods of PSTN line, UDP and HTTP coexists in the Embodiment 6. In addition to that, the procedure of making a telephone call using the method of HTTP is described in the Embodiment 8. In the Embodiment 20, as the procedure of making this telephone call, the telephone calling method using SMTP mail (which stands for Simple Mail Transfer Protocol) is described.

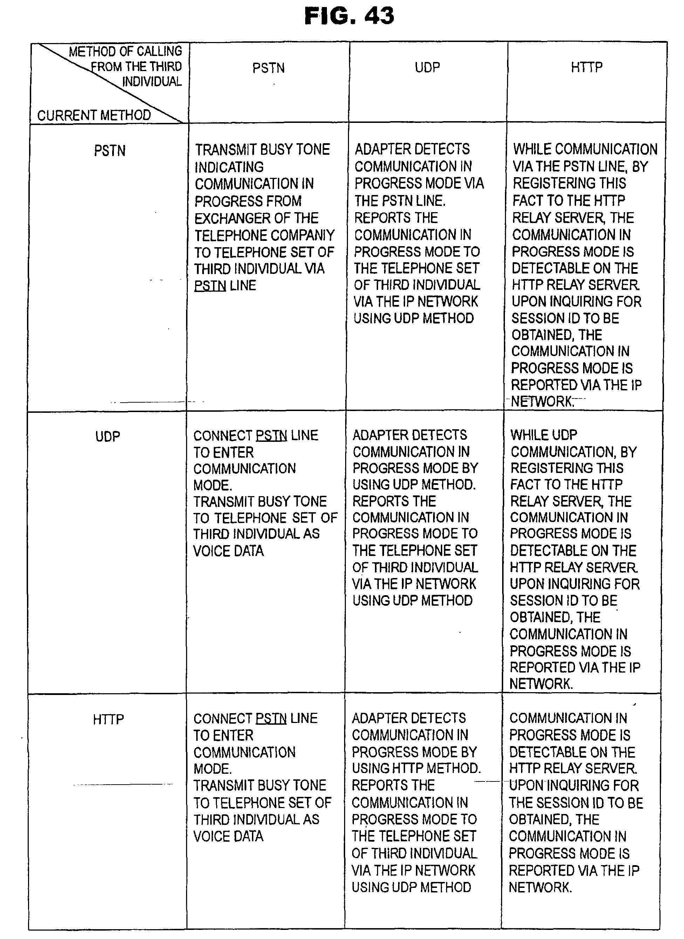

While communication is taking place using the three methods mentioned above, when there is an incoming call from a third individual, there are 9 different patterns as shown in the drawing of Fig. 43.

As illustrated in Fig. 43, a basic process of notifying the communication in progress mode is outputting a busy tone to the telephone set of the third individual. If the incoming call from the third individual is via the PSTN line, then other than transmitting a busy tone directly from the exchanger-of the telephone company, the telephone equipment adapter in which the call is being made to creates the busy tone and transmit it via the PSTN line. However, in the latter case, such a simple notification of communication in progress mode involves the payment of telephone bill to the telephone company since it enters the communication mode. If the telephone call is made using UDP from the third individual, the telephone equipment adapter which the call is being made to reports the communication in progress mode such that the telephone equipment adapter itself of the third individual creates the busy tone which can be heard by the user. As for the telephone call is made using HTTP from the third individual, if detected the communication in progress mode by inquiring to the HTTP relay server, the telephone equipment adapter of the third individual itself creates the busy tone so that it can be heard by the user.

Based on these methods, even if three kinds of telephone communication methods coexist, it is still possible to report communication in progress mode to the telephone call made from the third individual. However, in order to simplify the internal design of the telephone equipment adapter, it is possible to skip reporting of the communication in progress mode. In this case, even if the third individual makes a telephone call, s/he may perceive that the destination does not answer the telephone for a very long time, such that this may be perceived strange as compared to the pre-existing telephone being used.

This fact explains one example of the internet telephone network systems that adapts the PSTN line communication, the RTP communication process, and the HTTP communication process. When a third user makes a telephone call using either one of the three communication methods mentioned above while the communication is taking place using either one of the three methods mentioned above. The IP_network_communication_processing_unit or the PSTN_line_communication_processing_unit transmits a busy tone to the telephone set of the third user and notifies the communication in progress mode.

### Industrial Applicability

Accordingly, in the above embodiments which described one example of the internet telephone network system of the present invention have the following effects.

A telephone call is made via the IP network when communication via the IP network is possible. The telephone call is made via the PSTN line when communication via the IP network is not possible. The communication via the IP network is not possible at the following circumstances. The telephone number cannot be converted to IP address. The destination telephone-equipment is not connected to the IP network. A telephone equipment adapter connected to the destination telephone set is not interchangeable to the telephone equipment adapter of call making side.

In addition to that, the conventional telephone number can be used as it is to make a telephone call via the IP network.

In addition to that, if the incoming communication information from the IP network is received as a digital voice data, it is transmitted to the telephone equipment as an analog voice data.

In addition to that, if the outgoing communication information from the telephone equipment is received as an analog voice data, it is converted to a digital voice data and transmitted to the IP network.

In addition to that, if the destination telephone set can transmit or receive the outgoing or incoming communication information via the IP network, and then the telephone call is made via the IP network. Otherwise, if not possible via the IP network, the telephone call is made via the PSTN line. Connections are automatically switched. Responding to the needs, the user can transmit and receive the outgoing and incoming communication information via the IP network or via the PSTN line.

In addition to that, a telephone number of the telephone set and an IP address mapped to the telephone number are notified to the destination telephone number after finishing the communication via the PSTN line. The user doesn't have to look up for the IP address of the destination. The user doesn't need to set it up in the address translation table.

In addition to that, the telephone number of conventional general PSTN line and the IP address are mapped and memorized. This way, the telephone call is automatically made via the IP network from the next call onwards.

In addition to that, more than two voices other than your own one received from the other telephone sets connected to the telephone equipment adapter of the present invention via the IP network are mixed, and the mixed voices are output. The tele-conference among more than three individuals via the IP network is possible.

In addition to that, the tele-conference identification number is set to the tele-conference. The user requesting to join the tele-conference must indicate this tele-conference identification number. This way, the tele-conference is carried out among the specified telephone sets via the IP network.

In addition to that, the telephone identification number is set to the telephone equipment connected to the telephone equipment adapter. The user requesting to join the tele-conference must indicate this telephone identification number. This way, the tele-conference is carried out among the specified telephone equipment via the IP network.

In addition to that, the password is previously allocated to each user who is going to participate in the tele-conference. The passwords are managed for each tele-conference. The user inputs the password upon participating to the tele-conference. This way, the inputted password is compared and referred to the previously registered passwords. The participation to the tele-conference is therefore verified.

In addition to that, a control information is input from the existing telephone set or a general-purpose personal computer connected to the telephone equipment adapter for carrying out the maintenance operations. The configuration data stored in the configuration_data_storing_unit is changed according to the inputted control information. An extra cost incurred in attaching the I/O data device to the telephone equipment adapter, especially used for the maintenance operation, is deduced. In addition to that, the user utilizes the conventional devices (such as existing telephone set or the general-purpose personal computer) to simply carry out the maintenance operation.

In addition to that, the permission information related to the tele-conference is input from the personal computer connected to the IP network or from the telephone set connected to the telephone equipment adapter, and is registered. Registration changes and deletions are easily carried out.

In addition to that, UDP and RTP are used having an excellent real-time property in the communication process. The communication voice quality is improved.

In addition to that, the firewall that does not allow the use of arbitrary UDP port is set so that the firewall can use a limited and specific UDP port. That specific UDP port number is stored in the telephone equipment adapter. The voice data communication processing beyond the firewall is possible.

In addition to that, in complying with the firewall that does not allow the use of arbitrary UDP port, a usable UDP port is scanned. The unknown usable UDP port is searched. The voice data communication processing is possible after finding the usable UDP port.

In addition to that, most firewall cannot use the UDP port; however, the HTTP port is normally open. The voice data is transmitted as HTTP message. This way, the communication process is implemented via the IP network despite of the firewall.

In addition to that, the voice data is transmitted and received by using TCP when a telephone call is made from the telephone equipment adapter via the IP network.

In addition to that, the voice data is transmitted and received by using HTTP when a telephone call is made from the telephone equipment adapter via the IP network.

In addition to that, the firewall plays a role of the security preventing the illegal access to the outside IP network from the IP network managed and connected to the telephone equipment adapter. The firewall is installed at the IP network boundary. In the case of making a telephone call by the telephone equipment adapter via the IP network, to comply with the firewall, an availability of HTTP port that can transmit and receive data is searched. The HTTP port that can transmit and receive data is specified. This HTTP port is used to carry out communication of the voice data.

In addition to that, the header of the voice data packet for communication is individually compressed. This way, the voice data packet can be made smaller than the standard packet size. This reduces the network traffic. In addition to that, the compressed voice data packet can be decoded. The compressed packet information is received. This also reduces the network traffic.

In addition to that, even if there is a fluctuation in the transmission times of voice data packets for communication, the voice data packets are accumulated until they reach a certain size, and then they are transmitted to the analog regeneration side. The stable communication quality is maintained even if the network traffic condition is unstable. In addition to that, in order to transmit the digital voice data packet to the destination telephone set via the IP network, an outgoing digital voice data packet is created. The outgoing digital voice data packets are accumulated in the transmission buffer unit. The transmission buffer unit can change its buffer size. Before transmitting the accumulated digital voice data packets, the transmission buffer unit executes a process of adding only the necessary data to the compiled packets. This process is carried out by the transmission buffer unit. Reflecting on the network traffic conditions, the optimal digital voice data packet is transmitted. Good quality voice data is effectively transmitted.

In addition to that, when each of voice data packets for communication is transmitted, a packet size is changed small size if the network traffic is small, large size if the network traffic is large. This way, the stable communication quality is maintained, and the network traffic does not receive an influence, even if the network traffic condition is not stable.

In addition to that, the redundant packet is issued when the packet loss of the outgoing voice data occurred. A stable communication quality is maintained even in the network traffic condition where the packet loss is frequent.

In addition to that, when there's too much network traffic to transmit the voice data packet, the voice data packets below a certain the level that does not influence the communication quality is not transmitted. This way, the stable communication quality is maintained.

In addition to that, the network traffic condition is estimated. Timings of receiving the voice data packets are measured. The receiving buffer size is adjusted. The redundant_packet_issuing_unit adjusts the number of replicating packet information. The packet_generation_filtering_unit adjusts a condition for deleting the number of outgoing packet information. At least one of the three adjusting is done. The optimal communication processing is implemented by responding to the updated network traffic. The stable communication quality is maintained.

In addition to that, the timings of receiving voice data packets are measured, and the measured results are accumulated so that it can be referred to as a data indicating network traffic condition at a day cycle or a weekly cycle. The optimal communication processing is controlled based on the averaged network traffic condition. The stable communication quality is maintained.

In addition to that, the telephone equipment adapter can make a telephone call and can execute the communication processing via the HTTP relay server. The firewall can make access to the outside network by using HTTP. For this reason, there is no need to modify the setup of typical firewall to make a telephone call via the IP network. In addition to that, the voice data is temporarily stored in the HTTP relay server, and the telephone equipment adapter connected to other telephone set go and get that voice data. The effective communication processing is implemented. In addition to that, the destination telephone equipment adapter is protected by the firewall. The HTTP polling unit of the HTTP relay server reports to the communication destination telephone equipment adapter that the telephone call is being made. This is done so by the HTTP polling unit of the HTTP relay server that periodically checks the communication situation of the telephone_set_call_information_managing_unit of the destination telephone equipment adapter. The communication mode of the telephone set is being stored in the telephone_set_call_information_managing_unit. At a point of detecting that the telephone call is being made, the destination telephone equipment adapter accesses the HTTP relay server by using HTTP. In addition to that, if the destination telephone equipment adapter is protected by the firewall, in order to report to the destination telephone equipment adapter that the telephone call is being made, the PSTN_signal_processing_unit transmits only the telephone call information temporarily via the PSTN line. Then, the telephone equipment adapters communicate via the HTTP relay server by HTTP access, and exchange the communication information via the HTTP relay server.

In addition to that, the HTTP relay server negotiates the first connection between the telephone equipment adapters. After the first negotiation process, the HTTP_connection_changing_unit in the HTTP relay server changes the HTTP and TCP connection so that the connection between the telephone equipment adapters is direct. The communication data are transmitted and received after the first negotiation process between the telephone equipment adapters. However, the process load is going to be a heavy burden. The communication data are better of transmitted and received directly between the telephone equipment adapters without bypassing the HTTP relay server. The process burden put on the HTTP relay server is lightened. Owing to this fact, even if the communication processes concentrate because many users are making telephone calls at one time, the processes can continue without being stagnant. The communication quality is maintained.

In addition to that, the communication data is transmitted and received directly between the telephone equipment adapters without bypassing the HTTP relay server. For this reason, the process burden put on the HTTP relay server is lightened. Despite of the concentrated communication processes by many users making telephone calls, without being stagnant the process continues. The communication quality is maintained.

In addition to that, as a process of the HTTP relay server, an IP address contained in the IP header of the voice data packet is directly converted to the IP address of the final transmission destination telephone equipment adapter. The TCP header port number contained in the IP header of the voice data packet is likewise directly converted to the port number of the destination telephone equipment adapter. Owing to this, the process burden put on the HTTP relay server is lightened. Despite of the concentrated communication processes by many users making telephone calls, without being stagnant the process continues. The communication quality is maintained.

In addition to that, even though the HTTP relay server tries to carry out the communication process efficiently, if a number of telephone equipment adapters requesting for the communication process has increased accompanied by the increased number of users, since there is a performance limit that a single HTTP relay server possesses, it will fail at some point. Therefore, a plurality of HTTP relay servers is prepared. The HTTP_relay_server_managmg_server for integrating and managing the plurality of HTTP relay servers is prepared. The HTTP_relay_server_managing_server finds the HTTP relay server having a small number of users and specifies the candidate HTTP relay server to be used for the communication process. A favorable communication is maintained for the various users by dispersing the communication processes of various telephone equipment adapters to the plurality of HTTP relay servers.

In addition to that, the name of telephone equipment adapter is used as an identifier of the telephone equipment adapter. The identifiers are seized between the telephone equipment adapters prior to transmitting and receiving the communication data. Because of this, the telephone equipment adapter can be adapted in a network configuration where the IP address is not fixed and is dynamically provided. The case in which the IP address is dynamically allocated is a learning of the IP address from the DHCP server. Another such case is when the IP address is allocated upon dial up connection from the telephone equipment adapter to the internet service provider (ISP). As in those cases when the fixed IP address is not allocated, the negotiation process for connecting from a telephone equipment adapter to its communication destination is effectively implemented.

In addition to that, instead of the network environment using the dedicated line connection to the IP network, the internet telephone can also be used by dial up connection. The dial up connection connects the IP network by dialing to the internet service provider (ISP). In other words, the user no longer needs to make contract for the dedicated line connection configuration to use the internet telephone at home. Using the dial up connection easily uses the internet telephone at home.

In addition to that, instead of the network environment using the dedicated line connection to the IP network, the internet telephone can also be used by dial up connection. The dial up connection connects to the IP network by dialing to the internet service provider (ISP). The terminal adapter used by the personal computer is used as a device to carry out this dial up connection. The modem, etc. is built in the terminal adapter. The modem is for communicating to the PSTN and ISDN. Serial port RS232C is attached to the telephone equipment adapter. This process device is easily implemented. A comparably costly device is entrusted to the terminal adapter side. The actual cost incurred in the telephone equipment adapter is deduced this way.

In addition to that, the telephone equipment adapter keeps the PSTN line connection even after both users put the receivers back upon finishing communication to allow for the exchange of the IP address information.

In addition to that, when the communication is finished and the communication information transmitting side puts the receiver back, a tone signal notifies the disconnection to the destination of transmitting the communication information. The tone signal is generated after a pre-determined time. This way, after finishing the communication and both receivers are put back, the telephone equipment adapter holds on the PSTN connection, and the IP addresses are definitely exchanged.

In addition to that, a sound such as busy tone is generated for notifying the communication completion to the destination of transmitting the communication information. This way, the destination user will definitely know that the communication is finished. Then, the user puts the receiver back.

In addition to that, when a user tries to use the telephone set again while the IP addresses are still in the process of being exchanged, the user hears a busy tone at the receiver. The telephone set cannot be used while the IP addresses are being exchanged.

In addition to that, when a user tries to use the telephone set again while the IP addresses are still in the process of being exchanged, the identification information of the destination input by the user is accepted. After the IP address information exchange process is finished, the accepted destination identification information is connected. The IP address exchange process does not take so much minutes times such that the user trying to make a telephone call does not have to wait to re-use the telephone set. This is convenient for the user.

In addition to that, the identification information input is determined as complete after a certain time period of no input. This way, the user can omit inputting of information that indicates input completion of the identification information. This is convenient for the user.

In addition to that, the identification information input is determined as complete by inputting a specific information. This way, the input completion is definitely determined. The identification information is accurately input.

In addition to that, the identification information input is determined as complete by comparing the size of specified identification information and the size of identification information being input. The communication enterprise information specifies the size of identification information. This way, the user can input the identification information using the conventional method. The identification information input completion is definite. This improves on the convenience.

In addition to that, the address translation unit carries out the address translation processing after the identification information input is fully complete. This way, the IP address information is accurate. The reliability of the internet telephone network system is increased.

In addition to that, the address translation unit narrows down the candidate identification information every time 1 word of the identification information is entered. This way, the identification information is converted to IP address at a speed.

In addition to that, the address translation unit finishes the process when the candidate identification information has narrow down to the last 1. This way, the identification information is converted to IP address at a speed.

In addition to that, if the number of word information comprising the identification information inputted exceeds a pre-determined number, the address translation unit converts that word information to IP address information. This way, without having to wait for the whole input of the identification information, the information is translated to IP address such that process can be carried out at a speed.

In addition to that, the learning process by the IP_address_learning_unit is executed at both telephone sets of the call making side and receiving side. This way, the identification information and IP address are automatically learned. The internet telephone network system highly convenient is supplied to the users.

In addition to that, the learning process by the IP_address_learning_unit may not executed when receiving a telephone call. This way, when a salesman makes a telephone call to the customers, the identification information and ID address of the call making side is not registered. This prevents from unnecessary use of memory area of the address translation table.

In addition to that, when the telephone call is being made by the telephone making side, the telephone making side can cease the learning process in the IP_address_learning_unit in the destination telephone equipment adapter. Since the telephone making side can conveniently cease the learning process of the destination, such that the internet telephone network system convenient for the user is supplied.

In addition to that, the user can erase the information registered in the address translation table. This way, the memory area of the address translation table can effectively be used.

In addition to that, the user is notified that the telephone equipment adapter is not operating normally when the control information is being corrected due to an error of some kind. The user that has received this notification can immediately correct the control information. This way, the internet telephone network system convenient for the users is supplied.

In addition to that, the user is notified that the communication is unable due to failure in the lines. This way, the user will immediately know that the communication is not possible.

In addition to that, the user is notified when the telephone set changes from the unusable mode to the usable mode. This way, the user will immediately know that the telephone set is in the usable mode. This way, the internet telephone network system convenient for the user is supplied.

In addition to that, when a third individual requests for connection during the communication which is taking place using one of the following methods, namely; the PSTN line communication, the RTP communication processing, and the HTTP communication processing; then the third individual is notified of the communication in progress mode. This way, the internet telephone network system convenient for the users is supplied.

In addition to that, the relay server attaches a session information to the communication, for example, the session ID. The session information is included in the packet information of the outgoing communication information. This way, the relay server can use the session information inside the packet information to manage the communication contents.

In addition to that, the relay server manages the communication contents using the session information. This way, the relay server can carry out accounting matters based on the communication contents being managed there. The internet telephone network system has many useful aspects.

In addition to that, the telephone equipment adapter uses at least one of the methods from GET, PUT, and POST for HTTP accessing to the relay server. The relay server is assumed as the Web server. This way, the relay server is accessed.

In addition to that, the relay server includes the communication information in the reply message of the request using the methods. This way, the telephone equipment adapter can receive the communication information from the relay server. The relay server is assumed as the Web server. The relay server is accessed.

In addition to that, a method of receiving the communication information having a larger size than the actual communication information is issued, when receiving the communication information from the telephone equipment adapter by accessing to the relay server. This way, every time the communication information is generated when the communication is taking place, the communication information can be received repeatedly.

In addition to that, the connection between the telephone equipment adapter and relay server is maintained, even after transmitting a message for replying a communication information and receiving the replied message are finished. This way, the time taken in connecting the telephone equipment adapter and the relay server is eliminated. The real-time communication information transmission and reception is possible.

In addition to that, the connection between the telephone equipment adapter and relay server may sometimes be cut-off. In such cases, the connection is re-attempted. So the user can receive the communication information from the relay server without being aware of the disconnection.

In addition to that, if there is no response from the relay server after a pre-determined time, then the connection is cut-off and then re-connected. This way, the user without having to be aware of the condition of the relay server can receive communication information from the relay server.

In addition to that, the identification information is notified to the telephone_set_calling_information_managing_unit connected the telephone equipment adapter. This way, the telephone_set_calling_information_managing_unit can specify a certain telephone set among from the plurality of telephone sets under its management.

In addition to that, the telephone equipment adapter notifies the identification information to the telephone set having a number display function when communicating via the PSTN line. This way, the telephone set having the number display function can confirm the identification number of the communication destination.

In addition to that, the telephone equipment adapter notifies the identification information to the telephone set having a number display function when communicating via the IP network. The identification number of the communication destination is confirmed via the IP network.

In addition to that, non-notification information is included in the identification information. The non-notification information indicates non-display of the number. When the telephone equipment adapter recognizes the non-notification information in the identification information, the identification information is not notified to the communication destination. This is convenient for the user.

The network system is described in the above embodiments. Descriptions regarding the network accessing method and the telephone set are also included. Various units mentioned in the above descriptions may be implemented both in the hardware and software, as well as combination of the two. To implement this on the software, a program stored in the central processing unit of the computer executes functions of various units. The program is stored in the storing media such as hard disk or non-volatile memory, and is executed by reading it from the central processing unit of the computer.

## Claims

1. A telephone equipment adapter inputting a message information from the telephone equipment, selecting a route from the IP (internet protocol) network and the PSTN (Public Switched Telephone Network) line for communicating an analog data, and outputting the message information to the route selected,
wherein the telephone equipment adapter keeps the connection to the PSTN line after finishing and disconnecting communication between the message information transmitting side and the message information receiving destination, and transmits to the message information receiving destination via the PSTN line an address information corresponding to an identification information of the telephone equipment of message information transmitting side.

2. A telephone equipment adapter inputting a message information from the telephone equipment, selecting a route from the IP (internet protocol) network and the PSTN (Public Switched Telephone Network) line for communicating an analog data, and outputting the message information to the route selected,
wherein the telephone equipment adapter keeps the connection to the PSTN line after finishing and disconnecting communication between the message information transmitting side and the message information receiving destination, and receives from the message information receiving destination via the PSTN line an address information corresponding to an identification information of the telephone equipment of message information transmitting side.

3. A telephone equipment adapter inputting a message information from the telephone equipment, selecting a route from the IP (internet protocol) network and the PSTN (public switched telephone network) line for communicating an analog data, and outputting the message information to the route selected,
wherein the message information is a packet information,
wherein the telephone equipment adapter includes:
an UDP_communication_processing_unit for performing an User Datagram Protocol (UDP) communication process to the packet information, and
an HTTP_communication_processing_unit for performing an Hyper Text Transfer Protocol (HTTP) communication process to the packet information,
wherein the telephone equipment adapter executes communication process by using the HTTP_communication_processing_unit if unable by the UDP_communication_processing_unit.

4. A telephone equipment adapter inputting a message information from the telephone equipment, selecting a route from the IP (internet protocol) network and the PSTN (Public Switched Telephone Network) line for communicating an analog data, and outputting the message information to the route selected, comprising
a transmission buffer unit having a transmission buffer for inputting a digital voice data which is a digitalized message information, and for temporarily storing the digital voice data input, extracting the digital voice data from the transmission buffer, generating the packet information which includes a header unit for storing an address information of the digital voice data receiving destination, and includes a data unit for storing the digital voice data,
a voice_data_packet_encoding_unit for inputting the packet information from the transmission buffer unit, and compressing at least one of an information stored in the data unit of the packet information and an information stored in the header unit of the pakket information,
a voice_data_packet_decoding_unit for receiving the packet information including the compressed information transmitted by the voice_data_packet_encoding_unit via the IP network, decoding the compressed information of the packet information, and extracting and analyzing the header unit of the decoded packet information,
a receiving buffer unit having a receiving buffer for inputting the packet information decoded by the voice_data_packet_decoding_unit and for temporarily storing the decoded packet information input, and outputting the decoded packet information at a continuous timing from the receiving buffer,
wherein the receiving buffer has a pre-determined buffer size and the pre-determined buffer size is changeable.

5. The telephone equipment adapter of claim 4 further comprising a network_traffic_monitoring_unit for monitoring a traffic condition of the packet information received by the voice_data_packet_decoding_unit, and instructing the change in the receiving buffer size to the receiving buffer unit based on the monitored result.

6. The telephone equipment adapter of claim 5 further comprising a redundant_packet_issuing_unit for replicating the packet information generated by the transmission buffer unit,
wherein the network_traffic_monitoring_unit instructs to the redundant_packet_issuing_unit for the number of replicating packet information based on the monitored result.

7. The telephone equipment adapter of claim 5 further comprising a packet_generation_filtering_unit for deleting the packet information,
wherein the network_traffic_monitoring_unit instructs to the packet_generation_filtering_unit regarding the condition for deleting the packet information based on the monitored result.

8. The telephone equipment adapter of claim 5 further comprising a network_traffic_statistical_data_managing_unit for calculating a statistics of the traffic condition by obtaining the monitored result monitored at the network_traffic_monitoring_unit, and for notifying a statistical result to the network_traffic_monitoring_unit.

9. A relay server comprising a telephone_set_calling_information_managing_unit, wherein the relay server manages a telephone equipment adapter for inputting a message information, selecting a route from the IP (internet protocol) network and the PSTN (Public Switched Telephone Network) line, and outputting the message information to the route selected, is prepared on the IP network, receives the message information transmitted from a telephone equipment adapter to an another telephone equipment adapter transmitted in accordance to a pre-determined communication protocol access in place of the another telephone equipment adapter, stores the message information received, and reads the message information stored by using the same access as the pre-determined communication protocol access at the telephone equipment adapter,
wherein the telephone_set_calling_information_managing_unit manages the condition of telephone equipment adapters managed by the relay server, receives an inquiry information which inquires the condition of the another telephone equipment adapter from the telephone equipment adapter, confirms the condition of the another telephone equipment adapter based on the inquiry information, and notifies the confirmed result to the telephone equipment adapter.

10. An internet telephone network system using the IP (internet protocol) network for communicating a digital data and the PSTN (public switched telephone network) line for communicating an analog data, comprising
a telephone equipment adapter for inputting a message information, selecting a route from the IP network and the PSTN line, and outputting the message information to the route selected,
a relay server prepared on the IP network, for managing telephone equipment adapters, for receiving the message information transmitted from a telephone equipment adapter to an another telephone equipment adapter transmitted in accordance to an Hyper Text Transfer Protocol (HTTP) communication protocol access in place of the another telephone equipment adapter, for storing the message information received, and for reading the message information stored by using the same HTTP access as the HTTP communication protocol access at the telephone equipment adapter, for managing the condition of telephone equipment adapters managed by the relay server, for receiving an inquiry information inquiring the condition of the another telephone equipment adapter from the telephone equipment adapter, for confirming the condition of the another telephone equipment adapter based on the inquiry information, and for notifying the confirmed result to the telephone equipment adapter,
wherein the message information received at the relay server is a packet information having a header unit for storing an address information of the message information receiving side, and a data unit for storing the message information,
wherein the relay server includes
an HTTP_communication_processing_unit for performing an HTTP communication process to the packet information received,
wherein the telephone equipment adapter managed by the relay server includes an HTTP_telephone_call_unit for transmitting the packet information to the relay server by using HTTP access when the destination telephone equipment adapter of the packet information receiving side is protected by a firewall.

11. The internet telephone network system of claim 10, wherein the telephone equipment adapter managed by the relay server includes an HTTP polling unit for transmitting to the relay server an inquiry information managed by the telephone_set_calling_information_managing_unit of the relay server to inquire condition of the destination telephone equipment adapter where the packet information is transmitted to by using the HTTP access polling method.

12. The internet telephone network system of claim 10, wherein the telephone equipment adapter managed by the relay server includes a telephone_call_communication_unit for notifying a fact of transmitting the packet information to the destination telephone equipment adapter where the packet information is transmitted to, before transmitting the packet information via the IP network by using at least one of an electronic mail and an instant message.

13. The internet telephone network system of claim 10, wherein the telephone equipment adapter managed by the relay server notifies a fact of transmitting the packet information to the destination telephone equipment adapter where the packet information is transmitted to, before transmitting the packet information via the PSTN line.

14. The relay server of claim 9, wherein a message information received at the relay server is a packet information having a header unit for storing an address information of the message information receiving destination, and a data unit for storing the message information,
wherein the relay server comprises an HTTP_connection_changing_unit for receiving the pakket information transmitted from a telephone equipment adapter to an another telephone equipment adapter, for performing connection negotiation of connecting the telephone equipment adapter and the another telephone equipment adapter, and controlling for the transmission and reception of the packet information by using Hyper Text Transfer Protocol (HTTP) between the telephone equipment adapter and the another telephone equipment adapter after the connection is established.

15. The relay server of claim 9, wherein a message information received at the relay server is a packet information having a header unit for storing an address information of the message information receiving destination, and a data unit for storing the message information,
wherein the header unit of the packet information includes a port number and an address information of the transmission destination of the packet information,
wherein the relay server includes a TCP/IP_packet_header_alteration_unit for receiving the packet information transmitted from a telephone equipment adapter to an another telephone equipment adapter, for performing connection negotiation process of connecting the telephone equipment adapter and the another telephone equipment adapter, and for converting a port number and an address information of the header unit of the packet information of the transmission destination to a port number and an address information of the telephone equipment adapter receiving the packet information last.

16. An internet telephone network system using the IP (internet protocol) network for communicating a digital data and the PSTN (public switched telephone network) line for communicating an analog data, comprising
a telephone equipment adapter for inputting a message information, selecting a route from the IP network and the PSTN line, and outputting the message information to the route selected,
a relay server prepared on the IP network, for managing telephone equipment adapters, for receiving the message information transmitted from a telephone equipment adapter to an another telephone equipment adapter transmitted in accordance to a pre-determined communication protocol access in place of the another telephone equipment adapter, for storing the message information received, and for reading the message information stored by using the same access as the pre-determined communication protocol access at the telephone equipment adapter, for managing the condition of telephone equipment adapters managed by the relay server, for receiving an inquiry information inquiring the condition of the another telephone equipment adapter from the telephone equipment adapter, for confirming the condition of the another telephone equipment adapter based on the inquiry information, and for notifying the confirmed result to the telephone equipment adapter,
wherein the message information received at the relay server is a packet information having a header unit for storing an address information of the message information receiving side, and a data unit for storing the message information,
wherein the relay server includes
an HTTP_communication_processing_unit for performing an Hyper Text Transfer Protocol (HTTP) communication process to the packet information received,
wherein the internet telephone network system further connects at least two relay servers, the internet telephone network system further comprising an HTTP_relay_server_managing_server including:
an HTTP_relay_server_load_monitoring_unit for monitoring a process load condition of the relay server connected; and
an HTTP_relay_server_assigning_unit for selecting a relay server responding to the monitored load condition by the HTTP_relay_server_load_monitoring_unit.

17. A telephone equipment adapter inputting a message information from the telephone equipment, selecting a route from the IP (internet protocol) network and the PSTN (Public Switched Telephone Network) line for communicating an analog data, and outputting the message information to the route selected,
wherein the telephone equipment adapter is connected to a telephone equipment outputting at least a message information, and inputs the message information outputted from the telephone equipment, keeps the connection to the PSTN line after either one of the message information transmitting side and the message information receiving side finishes the communication, and while maintaining the PSTN line connection, sends an address information of the telephone equipment of the message information transmitting side via the PSTN line after waiting for an amount of time when the communication is likely to be finished.

18. The telephone equipment adapter of claim 17, wherein the telephone equipment adapter sends at least a busy tone signal from a communication finishing side to a communication continuing side, in order to make the communication continuing side to finish the communication, when either one of the message information transmitting side and the message information receiving destination finishes the communication.

19. The telephone equipment adapter of claim 17, when at least one of the message information transmitting side and the message information receiving destination attempts to transmit a message information to a telephone equipment while an address information corresponding to an identification information of the telephone equipment is still being transmitted via the PSTN line, wherein the telephone equipment adapter sends at least a busy tone signal to the telephone equipment attempted to transmit the message information.

20. The telephone equipment adapter of claim 17, wherein the telephone equipment adapter prioritizes a transmission process of an address information corresponding to an identification information of the telephone equipment than a message information transmission process of the telephone equipment, when at least one of the address information transmitting side and the address information receiving destination attempts to transmit the message information to the telephone equipment while the address information corresponding to the identification information of the telephone equipment is still being transmitted via the PSTN line.

21. A telephone equipment adapter connected to telephone equipment which outputs a message information including an identification information that identifies the transmission destination, inputting the message information outputted from the telephone equipment, selecting a route from the IP (internet protocol) network and the PSTN (public switched telephone network) line, and outputting the message information to the route selected,
wherein the identification information comprises at least a communication enterprise information specifying the communication enterprises, and the communication enterprise information specifies a size of the identification information,
wherein the telephone equipment adapter determines the size of identification information based on the communication enterprise information of the identification information, and decides that the identification information input is finished by comparing a size of the determined identification information and a size of the inputted identification information.

22. The telephone equipment adapter of claim 21, wherein the telephone equipment outputs the message information including an identification information that identifies a destination of transmitting the message information,
wherein the telephone equipment adapter comprises
a PSTN_line_signal_processing_unit for inputting the identification information,
an address translation table for storing an address information that identifies the destination of transmitting the message information and the identification information by mapping, and
an address translation unit for translating the identification information to the address information by using the address translation table,
wherein the PSTN_line_signal_processing_unit hands over the identification information that finished the input to the address translation unit after decided that the identification information input is finished,
wherein the address translation unit translates the identification information handed over by the PSTN_line_signal_processing_unit to the address information.

23. A telephone equipment adapter inputting a message information from the telephone equipment, selecting a route from the IP (internet protocol) network and the PSTN (public switched telephone network) line for communicating an analog data, and outputting the message information to the route selected, comprising
a PSTN_line_signal_processing_unit for inputting a message information including an identification information comprised of more than one word information that identifies the transmission destination, from a telephone equipment, and for outputting the more than one word information inputted,
an IP_network_communication_processing_unit for transmitting the message information to the IP network by specifying an address information that identifies a destination telephone equipment of the message information receiving side,
an address translation table for storing the address information and the identification information by mapping them,
an address translation unit for comparing the more than one word information output by the PSTN_line_signal_processing_unit and an identification information stored in the address translation table, and regarding matching address information as an address information candidate when the more than one word information output matches in part to the identification information stored in the address translation table, adapting the last one of the address information candidate as an address information when the word information output by the PSTN_line_signal_processing_unit exceeds a pre-determined number as the address information candidates approach the last one, and translating the identification information to the address information based on the address translation table,
a line_connection_switching_unit for selecting either one of the IP_network_communication_processing_unit and the PSTN line, and outputting the message information to the one selected.

24. A telephone equipment adapter inputting a message information from the telephone equipment, selecting a route from the IP (internet protocol) network and the PSTN (public switched telephone network) line for communicating an analog data, and outputting the message information to the route selected,
wherein the telephone equipment adapter includes:
a PSTN_line_signal_processing_unit for inputting the message information output from the telephone equipment,
an IP_network_communication_processing_unit for performing at least any one of transmitting and receiving of the message information via the IP network and for inputting a control information that controls the telephone equipment adapter as the message information via the IP network, and
a control_information_storing_unit for storing the control information that controls the telephone equipment adapter,
wherein either one of the PSTN_line_signal_processing_unit and the IP_network_communication_processing_unit alarms any one of the IP network, the telephone equipment, and the PSTN line when an error occurs as a result of carrying out control of the telephone equipment adapter according to the control information stored in the control_information_storing_unit.

25. A telephone equipment adapter inputting a message information from the telephone equipment, selecting a route from the IP (internet protocol) network and the PSTN (public switched telephone network) line for communicating an analog data, and outputting the message information to the route selected,
wherein the telephone equipment adapter includes:
a PSTN_line_signal_processing_unit for inputting the message information output from the telephone equipment,
an IP_network_communication_processing_unit for performing at least any one of transmitting and receiving of the message information via the IP network and for inputting a control information that controls the telephone equipment adapter as the message information via the IP network, and
a control_information_storing_unit for storing the control information that controls the telephone equipment adapter,
wherein either one of the PSTN_line_signal_processing_unit and the IP_network_communication_processing_unit detects that communication is unable due to a failure occurring at either one of the IP network and the PSTN line, and alarms any one of the IP network, the telephone equipment, and the PSTN line.

26. The telephone equipment adapter of claim 24, wherein the either one of the PSTN_line_signal_processing_unit and the IP_network_communication_processing_unit notifies of restoration to any one of the IP network, the telephone equipment, and the PSTN line after the failure is restored.

27. A telephone equipment adapter inputting a message information from the telephone equipment, selecting a route from the IP (internet protocol) network and the PSTN (public switched telephone network) line for communicating an analog data, and outputting the message information to the route selected,
wherein the telephone equipment adapter includes:
a PSTN_line_signal_processing_unit for inputting the message information output from the telephone equipment,
an IP_network_communication_processing_unit for performing at least any one of transmitting and receiving of the message information as a packet information via the IP network, and for performing an User Datagram Protocol (UDP) communication process to the packet information and an Hyper Text Transfer Protocol (HTTP) communication process to the packet information,
wherein either one of the PSTN_line_signal_processing_unit and the IP_network_communication_processing_unit notifies of the process in progress mode to an another telephone equipment requesting for connection to a telephone equipment connected to a telephone equipment adapter performing any one of the processes of a PSTN line communication process, a UDP communication process, and an HTTP communication process.

28. The relay server of claim 9, wherein a message information received at the relay server is a packet information having a header unit for storing an address information of the message information receiving destination, and a data unit for storing the message information,
wherein the relay server manages communication between a telephone equipment adapter and an another telephone equipment adapter by using a communication connection identification information, and stores the communication connection identification information in the packet information, and outputs the packet information to the IP network.

29. The relay server of claim 28, wherein the relay server manages and stores at least either one of a communication time and an amount of communication packet as a log information by mapping to the communication connection identification information.

30. An internet telephone network system using the IP (internet protocol) network for communicating a digital data and the PSTN (public switched telephone network) line for communicating an analog data, comprising
a telephone equipment adapter for inputting a message information, selecting a route from the IP network and the PSTN line, and outputting the message information to the route selected,
a relay server prepared on the IP network, for managing telephone equipment adapters, for receiving the message information transmitted from a telephone equipment adapter to an another telephone equipment adapter transmitted in accordance to an Hyper Text Transfer Protocol (HTTP) communication protocol access in place of the another telephone equipment adapter, for storing the message information received, and for reading the message information stored by using the same HTTP access as the HTTP communication protocol access at the telephone equipment adapter, for managing the condition of telephone equipment adapters managed by the relay server, for receiving an inquiry information inquiring the condition of the another telephone equipment adapter from the telephone equipment adapter, for confirming the condition of the another telephone equipment adapter based on the inquiry information, and for notifying the confirmed result to the telephone equipment adapter,
wherein the message information received at the relay server is a packet information having a header unit for storing an address information of the message information receiving side, and a data unit for storing the message information,
wherein the relay server includes
an HTTP_communication_processing_unit for performing an HTTP communication process to the packet information received,
wherein the telephone equipment adapter managed by the relay server transmits at least one of the GET, POST and PUT method messages to the relay server by the HTTP access.

31. The internet telephone network system of claim 30, wherein the HTTP_communication_processing_unit of the relay server stores the message information in a reply message to the HTTP access by the telephone equipment adapter, and transmits the reply message to the telephone equipment adapter,
wherein the telephone equipment adapter managed by the relay server receives the replay message transmitted from the relay server, and extracts the message information stored in the reply message received.

32. The internet telephone network system of claim 31, wherein the message information has a size one message information, wherein the telephone equipment adapter managed by the relay server stores a GET method message in the packet information used to obtain a size two message information that is larger than the size one message information, for obtaining the size one message information from the relay server, and transmits the GET message to the relay server by using the HTTP access, and receives the reply message transmitted from the relay server by using the HTTP access.

33. The internet telephone network system of claim 32, wherein the telephone equipment adapter managed by the relay server maintains connection to the relay server and receives more than one reply messages until a total size of the size one message information which is stored in the reply message transmitted from the relay server exceeds the size two.

34. The internet telephone network system of claim 30, wherein the telephone equipment adapter managed by the relay server re-attempts connection if cut off connection at either one of the timing of during and immediately after the communication to the HTTP_communication_processing_unit of the relay server, continues the connection, and performs the communication.

35. The internet telephone network system of claim 30, wherein the telephone equipment adapter managed by the relay server discontinues the connection to the relay server if there is no reply coming from the relay server after a pre-determined amount of time at either one of the timings of during the communication and immediately after the communication to the HTTP_communication_processing_unit of the relay server, re-attempt the connection and continues the communication.

36. The telephone equipment adapter of claim 1, wherein the telephone equipment adapter is connected to a telephone equipment managing device as either one of PBX and button telephone for managing a plurality of telephone equipment connected to the plurality of telephone equipment,
wherein the telephone equipment adapter receives an identification information of the destination telephone equipment of the message information receiving side from the message information transmitting side, and transmits the identification information received to the telephone equipment managing device.

37. A telephone equipment adapter inputting a message information from the telephone equipment, selecting a route from the IP (internet protocol) network and the PSTN (public switched telephone network) line for communicating an analog data, and outputting the message information to the route selected,
wherein the telephone equipment outputs the message information to the destination telephone equipment adapter connected to the destination telephone equipment which transmits the message information having a number display function for displaying an identification information of the message information transmitting side,
wherein the telephone equipment of the message information transmitting side outputs the identification information including an non-notification information which instructs not to notify the identification number of the telephone equipment of the message information transmitting side to the destination telephone equipment of the message information receiving side,
wherein the telephone equipment adapter connected to the telephone equipment of the message information transmitting side does not transmit the identification information to the destination telephone equipment adapter of the message information receiving side when the non-notification information is included in the identification information.
